(19) Europäisches Patentamt / European Patent Office / Office européen des brevets

(11) **EP 3 310 201 B1**

(12) **EUROPEAN PATENT SPECIFICATION**

(45) Date of publication and mention
of the grant of the patent:
**17.09.2025  Bulletin 2025/38**

(21) Application number: **16733784.9**

(22) Date of filing: **13.06.2016**

(51) International Patent Classification (IPC):
*A43B 5/02* *(2006.01)*          *A43B 13/18* *(2006.01)*
*A43B 13/22* *(2006.01)*        *A43B 13/26* *(2006.01)*
*A43C 15/16* *(2006.01)*        *A43D 1/02* *(2006.01)*
*A43B 23/02* *(2006.01)*        *A43C 13/04* *(2006.01)*

(52) Cooperative Patent Classification (CPC):
**A43B 5/02; A43B 5/025; A43B 13/181;
A43B 13/223; A43B 13/26; A43B 23/0235;
A43B 23/024; A43B 23/0245; A43C 13/04;
A43C 15/162; A43D 1/02; B33Y 80/00**

(86) International application number:
**PCT/US2016/037211**

(87) International publication number:
**WO 2016/205122 (22.12.2016 Gazette 2016/51)**

(54) **FOOTWEAR WITH TRACTION ELEMENTS**

SCHUHWERK MIT TRAKTIONSELEMENTEN

CHAUSSURE COMPRENANT DES ÉLÉMENTS DE TRACTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2015  US 201514741094**

(43) Date of publication of application:
**25.04.2018   Bulletin 2018/17**

(73) Proprietor: **New Balance Athletics, Inc.**
**Boston, MA 02135 (US)**

(72) Inventors:
• **ASHCROFT, Robert Lee**
**Chorlton, Manchester M21 7GE (GB)**
• **BLACKWELL, Lee**
**Wettenhall CW74HH (GB)**
• **BULLOCK, Matt**
**Heswall, Wirral CH60 2SF (GB)**
• **GOTHIE, Bryan D.**
**Sudbury, MA 01776 (US)**
• **ROBINSON, Timothy K.**
**Arlington, MA 02474 (US)**
• **SHEPARD, Stephen B.**
**Nashua, NH 03060 (US)**
• **WHITE, Michael N.**
**Lawrence, MA 01840 (US)**
• **WHITEMAN, John R.**
**Belmont, MA 02478 (US)**

(74) Representative: **Mathys & Squire**
**The Shard**
**32 London Bridge Street**
**London SE1 9SG (GB)**

(56) References cited:
WO-A1-99/37175         US-A- 4 393 604
US-A1- 2011 047 834    US-A1- 2011 247 243
US-A1- 2013 326 908    US-A1- 2015 096 195

**Description**

**FIELD**

The present invention relates generally to the field of footwear, and more particularly to sole plates for an article of footwear and articles of footwear having sole plates with traction elements thereon.

**BACKGROUND**

Many aspects of the performance and comfort of articles of footwear are dependent upon various performance and physical characteristics of the wearer of the footwear. For example, stride length, stride rate, footstrike location, pronation/supination, running style, and running speed can be affected by the elements of the footwear being worn. In addition, physical characteristics of the athlete, such as height, weight, shoe size, foot shape, leg shape and size, etc. can affect the performance of the athlete and the article of footwear being worn.

While each individual athlete has a unique set of performance and physical characteristics and a unique set of aesthetic and performance requirements, the athlete has generally been limited when selecting footwear to basic choices such as brand, style, size, width, and (for running spikes and cleated footwear) spike size and shape, with fully customized footwear addressing the specific performance and aesthetic requirements of an individual unavailable under traditional manufacturing techniques and product distribution channels.

US2013/326908 A1 discloses a golf shoe outsole. US4393604 A discloses a sole plate provided with different kinds of traction elements located in determined areas of the sole plate.

**SUMMARY**

The present invention is defined in the appended independent claims. Optional features are set out in the dependent claims. Examples described herein are directed towards customized footwear, apparel, and sporting equipment, and elements thereof, and related systems and methods for designing and manufacturing same.

In one example described herein, there is a sole plate for an article of footwear. The sole plate includes a lower surface adapted for ground contact, with the lower surface including a first sole portion having a plurality of first traction elements, the first traction elements having a distal end and a side wall including a plurality of extensions extending from a central core, and a second sole portion having a plurality of second traction elements, the second traction elements having at least one geometrical feature differing in at least one aspect from a corresponding geometrical feature of the first traction elements. The side wall of the first traction elements comprises, e.g. may consist essentially of, three tapered extensions extending from the central core. An orientation of at least one first traction element in a first region of the first sole portion may be different from an orientation of at least one first traction element in a second region of the first sole portion. The second traction elements may have a distal end and a side wall including, or consisting essentially of, a substantially hexagonal cross-section. Alternatively, the second traction elements may have a distal end and a side wall having at least one of a substantially circular cross-section, a substantially oval cross-section, and a substantially polygonal cross-section, the polygonal cross-section comprising at least one of a triangular, a square, a rectangular, a pentagonal, or a hexagonal polygon.

The second sole portion includes three second traction elements arranged in a substantially triangular pattern proximate a first metatarsal region of a foot of a wearer of the article of footwear. The three second traction elements arranged in the substantially triangular pattern may have substantially the same height, or may differ in height. The second sole portion may further include a fourth second traction element positioned in a medial forefoot region of the foot of the wearer of the article of footwear.

The second sole portion extends from a medial side edge of the sole plate to a central region of the sole plate and the first sole portion can extend from a lateral side edge of the sole plate to a central region of the sole plate proximate at least one of a midfoot region of the sole plate, a forefoot region of the sole plate, and a metatarsal region of a foot of a wearer of the article of footwear. The second sole portion extends from the medial side edge to the central region over a maximum of between approximately 50% to approximately 80% of the width of the sole plate. The second sole portion includes a first edge proximate an edge of the sole plate, a second edge extending from the edge of the sole plate to a central region of the sole plate, and a third edge extending from the edge of the sole plate to the central region of the sole plate, wherein the second edge and the third edge converge and meet in the central region of the sole plate.

The first sole portion and second sole portion may be separated by one or more flex grooves. The first sole portion may include, or consist essentially of, a first material and the second sole portion includes, or consists essentially of, a second material different from the first material. The first material and/or second materials may include, or consist essentially of, nylon and/or thermoplastic polyurethane (TPU). The first sole portion may be bonded to, co-molded with, mechanically attached to, or otherwise removably or permanently attached to the second sole portion. One, some, or all of the first and/or second traction elements can include a metal portion and, for example, a metal distal end portion. The metal can include any appropriate metal such as, but not limited to, aluminum or steel. At least one or more of the first and second traction elements may have a metal distal end and at least one or more of the first and second traction elements have a TPU distal end. Each of the first and the second traction elements may have a TPU distal end.

At least one of the first sole portion and the second sole portion may further include at least one of a tread pattern and a plurality of third traction elements. The third traction elements may, for example, include raised extensions connected by a plurality of interconnected elongate elements. At least one of the first sole portion and the second sole portion may further include a structural support element, with the structural support element, for example, including a plurality of interconnected elongate elements.

Another example described herein includes an article of footwear including an upper and a sole, the sole including a sole plate comprising a lower surface adapted for ground contact. The lower surface of the sole plate can include a first sole portion having a plurality of first traction elements, the first traction elements having a distal end and a side wall including a plurality of extensions extending from a central core, and a second sole portion having a plurality of second traction elements, the second traction elements having at least one geometrical feature differing in at least one aspect from a corresponding geometrical feature of the first traction elements.

The upper may include a first upper portion having a first surface texture and a second upper portion having a second surface texture. The first surface texture may, for example, include a plurality of substantially evenly distributed indentations (e.g., oval, circular, or polygonal indentations) while the second surface texture may include, for example, a plurality of substantially parallel ridges. The ridges may be oriented at an angle of between about 30° to about 60° to the longitudinal axis of the article of footwear and, for example, at an angle of about 45° to a longitudinal axis of the article of footwear. The second surface texture can extend over any appropriate region of the shoe upper and, for example, can extend over a medial forefoot portion of the upper.

At least one of the first upper portion and the second upper portion can include, or consist essentially of, a multi-layered material. The multi-layered material may, for example, include a first material layer proximate an interior of the article of footwear, a second material layer proximate an exterior of the article of footwear, and a third material layer located between the first material layer and the second material layer, the third material layer including, or consisting essentially of, a foamed material. The third material layer can include a layer of material having a plurality of substantially evenly distributed holes extending therethrough, the holes having at least one of an oval, a circular, or a polygonal cross-section. At least a portion of the upper proximate a midfoot region of the article of footwear may further include at least one support structure on an exterior surface thereof, the support structure consisting of, a fourth layer of material. The multi-layer material may extend over at least a portion of a medial midfoot region, a forefoot region, and a lateral midfoot region of the article of footwear.

Another example described herein includes an article of footwear including an upper and a sole, the sole including a sole plate having a lower surface adapted for ground contact, the lower surface including a first sole portion having a plurality of first traction elements, the first traction elements having a distal end and a side wall having a plurality of extensions extending from a central core. The lower surface further includes a second sole portion having a plurality of second traction elements, the second traction elements having a distal end and a side wall having a substantially circular or hexagonal cross-section, wherein (i) the second sole portion extends over a medial portion of the lower surface of the sole plate proximate at least one of a midfoot region and a forefoot region of the sole plate, (ii) the second sole portion includes three second traction elements arranged in a substantially triangular pattern proximate a first metatarsal region of a foot of a wearer of the article of footwear and a fourth second traction element positioned in a medial forefoot region of the foot of the wearer of the article of footwear, and (iii) the first sole portion includes, or consists essentially of, a first material and the second sole portion includes, or consists essentially of, a second material different from the first material.

Another example described herein includes an article of footwear including an upper and a sole, the sole including a sole plate having a lower surface adapted for ground contact. The lower surface includes a first sole portion having a plurality of first traction elements, the first traction elements having a distal end and a side wall having a plurality of extensions extending from a central core. The lower surface further includes a second sole portion having a plurality of second traction elements, the second traction elements having a distal end and a side wall having a plurality of extensions extending from a central core, wherein (i) the second sole portion extends over a medial portion of the lower surface of the sole plate proximate at least one of a midfoot region and a forefoot region of the sole plate, (ii) the first sole portion includes, or consists essentially of, a first material and the second sole portion includes, or consists essentially of, a second material different from the first material, (iii) an orientation of at least one first traction element in a first region of the first sole portion is different from an orientation of at least one first traction element in a second region of the first sole portion, and (iv) the second sole portion further includes a plurality of third traction elements.

These and other objects, along with advantages and features herein disclosed, will become more apparent through reference to the following description, the accompanying drawings, and the claims. Furthermore, it is to be understood that the features of the various examples described herein are not mutually exclusive and can exist in various combinations and permutations.

## BRIEF DESCRIPTION OF THE DRAWINGS

In the drawings, like reference characters generally refer to the same parts throughout the different views. Also, the drawings are not necessarily to scale. Examples will now described with reference to the following drawings, in which:

FIG. 1 is a flow chart of a method of designing at least a portion of a sole of an article of footwear customized for a user;
FIG. 2 is a schematic view of a system for obtaining experimental data representative of a performance characteristic of an athlete;
FIG. 3 is a schematic perspective view of an article of footwear;
FIG. 4A is a side view of a coordinate system for an article of footwear;
FIG. 4B is a side view of another coordinate system for an article of footwear;
FIG. 5A is a plan view of a pressure sensing insole for an article of footwear;
FIG. 5B is a plan view of another pressure sensing insole for an article of footwear;
FIG. 6A is a schematic view of a pressure distribution for a foot of an athlete undergoing an initial heel-striking ground contact during a running motion;
FIG. 6B is a schematic view of a pressure distribution for a foot of the athlete of FIG. 6A undergoing a toe-off phase of a running motion;
FIG. 6C is a schematic view of a pressure distribution for both a left and right foot of the athlete of FIG. 6A undergoing a toe-off phase of a running motion while running round a corner portion of an athletic track;
FIG. 7A is a schematic view of a pressure distribution for a foot of an athlete undergoing an initial midfoot-striking ground contact during a running motion;
FIG. 7B is a schematic view of a pressure distribution for a foot of the athlete of FIG. 7A undergoing a toe-off phase of a running motion;
FIG. 7C is a schematic view of a pressure distribution for both a left and right foot of the athlete of FIG. 7A undergoing a toe-off phase of a running motion while running around a corner portion of an athletic track;
FIG. 8A is a schematic view of a pressure distribution for a foot of another athlete undergoing an initial midfoot-striking ground contact during a running motion;
FIG. 8B is a schematic view of a pressure distribution for a foot of the athlete of FIG. 8A undergoing a toe-off phase of a running motion;
FIG. 8C is a schematic view of a pressure distribution for both a left and right foot of the athlete of FIG. 8A undergoing a toe-off phase of a running motion while running around a corner portion of an athletic track;
FIG. 9A is a schematic view of a pressure distribution for a foot of another athlete undergoing an initial forefoot-striking ground contact during a running motion;
FIG. 9B is a schematic view of a pressure distribution for a foot of the athlete of FIG. 9A undergoing a toe-off phase of a running motion;
FIG. 9C is a schematic view of a pressure distribution for both a left and right foot of the athlete of FIG. 9A undergoing a toe-off phase of a running motion while running round a corner portion of an athletic track;
FIG. 10A is a schematic view of pressure data measurements and center of pressure calculations for an athlete undergoing a heel-striking style ground contact phase of a running motion;
FIG. 10B is a schematic view of pressure data measurements and center of pressure data for an athlete undergoing a midfoot-striking style ground contact phase of a running motion;
FIG. 10C is a schematic view of pressure data measurements and center of pressure data for another athlete undergoing a midfoot-striking style ground contact phase of a running motion;
FIG. 10D is a schematic view of pressure data measurements and center of pressure data for another athlete undergoing a forefoot-striking style ground contact phase of a running motion;
FIG. 11A is a graph of force measurements between an article of footwear and the ground during the ground contact phase of a running motion for a heel-striking running style;
FIG. 11B is a graph of force measurements between an article of footwear and the ground during the ground contact phase of a running motion for a midfoot-striking running style;
FIG. 12A is a schematic representation of pressure measurements on a plurality of pressure sensors in an insole of an article of footwear during an initial heel-striking ground contact phase of a running motion;
FIG. 12B is a schematic representation of pressure measurements in the insole of FIG. 12A during an intermediate ground contact phase of a running motion;
FIG. 12C is a schematic representation of pressure measurements in the insole of FIG. 12A during a toe-off phase of a running motion;
FIG. 13A is a schematic view of both force and localized pressure data during an initial heel-striking ground contact phase of a running motion;
FIG. 13B is a schematic view of both force and localized pressure data for the shoe of FIG. 13A during a ground contact phase of a running motion;

FIG. 13C is a schematic view of both force and localized pressure data for the shoe of FIG. 13A during a toe-off phase of a running motion;

FIG. 14A is a schematic view of pressure and distributed performance metric data during an initial heel-striking ground contact phase of a running motion;

FIG. 14B is a schematic view of both pressure and distributed performance metric data for the shoe of FIG. 14A during a ground contact phase of a running motion;

FIG. 14C is a schematic view of both pressure and distributed performance metric data for the shoe of FIG. 14A during a toe-off phase of a running motion;

FIG. 15A is a schematic view of the distributed performance metric data of FIG. 14A;

FIG. 15B is a schematic view of the distributed performance metric data of FIG. 14B;

FIG. 15C is a schematic view of the distributed performance metric data of FIG. 14C;

FIG. 16A is a schematic view of the combined distributed performance metric data of FIGS. 14A to 14C;

FIG. 16B is a schematic plan view of an outsole for an article of footwear having structural characteristics based on the performance metric data of FIG. 16A;

FIG. 16C is a schematic plan view of another outsole for an article of footwear having structural characteristics based on the performance metric data of FIG. 16A;

FIGS. 17A-17B are plan and side views of a traction element for an outsole element of an article of footwear;

FIGS. 17C-17D are plan and side views of another traction element for an outsole element of an article of footwear;

FIGS. 17E-17F are plan and side views of another traction element for an outsole element of an article of footwear;

FIGS. 17G-17H are plan and side views of another traction element for an outsole element of an article of footwear;

FIGS. 17I-17J are plan and side views of another traction element for an outsole element of an article of footwear;

FIGS. 17K-17L are plan and side views of another traction element for an outsole element of an article of footwear;

FIGS. 17M-17N are plan and side views of another traction element for an outsole element of an article of footwear;

FIGS. 17O-17P are plan and side views of another traction element for an outsole element of an article of footwear;

FIG. 18 is a perspective view of an outsole element for an article of footwear having a plurality of traction elements thereon;

FIG. 19A is a schematic representation of a center of pressure vector for a foot of an athlete undergoing a heel-striking style ground contact phase of a running motion;

FIG. 19B is a schematic plan view of the center of pressure vector of FIG. 16A with example data representative of the pressure at various locations along the center of pressure vector;

FIG. 20A is a schematic representation of a center of pressure vector for a foot of an athlete undergoing a midfoot-striking style ground contact phase of a running motion;

FIG. 20B is a schematic plan view of the center of pressure vector of FIG. 18A with example data representative of the pressure at various locations along the center of pressure vector;

FIG. 21A is a schematic representation of a center of pressure vector for a foot of an athlete undergoing a forefoot-striking style ground contact phase of a running motion;

FIG. 21B is a schematic plan view of the center of pressure vector of FIG. 19A with example data representative of the pressure at various locations along the center of pressure vector;

FIG. 22A is a schematic plan view of a distribution of grid sections for the foot of FIG. 17A;

FIG. 22B is a schematic plan view of another distribution of grid sections for the foot of FIG. 17A;

FIG. 23A is a schematic representation of a method of creating a structural characteristic for an article of footwear based on performance metric information using a circle packing analytical technique;

FIG. 23B is a schematic representation of a method of creating a structural characteristic for an article of footwear based on performance metric information using a Delaunay triangulation analytical technique;

FIG. 23C is a schematic representation of a method of creating a structural characteristic for an article of footwear based on performance metric information using a Voronoi diagram analytical technique;

FIGS. 24A to 24C are plan views of outsole plates for an article of footwear based on a single athletes measured performance data but with different sets of selection criteria;

FIGS. 25A to 25E are plan views of other outsole plates for an article of footwear based on a single athletes measured performance data but with different sets of selection criteria;

FIGS. 26A and 26B are plan views of outsole plates for an article of footwear based on a first and second athletes measured performance data analyzed using the same selection criteria;

FIG. 27 is a side view of an outsole plate for a shoe of an athlete including base elements for insertable spikes;

FIGS. 28A and 28B are plan views of outsole plates for left and right shoes of an athlete based on measured performance data while running round a corner portion of a track;

FIGS. 29A and 29B are plan views of outsole plates for left and right shoes of another athlete based on measured performance data while running round a corner portion of a track;

FIGS. 30A and 30B are plan views of outsole plates for left and right shoes of the athlete of FIGS. 29A and 29B based on measured performance data while running along a straight portion of a track;

FIGS. 31A and 31B are perspective views of the outsole plates of FIGS. 30A and 30B;

FIG. 32A is a side view of a midsole for an article of footwear;

FIG. 32B is a plan view of the midsole of FIG. 32A;

FIG. 32C is a perspective view of the midsole of FIG. 32A;

FIG. 32D is a perspective view of a mathematical mesh used to design the midsole of FIG. 32A;

FIG. 33 is a schematic perspective view of a scalar hexahedron pressure mapping distribution for calculating a midsole mesh;

FIG. 34A is a lateral side view of another midsole for an article of footwear;

FIG. 34B is a medial side view of the midsole of FIG. 34A;

FIG. 34C is a top view of the midsole of FIG. 34A;

FIG. 34D is a bottom view of the midsole of FIG. 34A;

FIG. 34E is a perspective view of the midsole of FIG. 34A;

FIG. 34F is a another perspective view of the midsole of FIG. 34A;

FIG. 35 is a perspective bottom view of another midsole for an article of footwear;

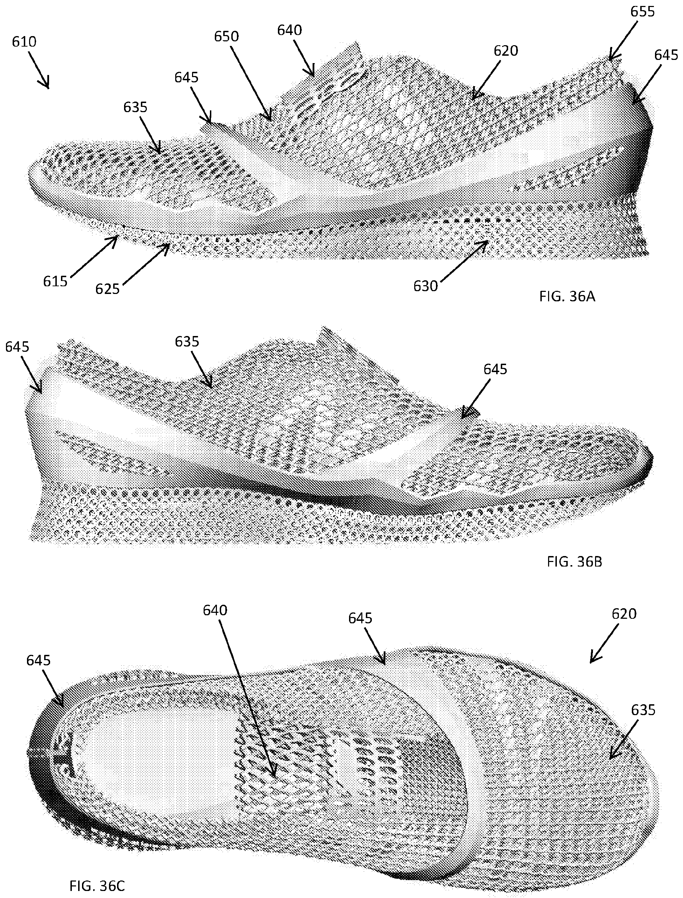

FIG. 36A is a lateral side view of an article of footwear;

FIG. 36B is a medial side view of the article of footwear of FIG. 36A;

FIG. 36C is a top view of the article of footwear of FIG. 36A;

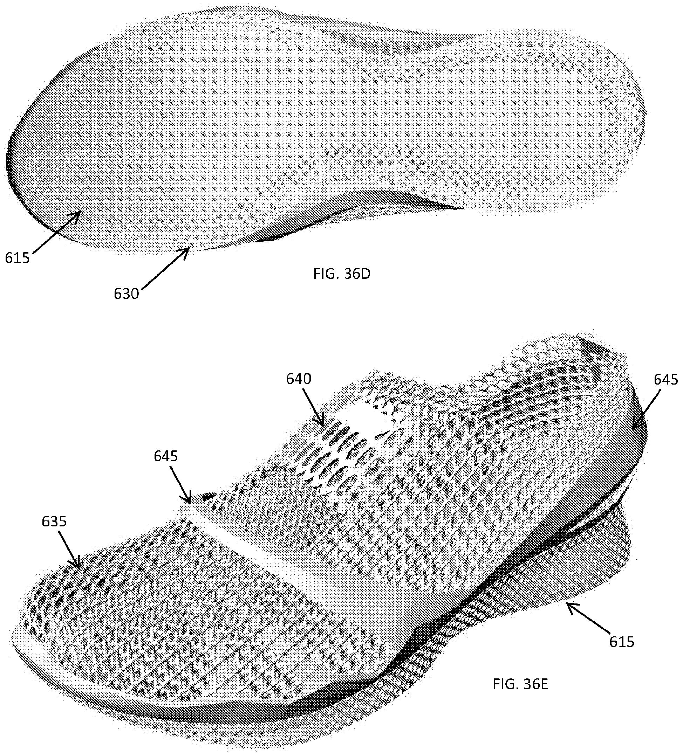

FIG. 36D is a bottom view of the article of footwear of FIG. 36A;

FIG. 36E is a perspective view of the article of footwear of FIG. 36A;

FIG. 37A is a bottom view of a midsole for an article of footwear having hexagonal cells;

FIG. 37B is a side view of the midsole of FIG. 37A;

FIG. 37C is a perspective view of the midsole of FIG. 37A;

FIG. 37D is perspective view of the midsole of FIG. 37A with indentations in the bottom surface;

FIG. 38A is a bottom view of another midsole for an article of footwear;

FIG. 38B is a perspective view of the midsole of FIG. 38A;

FIG. 39A is a bottom view of another midsole for an article of footwear;

FIG. 39B is a side view of the midsole of FIG. 39A;

FIG. 40A is a bottom view of a midsole for an article of footwear having circular cells;

FIG. 40B is a side view of the midsole of FIG. 40A;

FIG. 41A is a bottom view of another midsole for an article of footwear having circular cells;

FIG. 41B is a side view of the midsole of FIG. 41A;

FIG. 42 is a perspective view of a midsole for an article of footwear having circular cells and a top plate;

FIG. 43A is a bottom view of another midsole for an article of footwear;

FIG. 43B is a side view of the midsole of FIG. 43A;

FIG. 44 is a perspective view of another midsole for an article of footwear;

FIG. 45 is a top view of a midsole for an article of footwear following a shape of a foot;

FIG. 46 is a perspective view of a midsole for an article of footwear having triangular cells;

FIG. 47A is a perspective view of another midsole for an article of footwear having triangular cells;

FIG. 47B is a bottom view of the midsole of FIG. 47A;

FIG. 48 is a perspective view of another midsole for an article of footwear having triangular cells;

FIG. 49 is a perspective view of another midsole for an article of footwear having triangular cells;

FIG. 50 is a perspective view of another midsole for an article of footwear having triangular cells;

FIG. 51A is a bottom view of a midsole for an article of footwear having spheroid-based cells;

FIG. 51B is a side view of the midsole of FIG. 51A;

FIG. 51C is a perspective view of the midsole of FIG. 51A;

FIG. 51D is a top view of the midsole of FIG. 51A;

FIG. 52 is a perspective view of another midsole for an article of footwear having spheroid-based cells;

FIG. 53 is a perspective view of a warped matrix structure;

FIG. 54A is a side view of a foot-form formed using foot scan data;

FIG. 54B is a perspective view of the foot-form of FIG. 54A;

FIG. 55A is a side view of another foot-form formed using foot scan data;

FIG. 55B is a perspective view of the foot-form of FIG. 55A;

FIG. 56A is a top view of another foot-form formed using foot scan data;

FIG. 56B is a side view of the foot-form of FIG. 56A;

FIG. 57 is a perspective view of a linkage system for a midsole for an article of footwear;

FIG. 58A is a perspective view of a midsole for an article of footwear incorporating the linkage system of FIG. 57;

FIG. 58B is a bottom view of the midsole of FIG. 58A;

FIG. 58C is another bottom view of the midsole of FIG. 58A, with the linkages slightly extended;

FIG. 58D is a side view of the midsole of FIG. 58C;

FIG. 58E is a side view of the midsole of FIG. 58C with the angles of certain linkages modified;

FIGS. 59A through 59D are perspective views of a variety of outsole plates having cleated traction elements;

FIG. 59E is a bottom view of another outsole plate having cleated traction elements;

FIG. 60A is a bottom view of an outsole plate having cleated traction elements and flex grooves;

FIGS. 60B through 60E are perspective views of a variety of outsole plates having cleated traction elements and flex grooves;

FIG. 61A is a schematic plan view of an outsole plate having a mapping structure superimposed thereon;

FIG. 61B is a cleated outsole plate having cleats in positions corresponding to the mapping structure of FIG. 61A;

FIGS. 62A through 62D are schematic plan views of outsole plates having cleated traction elements positioned and oriented based on various processing algorithms for processing athlete data;

FIGS. 63A through 63G show a number of steps in processing athlete data to produce a customized outsole plate having cleated traction elements;

FIG. 64A is a top view of a cleated sole plate having hollow cleated traction elements;

FIG. 64B is a bottom view of the cleated sole plate of FIG. 64A;

FIG. 65 is a perspective view of an article of footwear including an upper with a ground contact element positioned within, and extending through, the upper;

FIG. 66A is a top view of an article of footwear having a cleated sole plate, in accordance with the invention defined in the claims;

FIG. 66B is a lateral side view of the article of footwear of FIG. 66A;

FIG. 66C is a bottom view of the sole plate of the article of footwear of FIG. 66A;

FIG. 66D is a lateral side view of the sole plate of the article of footwear of FIG. 66A;

FIG. 67A is a top view of an article of footwear having a cleated sole plate;

FIG. 67B is a lateral side view of the article of footwear of FIG. 67A;

FIG. 67C is a bottom view of the sole plate of the article of footwear of FIG. 67A;

FIG. 67D is a lateral side view of the sole plate of the article of footwear of FIG. 67A; and

FIG. 67E is a medial side view of the sole plate of the article of footwear of FIG. 67A.

## DETAILED DESCRIPTION

The examples described herein relate generally to methods and systems for designing and manufacturing an article of footwear, apparel, and/or sporting equipment (and, for example, a customized article of footwear), or one or more elements thereof, and customized or non-customized footwear, apparel, and/or sporting equipment manufactured using such methods and systems. More particularly, examples described herein relate to footwear, or footwear elements, that are specifically customized to meet one or more needs of an athlete to improve the performance of the athlete during athletic activity and/or improve the comfort of the article of footwear when worn.

The customization of footwear may be beneficial for numerous groups of individuals such as, but not limited to, athletes (who are looking for improved performance from their footwear), people with medical conditions (who are looking for footwear providing better support and/or treatment for their specific condition), or casual runners or walkers, who are looking for footwear having both improved and customized performance benefits and/or a customized aesthetic look (including, for example, decorative elements, trademarks, names, etc.). While the description herein relates generally to customizing footwear to provide improved performance characteristics for an athlete, it should be noted that the methods, algorithms, processes, and structures described herein are equally applicable to customization of elements for any purpose and for any user.

Customization of the footwear, or elements thereof, may include factors such as, but not limited to, customized size and shape to better fit a wearer, customized cushioning to address one or more specific characteristic of an athlete's motion, customized traction elements on the outsole (or ground contacting midsole) of the footwear to provide improved grip during a specific athletic activity or activities, customized materials (e.g., specific materials used, material weight, material properties, etc.). Customization may also include specifically creating footwear, and footwear elements, to meet an athlete's individual preferred aesthetic and/or performance needs.

Examples described herein allow for the customization of entire articles of footwear (e.g., shoes, flip-flops, sandals, socks, athletic supports such as compression support elements) and/or the customization of elements of the article of footwear for incorporation into a finished article. Example footwear elements include, but are not limited to, an outsole, midsole, and/or insole for a shoe and/or customized elements for placement within an outsole, midsole, and/or insole such as an element for insertion into or attachment to (e.g., through mechanical attachment, bonding, or other appropriate attachment means) the sole of a shoe at a specific region thereof (e.g., in a heel, midfoot, and/or forefoot region).

Customization of the footwear, or footwear elements, can be based on a number of physical, performance (e.g., kinematic performance), and/or user preference characteristics associated with an individual or group of individuals. For example, in addition to standard parameters such as shoe size, physical characteristics such as the shape of an individual's foot including, for example, bone structure, callous distribution on the foot, injuries (both historical and/or likely in the future), ankle shape, range of motion, strength, toe shape, and preference for hosiery (e.g., socks, tights, or leggings) or no hosiery, and/or strapping (e.g., ankle and/or foot support strapping or taping) to be worn with the footwear can all be accounted for in the design and manufacture of shoes specifically customized for a given wearer or subset of wearers. Other parameters may include, or consist essentially of, breathability characteristics, perspiration characteristics, circulation considerations, and/or diabetes factors (such as, but not limited to, minimization of friction within the shoe).

Additional features of an individual not directly associated with the foot can also have an effect on the athletic performance of the individual, with customized footwear potentially addressing limitations or weaknesses in the individual's mechanics and/or supporting strengths in the individual's mechanics. Such features that may influence customization of the footwear or apparel include, but are not limited to, an individual's height, weight, age, gender, bone structure, leg bone length (e.g., calf length and/or thigh length), general level of physical fitness, medical history and/or medical requirements. Medical requirements that may be addressed through use of customized footwear components may include elements such as structural support for conditions such as, but not limited to, problems with the muscles, tendons, bones, and or skin of the foot such as flat feet, fallen arches, hammer toe, gout, edema (swelling), leg length discrepancy, amputation, hallux deformities or other foot deformities, Morton's neuroma, problems with leg or knee alignment, and/or planar fasciitis, or cushioned and substantially frictionless support for diabetics.

Performance aspects of a specific athlete, or subset of athletes, such as, but not limited to, footstrike location (e.g., heel-strike, midfoot strike, or forefoot strike during initial ground contact of a foot during a gait cycle or other athletic motion), stride length, stride rate (i.e., cadence), pronation or supination of the foot upon foot-strike, pivoting of the foot during ground strike and toe-off, running style, running speed, circulation, breathability, and/or flexibility of one or more joints, may be addressed through customization of the footwear, with specific performance characteristics being supported or compensated for, as needed, to improve the performance of the athlete during athletic activity and/or improve the comfort of the footwear worn during the athletic activity.

In addition, the performance requirements of a specific athletic activity can be taken into account when customizing footwear for a specific athlete or subset of athletes. For example, traction requirements for a runner (such as a track runner, a road runner, or a cross-country runner) may be different depending on whether the runner is a sprinter or long distance runner, and/or whether the runner requires the traction elements on the sole of the footwear to account for running around a corner (e.g., on a standard indoor or outdoor athletic track), or whether the running is to be carried out in a predominantly straight line (e.g., during road racing or jogging). Customization of footwear may also depend upon the weather and underfoot conditions in which the athlete is performing with, for example, different traction requirements being needed for wet/dry conditions and/or soft/firm underfoot conditions. In addition, different sports may require different shapes, sizes, and/or configurations of traction elements (e.g., spikes, cleats or studs, gripping elements, and/or tread patterns) with, for example, cleats for soccer, American football, field hockey, baseball, etc. all requiring different cleat-types and configurations, and with different positions within each of these sports potentially requiring different performance features from the traction elements.

Other athletic activities for which footwear can be customized include activities with significant cutting-type motions (e.g., basketball, baseball, softball, soccer, American Football, field hockey, ice hockey, ice skating, speed skating, rugby, tennis, squash, racquetball, skateboarding, cycling, etc.) where an individual's technique and physical characteristics can vary greatly from person to person, and where specifically customized traction elements, support elements, and/or structural support zones can greatly improve the individuals performance of the athletic motion. Other activities such as jumping, crouching, kicking, throwing, turning, spinning, etc. can also be accounted for in creating traction elements that enhance or support the unique combination of performance characteristics of a specific athlete and/or activity.

Customization of footwear for an athlete can be performed by utilizing analytical tools to process input parameters specific to an athlete (or group of athletes) to generate a design including physical elements specifically located and constructed to address the specific performance and physical characteristics of the athlete. The design can then be manufactured to produce an article of footwear, and/or footwear element, that is unique to the athlete.

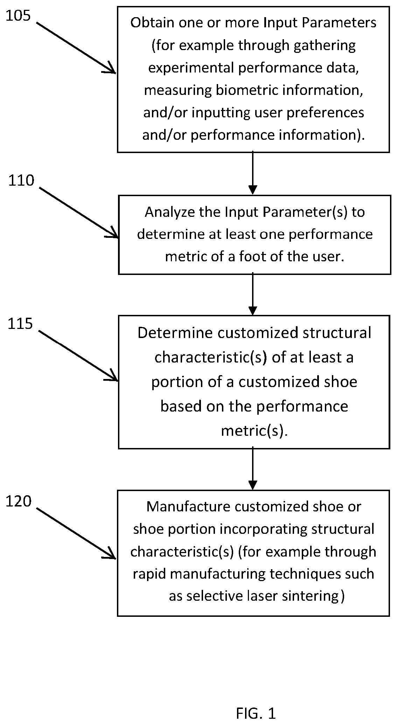

An example method for designing at least a portion of a sole of an article of footwear customized for an athlete is shown in FIG. 1. The method includes the steps of obtaining/determining **105** one or more input parameters related to the athlete and analyzing **110** the input parameters to determine at least one performance metric of a foot of the user. The at least one performance metric is then used to determine **115** one or more structural characteristic of at least a portion of a sole of an article of footwear for the athlete based on the performance metric, after which the customized sole portion can be manufactured **120,** for example through use of additive/rapid manufacturing techniques such as, but not limited to, rapid manufacturing methods (e.g., selective laser sintering).

The input parameter(s) can include experimental performance data, measured biometric information, and/or selected user preference and/or performance information. The input parameter(s) may relate directly to one or more characteristic of at least a portion of a foot of the user, and/or include characteristics associated with the legs and/or upper body of the athlete (such as height, weight, leg length, athletic ability, injury, etc.) and/or to the performance requirements of the athletic activity for which the shoe is being customized.

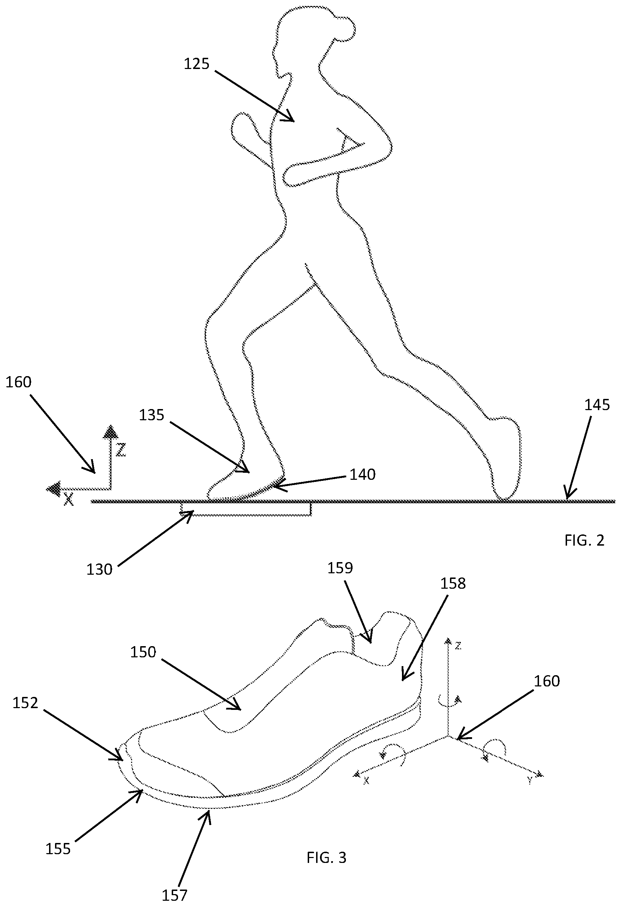

The input parameters used to design the customized shoe component may include experimental data representative of a performance characteristic of the foot during at least a portion of a ground contact phase of a gait cycle or other athletic motion. An example system for obtaining the experimental data is shown in FIG. 2. An athlete **125** performs the athletic activity for which the shoe is to be customized (e.g., track running) in an environment including data gathering equipment designed to capture and record data representative of various performance characteristics of the foot of the athlete **125** during the athletic activity. In the example of FIG. 2, the data gathering equipment includes a force plate **130** for capturing the force between the foot **135** of the athlete **125** and the ground **145,** and an array of pressure sensors **140** located between the foot **135** and the ground **145.** The pressure sensors **140** may be located in an insole placed within a shoe **150** of the athlete **125.** The pressure sensors **140** can be embedded within a midsole **155** of the shoe **150** or located within or attached to a ground contacting outsole **157** of the shoe **150.** Alternatively, or in addition, pressure sensors, or any other sensors utilized in the methods described herein, can be located at any appropriate location on the foot, leg, and/or upper body of an athlete. An example shoe **150** for an athlete **125** is shown in FIG. 3, with an example coordinate system **160** providing axes of orientation for the data capturing systems. The shoe includes an upper **158** and a sole **152** (including an insole and the outsole **157** and midsole **155**), with a foot receiving cavity **159** defined by the upper **158** and sole **152.** The shoe **150** may be a slip-on style shoe or have tightening/fastening means such as, but not limited to, lacing, hook-and-loop fastening, zippers, cords, elastic elements, buttons, and/or buckles.

The pressure sensors **140** may form part of a portable data capture system worn by the athlete **125** during athletic activity, with the pressure sensors **140** located within the shoe **150** and coupled to a data capture system that can power the sensors, record the data obtained from the sensors, and/or wirelessly transmit the data to a data processing system for analysis. The pressure data capture system can merely record the pressure data during athletic activity and then transfer the data to the data processing system through either a wireless or wired connection at a later time. The data processing system may be located within the portable data capture system.

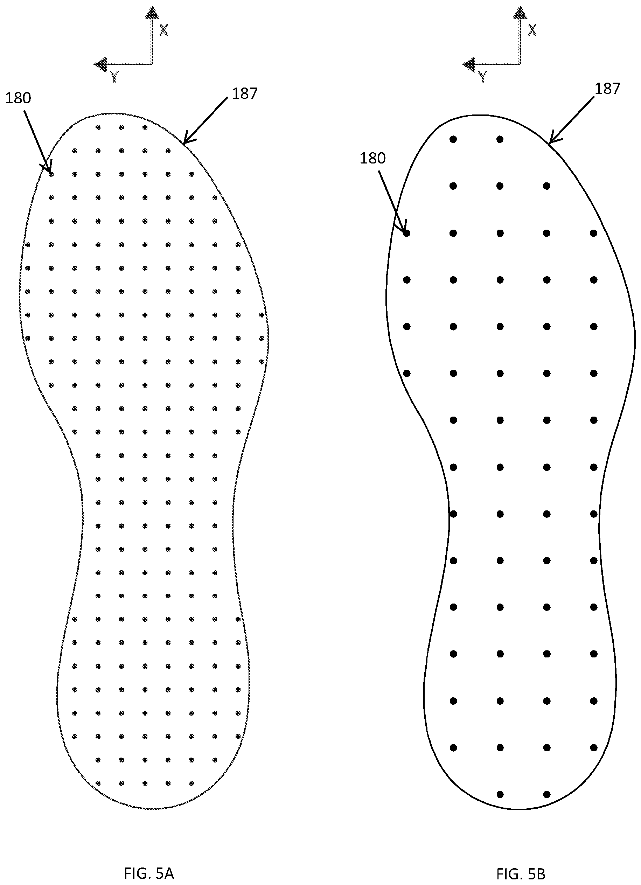

The pressure sensors **140** may include a distribution of separate sensor elements **180** arranged in an array for placing between the sole of the foot **135** and the ground **140** (for example within an insole **187** placed within the shoe **150** of the athlete **125**). Example sensor arrays can be seen in FIG. 5A and 5B, with FIG. 5A showing an array having two hundred and nineteen sensor elements **180** arranged in a regular distribution, and FIG. 5B showing an array having fifty nine sensor elements **180** arranged in a regular distribution. Any size of sensor array may be utilized (e.g., 10, 20, 50, 99, 100, 200, 500, etc. sensor elements **180**), with the sensor elements **180** arranged regularly or in an irregular pattern (e.g., with high importance/impact regions containing more sensor elements **180**). As discussed above, each sensor element **180** can form part of a portable data capture including elements for powering the system, recording data from each pressure element **180,** and/or transmitting the data for analysis.

The force plate **130** may be embedded within, fixed to, or placed on the ground **140,** with the athlete running over the force plate **140** during data capture. Force sensors may be positioned on or in the sole of the shoe **150** and may form part of the portable data capture system.

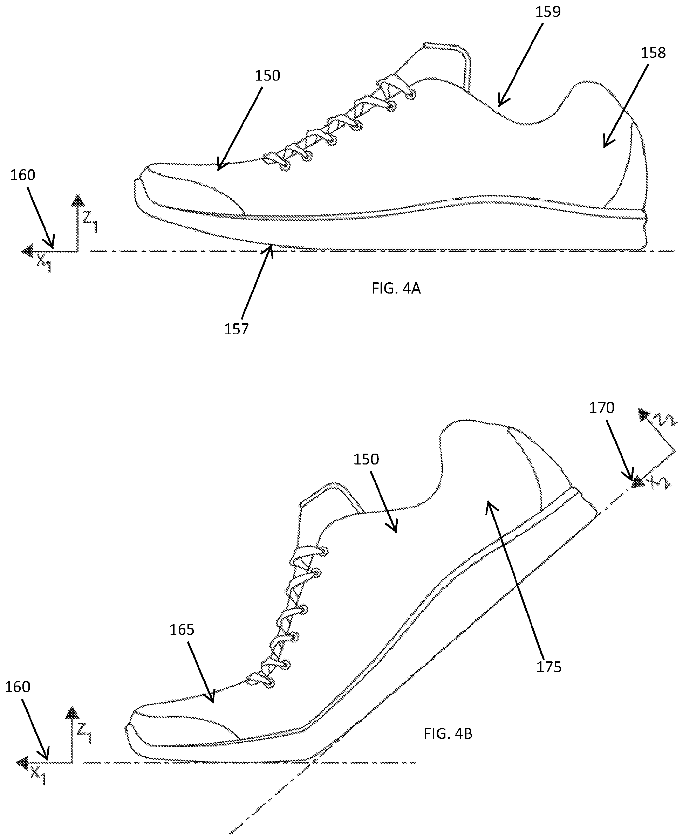

A single coordinate system associated with either the outsole **155** of the shoe **150,** the ground **145,** the sole of the foot itself, or any other appropriate element of the foot can be utilized to capture and process the data. An example with a single coordinate system **160** is shown in FIG. 4A. Multiple coordinate systems relating to various elements of the foot **135** and shoe **150** can be utilized. For example, FIG. 4B shows a system having a first coordinate system **160** associated with the forefoot **165** of the shoe **150** and a second coordinate system **170** associated with a heel portion **175** of the shoe **150.** Utilizing multiple coordinate systems allows the gathered data to be processed and oriented with respect to the sole of the foot **135,** or any other appropriate element of the foot, at numerous locations along the foot **135** regardless of the flexing of the foot during the ground contact phase of the gait cycle. This may allow for more accurate processing and analysis of the data with respect to the performance metrics required for a particular customization goal, although a single axis system, as shown in FIG. 4A, may be sufficient to provide accurate analytical results.

The system of FIG. 2 allows for the simultaneous measurement of both the pressure distribution over the sole of the foot **135** throughout the ground contact phase of the gait cycle and the force interaction between at least a portion of the sole of the foot and the ground surface during at least a portion of the ground contact phase of the gait cycle. The pressure sensors **140** may measure only the normal pressure between the ground **145** and the foot **135,** while the force plate **130** measures the force between foot **135** and ground **140** in all three directions of the coordinate system **160,** thereby allowing for the calculation of both the magnitude and vertical and horizontal direction of the force between the foot **135** and ground **140** throughout the ground contact phase. Measuring both normal pressure distribution over the sole of the foot **135** and force vector data allows for the calculation of performance metrics identifying both the magnitude of the force being applied between foot **135** and ground **140** and the direction of that interaction at multiple locations on the foot **135** throughout the ground contact phase.

The pressure sensors **140** may measure the pressure in all three directions of a coordinate system (i.e., normal, posterior, and lateral) associated with the foot **135,** thereby allowing for directional data to be obtained without the need for separate three-dimensional force measurements. The normal pressure distribution data over the sole of the foot **135** may be integrated with respect to time to produce directional vector data representative of the direction of the force between the foot **135** and the ground **140** throughout the ground contact phase, again allowing for directional data to be obtained without the need for a separate force plate.

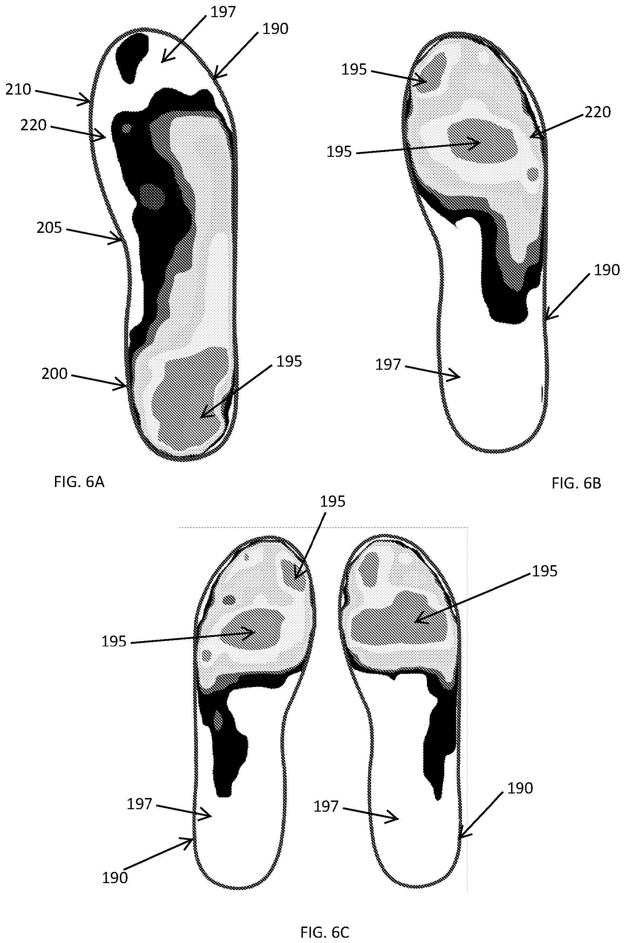

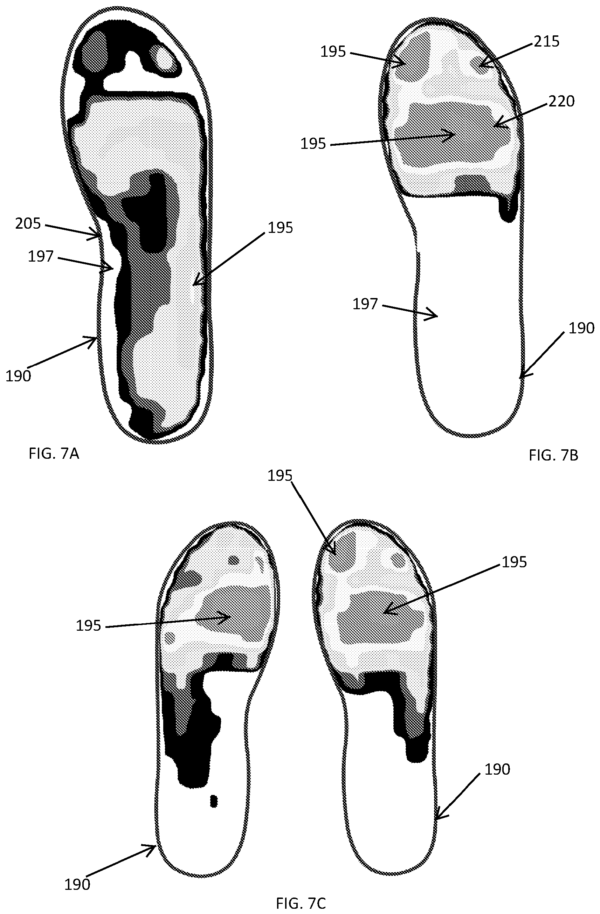

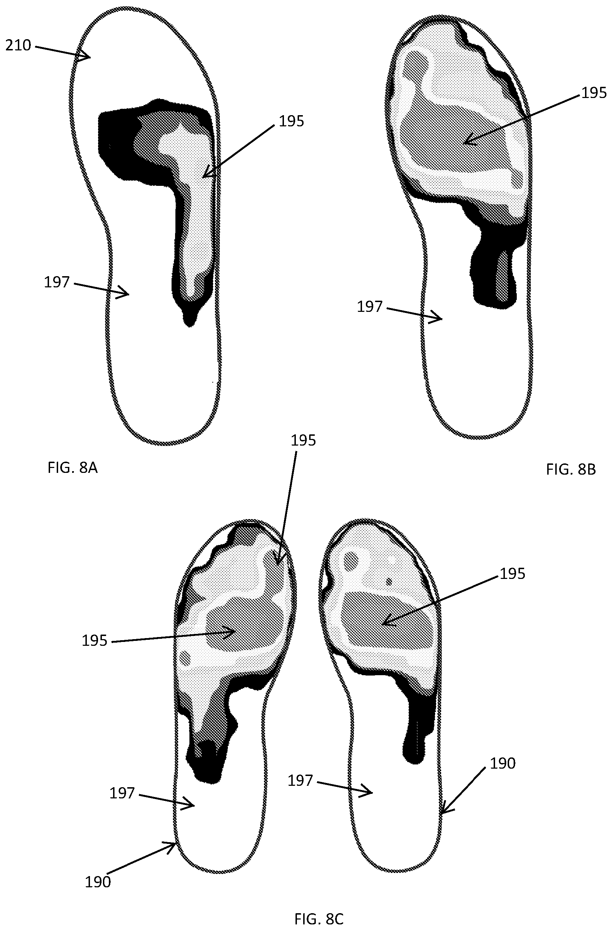

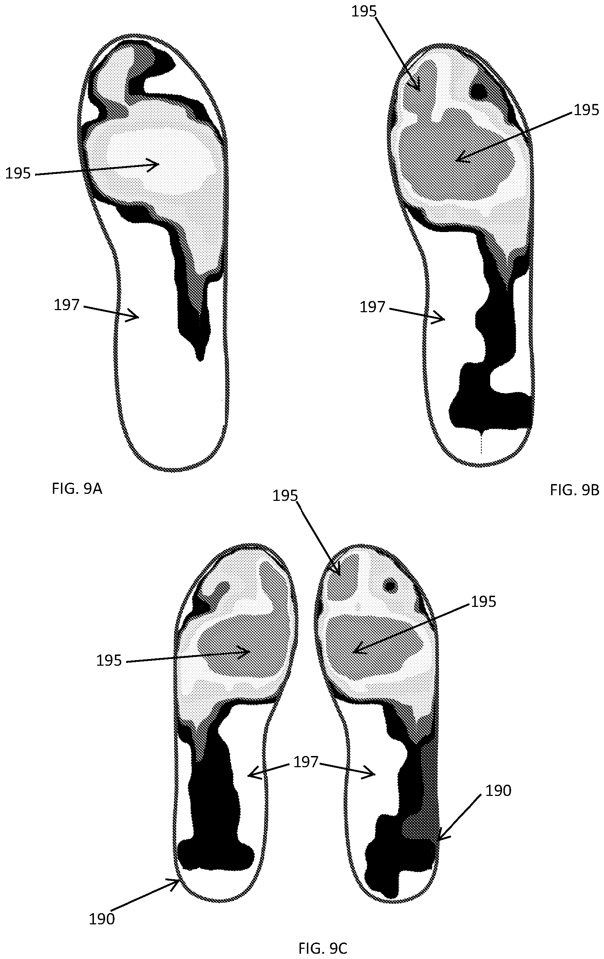

Example pressure data for four different athletes can be seen in FIGS. 6A through 9C. More particularly, FIGS. 6A, 7A, 8A, and 9A show pressure distribution data for four athletes at approximately the point of initial contact with the ground during a footstrike, with FIG. 6A showing the pressure distribution for an initial strike of the ground within the region of the heel (a heel-strike) by a first athlete during a straight run, FIGS. 7A and 8A showing the pressure distribution for an initial strike of the ground within the region of the midfoot (a midfoot-strike) for second and third athletes during a straight run, and FIG. 9A showing the pressure distribution for an initial strike of the ground within the region of the forefoot (a forefoot-strike) for a fourth athlete during a straight run. Similarly, FIGS. 6B, 7B, 8B, and 9B show the pressure distribution on the sole of the foot of the four athletes just prior to the foot leaving the ground at the end of the footstrike event (i.e., prior to toe-off) during a straight run. FIGS. 6C, 7C, 8C, and 9C show pressure distributions on both the left and right feet of the four athletes prior to toe-off while the athletes are running around a corner on a standard 400m athletic track. The pressure distribution maps of FIGS. 6A through 9C show contour maps of pressure in kilopascals (kPa) based on experimental pressure data retrieved from a ninety-nine sensor array embedded within an insole **190** of a shoe of each athlete, with the center(s) **195** of each shaded contour map representing the locations of highest pressure normal to the surface of the insole **190,** and the unshaded portions **197** representing areas where no substantial normal pressure was measured (for example because that portion of the foot was not in contact with the ground at that time).

As can be seen, the pressure distributions during the initial footstrike phase of the ground contact vary considerably from athlete to athlete, with the center of pressure for the heel-striking athlete located within the heel region **200,** while the center of pressure for the midfoot striking athletes is distributed through the midfoot region **205,** and the center of pressure for the forefoot striking athlete is located within the forefoot region **210.** In addition, the maximal pressure readings located at the center of pressure in the midfoot striking athletes has a significantly lower maximal value than that measured for the heel striker and forefoot striker, as the load at initial ground contact is distributed over a larger area for a midfoot striker than for a heel and toe striker.

While the pressure distributions during the toe-off phase are more similar, again differences in the pressure distributions between athletes can be observed, with the center of pressure and distribution of pressure differing considerably from athlete to athlete. For example, the athlete of FIG. 7B shows a pressure spike near the fourth toe region **215,** which is not observed for the other athletes, and each athlete shows a different pressure distribution around their metatarsal head region **220** (i.e., the head of the metatarsal bones adjoining the toe bones). The variation in results at the metatarsal region is due, for example, to variations in running style and also to differences in the shape and configuration of the metatarsal heads in each athlete. As a result, it is clear to see that the interaction between the foot and the ground for different athletes can vary considerably depending, for example, on the running technique of each athlete and the physical characteristics of the foot of each athlete. This identification of the unique features of the ground interaction for a given athlete can be measured and analyzed by appropriate algorithms to ensure that the shoe of the wearer is optimally designed to enhance the performance of each athlete based on their own individual input parameters.

Further variation between the pressure distributions can be seen in FIGS. 6C, 7C, 8C, and 9C, which show the pressure distributions on both the left and right feet of the four athletes prior to toe-off while the athletes are running (in a standard anti-clockwise direction) around a corner on a standard 400m athletic track. As can be seen, the pressure distributions on the left and right feet of each athlete are not perfectly symmetrical, with the different ground interactions between the ground and the shoe on each foot being affected by the cornering action of the athlete. In addition, while the pressure distributions are not perfectly symmetrical, the force measurements for each foot are significantly different, with the force oriented toward the outer edge of a curved track (i.e., on the inner foot the force is oriented towards the instep of the foot while on the outer foot the force is oriented towards the outer side of the foot). Allowing customization between left and right foot to account for this differentiation in pressure and force distribution may be beneficial for an athlete when running in an event requiring cornering at high speed. The methods and systems described herein can be utilized to provide customized footwear for any type of running track such as, but not limited to, standard 200m tracks or 400m tracks and/or tracks having any angle of banking in corners and/or along the straight.

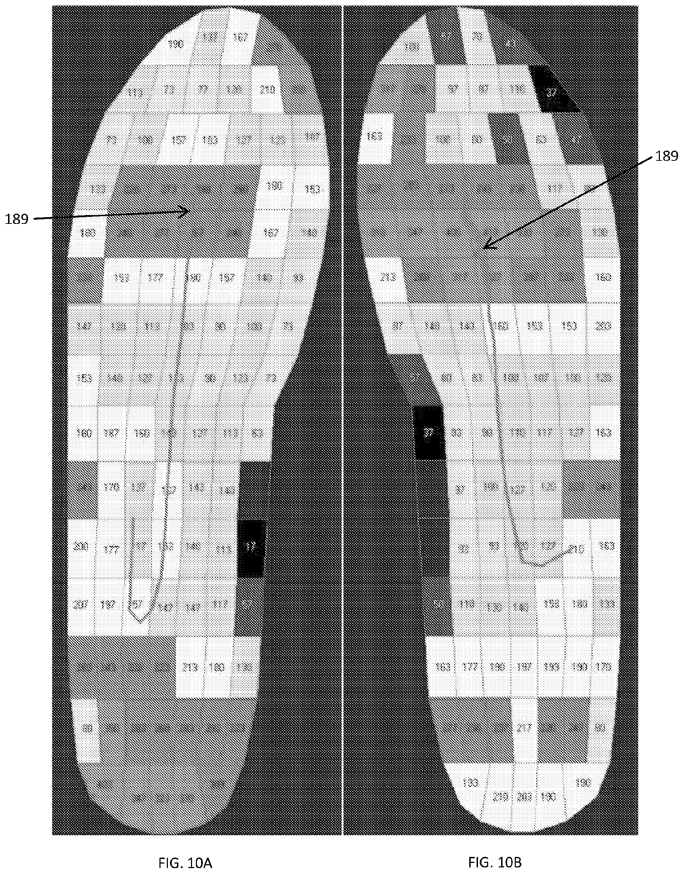

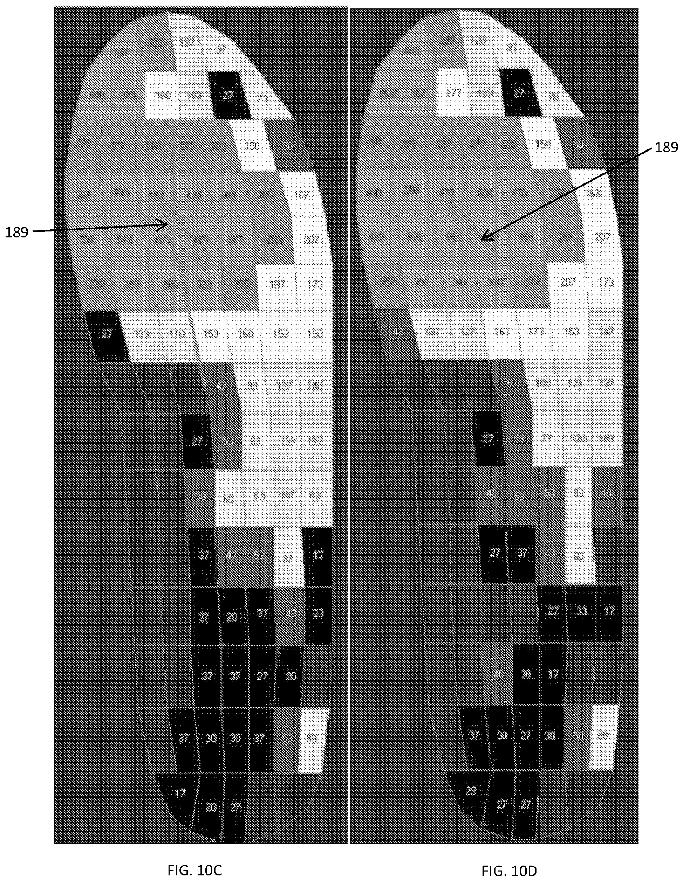

Example raw pressure measurement data showing pressure data in kPa for a ninety-nine pressure sensor element insole for the four different athletes at the point of initial ground contact can be seen in FIGS. 10A through 10D, with FIG. 10A showing the heel-strike athlete data, FIGS. 10B and 10C showing the two midfoot strike athlete data sets, and FIG. 10D show the forefoot striking athlete data. Also shown for each data set is the center of pressure vector **189** for each athlete over the full course of a footstrike event.

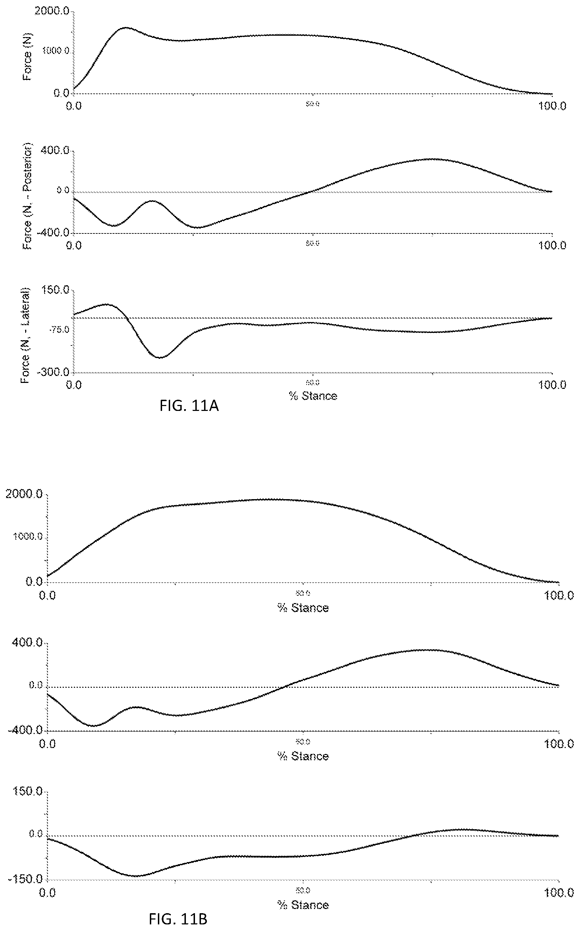

Example force data taken from a force plate **130** over the full length of a footstrike event can be seen in FIGS. 11A and 11B, with FIG. 11A showing the force data for a heel-striking athlete and FIG. 11B showing force data for a midfoot striking athlete. In the graphs the vertical axis represents the measured force in a given axis (in Newtons (N)) while the horizontal axis represents the time (normalized such that '0.0' represents the initial ground contact and '100.0' represents the toe-off). For each figure, the top graph, with the vertical axis labeled "Force (N)", represents the vertical component of force applied to the foot **135** by the ground **145** perpendicular to the ground (i.e., along the axis 'Z' in the coordinate system **160**), the middle graph, with the vertical axis labeled "Force (N-Posterior)", represents the horizontal component of force applied to the foot **135** by the ground **145** parallel with the direction of travel (i.e., along the axis 'X' in the coordinate system **160**), and the lower graph, with the vertical axis labeled "Force (N-Lateral)", represents the horizontal component of force applied to the foot **135** by the ground **145** perpendicular to the direction of travel (i.e., axis 'Y' in the coordinate system **160**). As can be seen, the force between the foot **135** and the ground **145** changes dramatically over the length of the footstrike event for each athlete and also differs considerably for a heel-strike type running motion and a midfoot-strike type running motion.

A plurality of pressure sensors may be positioned on the ground rather than be embedded in or attached to a portion of the foot, with the sensors measuring the pressure applied by a foot as it makes contact with the sensor array located on the ground.

The experimental data may include other measurements in addition to, or instead of, the pressure and/or force data captured by the system of FIG. 2. Such measurement systems may include sensors for measuring elements such as, but not limited to, position, velocity, acceleration, rotational velocity, rotational acceleration, a change in shape of at least a portion of a foot, friction, mass distribution, energy distribution, stress, strain, temperature, distortion, moisture levels, and/or a time over which an event occurs. Such sensors can be used to measure events such as ground contact time, initial footstrike location, toe-off position, pronation/supination characteristics and/or a change in shape and/or position of at least a portion of the foot of the user during at least a portion of the ground contact phase of the gait cycle or other athletic motion, in addition to, or instead of, measuring force/pressure vectors associated with the interaction between the foot **135** and ground **140.** An example portable system adapted to identify parameters associated with an athlete's performance (such as, but not limited to, foot-strike location) during athletic activity is described in U.S. Patent Publication No. 2013-0041617 A1.

Various sensor(s) for use with the methods and systems described herein may include, or consist essentially of, accelerometers, pressure sensors, force sensors, optical stress/strain sensors, temperature sensors, chemical sensors, global positioning systems, piezoelectric sensors, rotary position sensors, magnetometers, gyroscopic sensors, heart-rate sensors, and/or goniometers. Other sensors, such as, but not limited to, electrocardiograph sensors, electrodermograph sensors, electroencephalograph sensors, electromyography sensors, feedback thermometer sensors, photoplethysmograph sensors, and/or pneumograph sensors may also be utilized. Parameters relating to moisture in the body may, for example, be measured using any appropriate sensor for measuring skin conductance factors (e.g., galvanic skin response (GSR), electrodermal response (EDR), psychogalvanic reflex (PGR), skin conductance response (SCR) or skin conductance level (SCL) sensors).

For example, one or more shear stress sensors may be included on the sole of the shoe, with the distributed shear stress measurements providing directional data representative of the direction of interaction between the foot **135** and the ground **140.** Stress and/or strain measurements on the sole on a shoe can also be used to determine flexing of the shoe and foot during a foot-strike event. This data may be used in addition to, or instead of, pressure and/or force data to determine the magnitude and direction of the interactions between the foot **135** and ground **140** during a footstrike event.

The above list of measurement options is not limiting, and any appropriate sensor, or combination of sensors, may be utilized to capture data representative of the performance of an athlete **125** in carrying out an athletic activity, with this data being used as input parameters for analyzing the athlete's particular performance traits to allow for the designing of customized footwear elements. More particularly, each of the data sets and performance characteristics identified through the above measurement options can change dramatically depending upon the specific athletic technique and physical characteristics of an athlete, and the measurement of any of these elements may therefore be extremely helpful in identifying performance metrics that can be used to customize a shoe for a particular athlete.

The data gathered for any of the experimental measurements described herein can be sampled at any appropriate rate, but generally at a rate sufficient to capture the progression of the measurements throughout a ground contact portion of a gait cycle in sufficient detail to allow for customization to the level of accuracy required by the athlete. In various examples sample rates of about 10Hz, 20Hz, 50Hz, 100Hz, or 200Hz may be utilized, although different rates, and larger or smaller rates, may be used as appropriate. The gathered data may be averaged over any appropriate number of foot-strike events to provide an averaged representation of the athlete's performance characteristics. The raw data may be filtered using any appropriate filtering technique (e.g., high-pass, low-pass, and/or Butterworth filtering) to filter out non-essential information and ensure that only the appropriate data is analyzed in the customization algorithms. For example, high-pass type filtering may be applied to the results to filter out data below a set magnitude and only allow higher magnitude data to be processed in the customized design algorithms. In addition, various forms of data smoothing may be applied to the data to provide further filtering of the results (for example where an arrangement of traction elements needs to be structured to control differences in size, shape, orientation, etc. between adjacent traction elements).

The input parameters for the customized design process may include one or more physical characteristics of a foot **135** of the athlete **125** in addition to, or instead of, the experimental data described herein. Such physical characteristics may include, but are not limited to, physiological structural characteristics of the foot and/or body such as at least one of a shape, a size, a wear pattern, an injury profile, a bone structure, a ligament structure, a sweat gland distribution, a moisture level, a circulation arrangement or metric, a muscle activity, a friction metric, a blood pressure, a heart rate, a volume change, a hydration level, a perspiration level, a ligament structure, a toe shape and/or distribution (e.g., length and relative position of toes, relative location of metatarsal heads, etc.), an arch shape, and/or a heel shape (e.g., calcaneus shape). Such physical characteristics may, for example, be measured manually, scanned and recorded through an automated 2D or 3D scanning device, or determined through 3D processing of photographic images of the foot **135**.

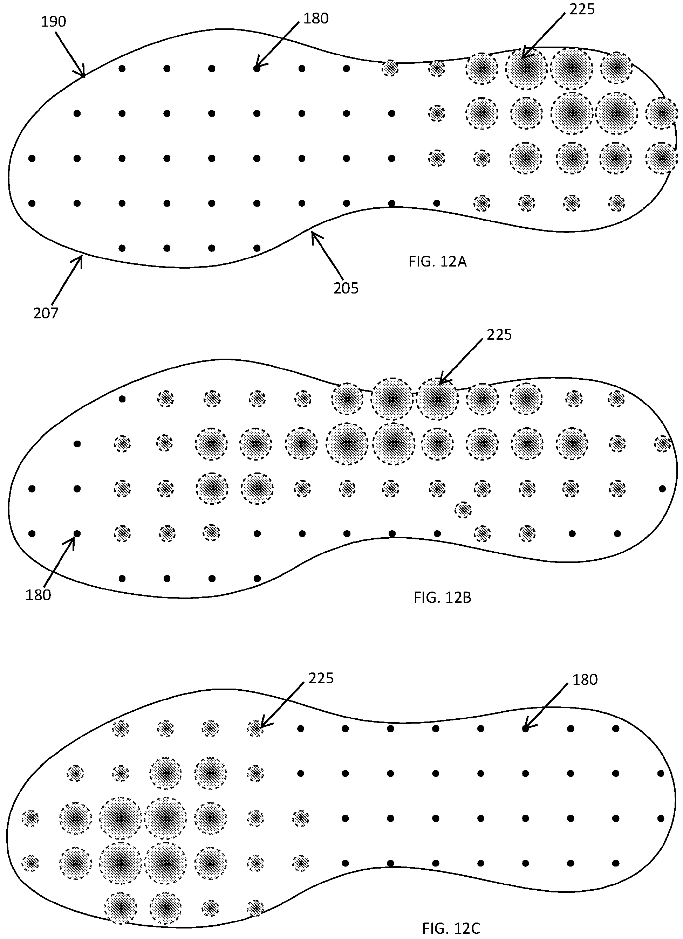

An example method for analyzing the input parameters, and more specifically input parameters such as normal pressure distribution data and three-component force data, to produce performance metrics to be used in the customization of footwear can be seen in FIGS. 12A through 16A. The pressure data and force data can be processed and multiplied together to create vectors (having both a magnitude and direction) representative of the interaction between the ground **145** and the foot **135,** over the full sole area of the foot, with the resulting vectors being used to identify locations and distributions of structural characteristics of the footwear that best address the requirements of the individual athlete.

FIGS. 12A-12C show schematic representations of pressure data measured by pressure sensor elements **180** using the insole **187** of FIG. 5B, with FIG. 12A showing pressure measurements at or around initial ground contact for a heel-striking athlete, FIG. 12B showing pressure measurements for that athlete at approximately a midpoint of the ground contact phase, and FIG. 12C showing pressure measurements for that athlete just prior to toe-off. The magnitude of the pressure normal to the surface of the insole **187** is represented by the size of the shaded circles **225** placed over each sensor element **180,** with a larger pressure indicated by a larger circle and smaller pressures represented by a smaller circle. As can be seen, the measurements show a movement of the pressure from near the heel **190** of the insole (at initial heel-strike), through the midfoot region **205,** and towards the forefoot region **207** (at toe-off) during a full ground contact event. As discussed above, the specific variation in pressure magnitude and distribution can vary greatly from athlete to athlete. While only three time steps within a footstrike event are shown in FIGS. 12A though 12C any appropriate number of time steps may be used in a full analysis of the input parameters depending upon the sample rates of the measurement devices utilized and the requirements of the processing algorithms being utilized.

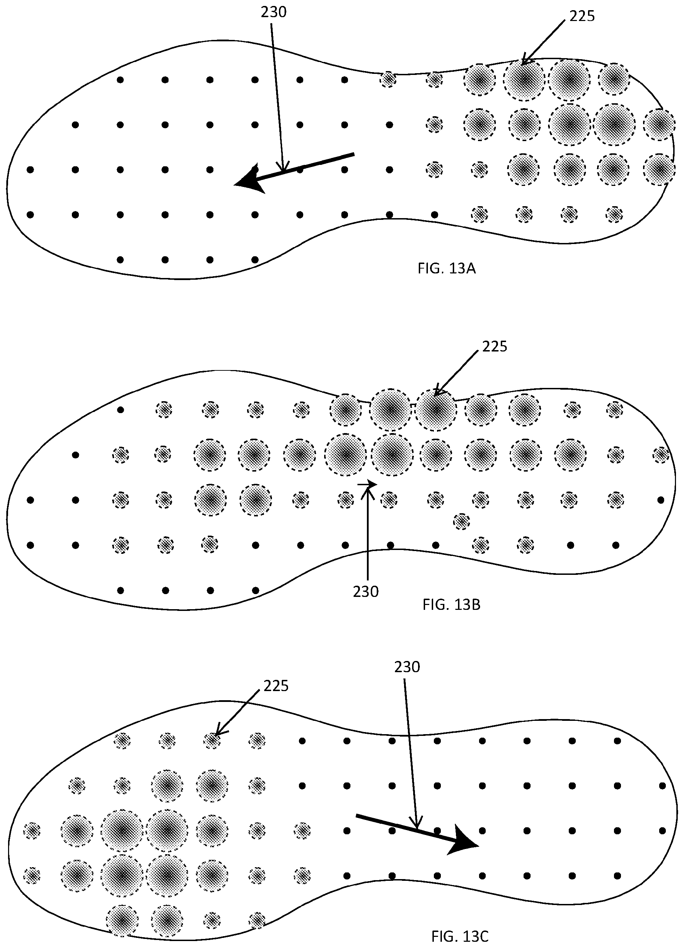

FIGS. 13A through 13C show the same pressure data as in FIGS. 12A-12C but also add in the horizontal component of force **230** exerted by the foot **135** on the ground **145** measured by the force plate **140** at that time (with the horizontal component of force represented by a vector **230** showing the direction of the horizontal component of force (with the relative magnitude of the force represented by the length of the vector). As can be seen, for the heel-strike type ground contact represented, the foot **135** exerts a relatively large force in substantially the direction of travel of the foot upon initial footstrike, with relatively little horizontal force applied during the middle of the footstrike event, and with a relatively large force substantially backwards in the opposite direction to the direction of travel at toe-off.

The pressure and force data can then be processed to determine appropriate performance metrics to be used in customization. The pressure data at each point may be multiplied by the force vector at that time to produce a vector representative of the foot/ground interaction at each point on the sole of the foot at each time step within the footstrike event to obtain Performance Metric Vectors (PMV) according to the following formulation:

$$\text{PMV}_{\text{at each time step}} = \text{Function of } \{C_1 \times \text{Pressure} \times \text{Force}\}_{\text{at each time step}}$$

Where $C_1$ is an appropriate multiplication/adjustment factor.

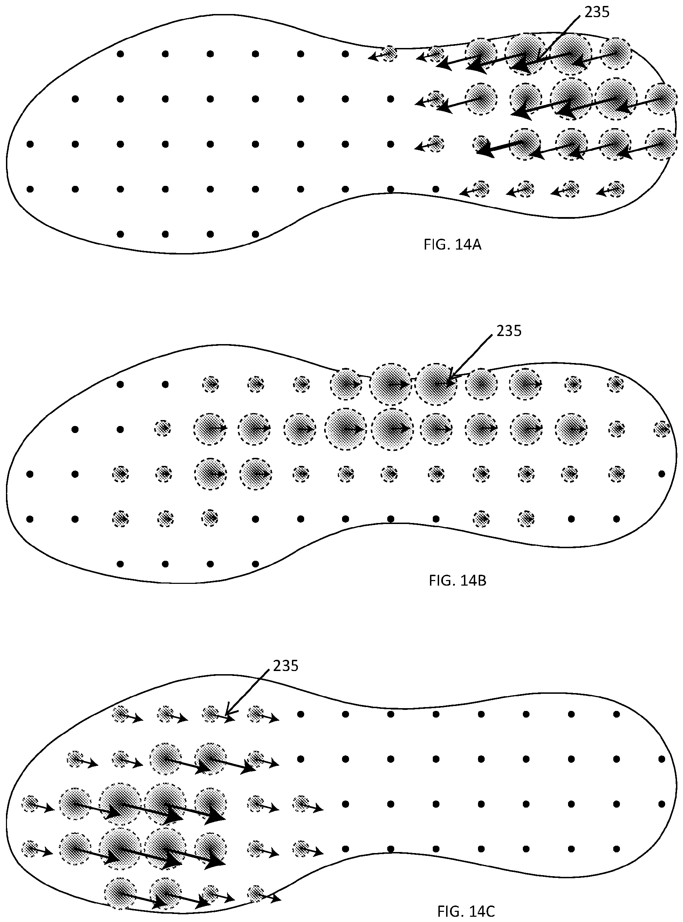

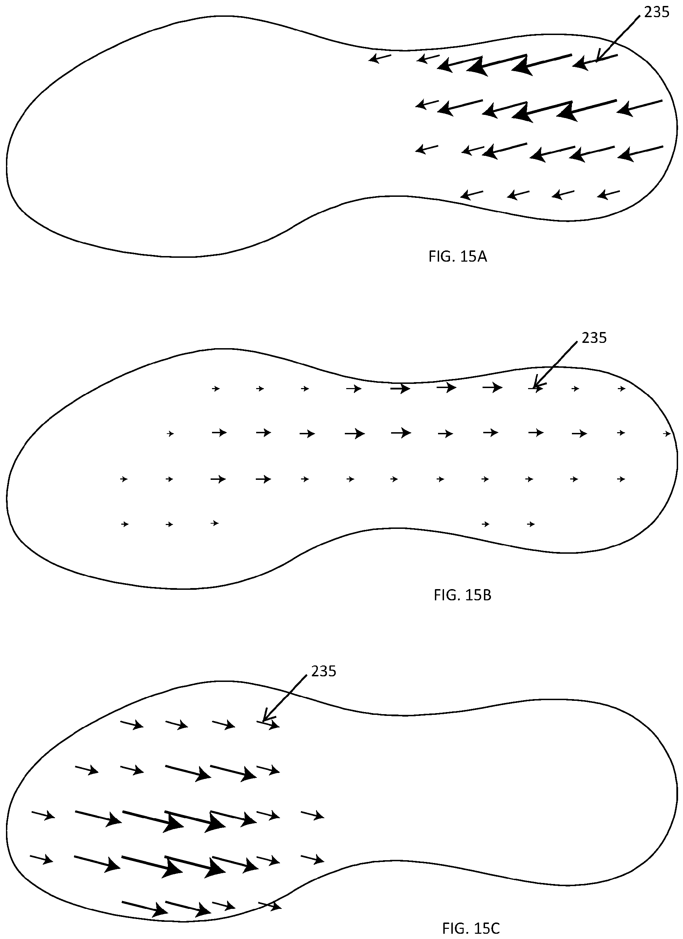

FIGS. 14A through 14C show the resulting performance metric vectors **235** calculated using the data of FIGS. 13A through 13C, with the pressure data at each point indicated by the circles **225,** with the length of the vectors **235** representative of the magnitude of the vector. FIGS. 15A through 15C shows the performance metric vectors **235** at the three shown time steps with all other information removed from the figures. Once the performance metric vectors **235** have been calculated for each time step, the final performance metrics at each location over the sole can be determined by summing the individual Performance Metric Vectors at each location for each time step according to the following function:

$$\text{PMV}_{\text{aggregate}} = \text{Sum of } [C_2 \times \text{PMV}\{t_1, t_2, t_3, \dots t_N\}]$$

Where $C_2$ is an appropriate multiplication/adjustment factor.

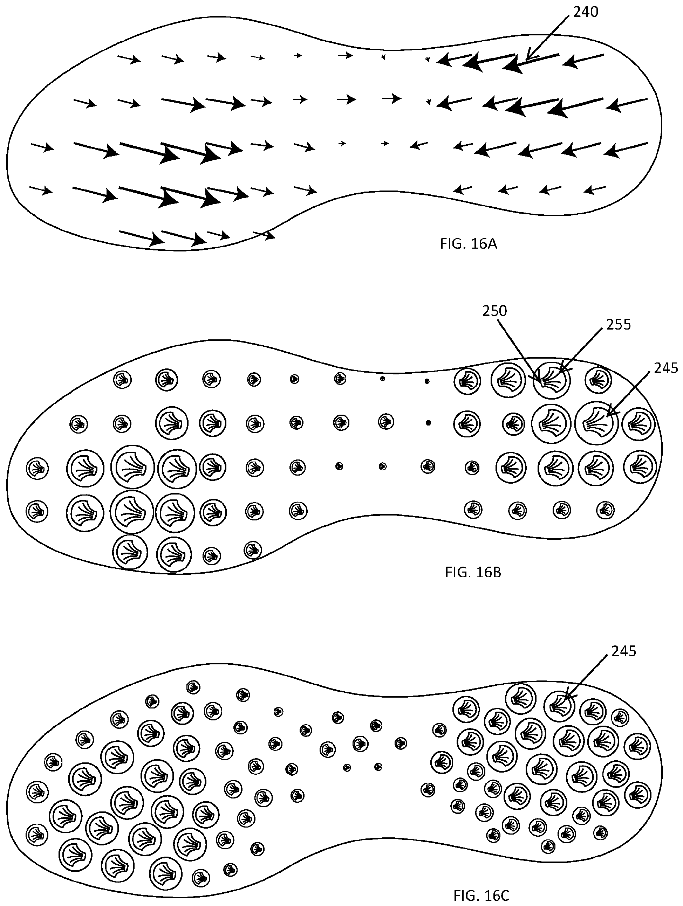

The resulting distribution of performance metric vectors (PMV) can be seen in FIG. 16A, with each vector **240** representative of the sum total of the performance metric vectors at each time step at that location on the sole. These vectors **240** provide an indication of the magnitude and direction of the horizontal component of the interaction between ground **145** and foot **135** over the course of the ground contact event.

Correction factors $C_1$ and $C_2$ can be used to weight and/or adjust the results to ensure that the resulting performance metric vectors are representative of the performance characteristics of importance in the analysis. For example, correction factors may be used to ensure that the results at each location focus on the magnitude and direction of the vectors during peak loading of the sole at that location while filtering out magnitude and direction results during low loading time periods of the ground-strike event. Alternatively, no correction factor may be required.

Once the performance metric vectors have been generated, this information can be utilized to determine a structural characteristic of at least a portion of a sole of an article of footwear for the user based on the performance metric. For example where the footwear is to be customized to improve traction during a ground contact event, the performance metric vectors can be used to orient and distribute traction elements over the surface of an outsole or ground contacting midsole portion of a shoe (or portions thereof), with the size, shape, and/or distribution of the traction elements dependent upon the magnitude of the performance metric vectors in a specific region of the outsole. Example outsoles for an article of footwear including customized traction elements **245** based on the performance metric vectors **240** of FIG. 16A can be seen in FIGS. 16B and 16C.

In FIG. 16B, the traction elements **245** are arranged in a regular pattern corresponding to the locations of the pressure sensor elements **180** utilized during the measurement of the input parameters. As shown in FIG. 16C, the traction elements **245** can be located in any regular or non-regular pattern independent of the specific locations of the pressure sensor elements **180** utilized during the measurement of the input parameters.

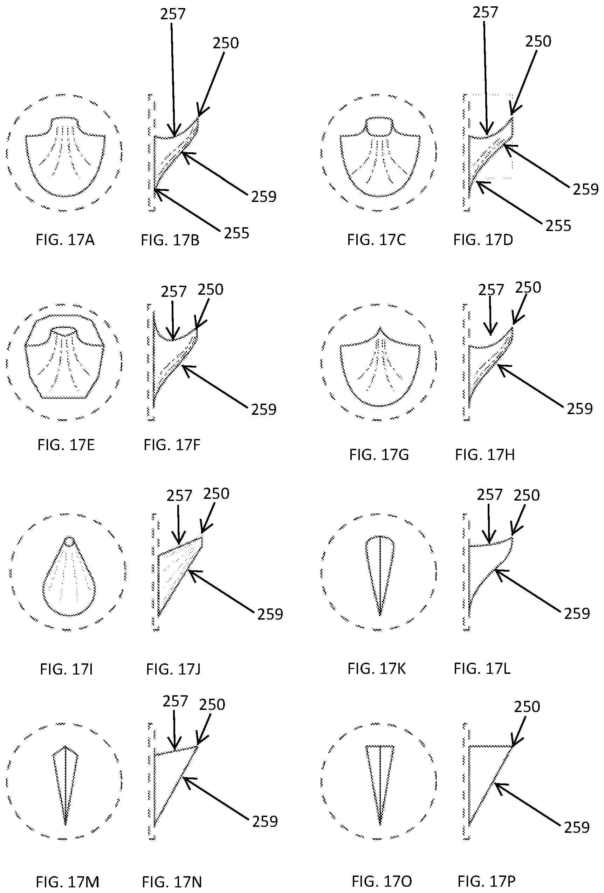

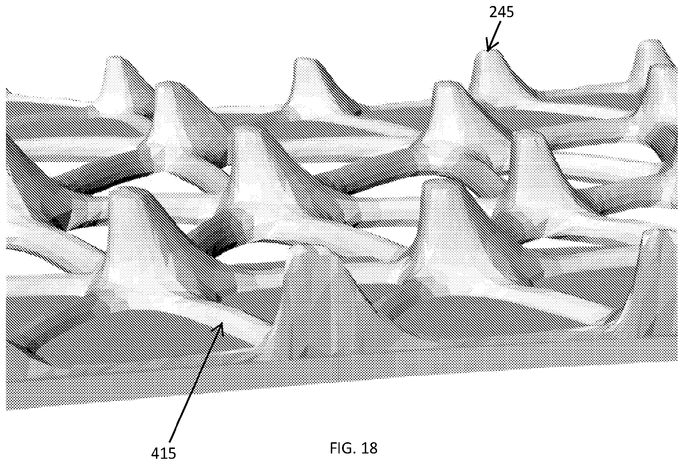

The traction elements **245** may be asymmetrically constructed such that they include a leading edge **250** and a trailing edge **255,** with the traction provided by the traction elements **245** being optimized when oriented such that the leading edge **250** is perpendicular to the direction of the performance metric vectors, hereby providing customized and optimized traction in the direction most important to the performance of the specific athlete. Various example directionally oriented traction elements **245** are shown in FIGS. 17A through 18, with each traction element **245** having a preferred orientation with a leading edge **250** (either an elongate edge or a point) oriented in the direction of the performance metric vectors for a specific athlete.

The traction elements **245** can include an undercut **257** which is designed to produce a sharper leading edge **250,** thereby improving traction in the direction facing the leading edge 250. The size and shape of the undercut **257** can also affect and control the flexibility of the traction elements **245** during ground interaction, with a larger undercut **257** producing a thinner, and therefore more flexible, traction element **245** (for the same configuration of sloped back portion **259**). The traction elements **245** can include a sloped back portion **259,** which can potentially reduce the traction produced by the traction element **245** in the direction facing the sloped back portion **259**. As a result, traction can be customized to produce greater traction in certain directions (e.g., the directions associated with the ground interaction at various locations on the foot throughout a foot-strike event, while reducing traction, and therefore reducing friction, in directions in which high traction is not required and in fact may be detrimental to performance. Careful shaping of the traction elements **245** can also allow for minimization of the material used (and therefore the weight of material required) without compromising the performance of the traction elements **245.**

The traction elements **245** can be customized such that the size of the traction elements **245** varies depending upon the magnitude and/or direction of the performance metric vector in that region. Alternatively, or in addition, the number of traction elements **245** can vary depending upon the magnitude and/or direction of performance metric vectors in that region with, for example, a larger number of traction elements **245** clustered in regions having high magnitudes of performance metric vectors. Any appropriate distribution of traction elements, tread patterns, and/or spike patterns, and traction element/tread/spike orientation, shape, and/or configuration, can be utilized to customize the outsole, depending upon the specific performance characteristics required of the athletic activity at issue and/or the athletes aesthetic and/or performance preferences.

Different and/or additional methods of processing the input parameter information to obtain performance metric information may be used in customizing a shoe. For example, rather than providing separate performance metric vectors for each measured location on the sole of the foot, the information can be averaged over a number of predetermined zones (e.g., a heel zone, a midfoot zone, and a forefoot zone) with different performance metric vectors, and therefore different sizes and orientations of traction elements, for each different zone, and with the same orientation and size of traction element being distributed throughout an individual zone. This may be achieved, for example, by using the raw pressure distribution data at each time step to estimate a center of pressure for that time step, and then generating a vector using the centre of pressure data for each time step to provide the center of pressure vector for a footstrike for an individual athlete. As with the distributed pressure data, the center of pressure data can differ greatly for different athletes and can therefore provide valuable differentiating information to allow for the customization of the footwear for a specific athlete.

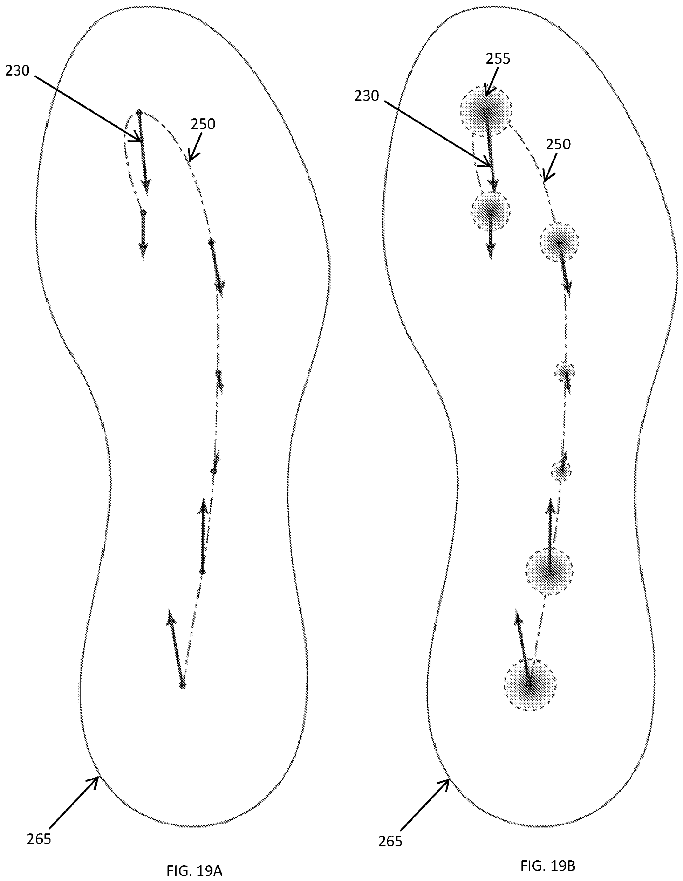

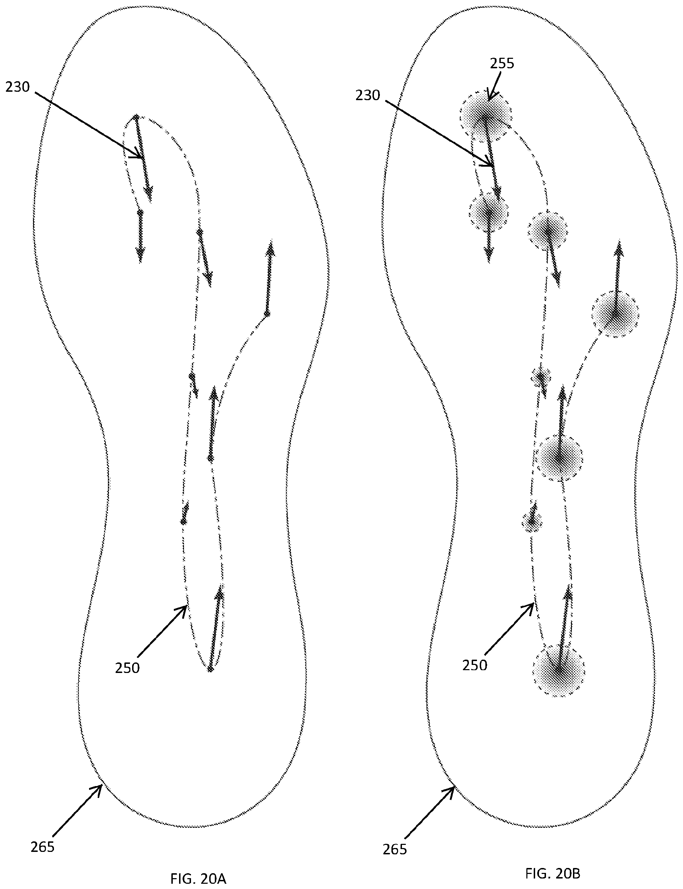

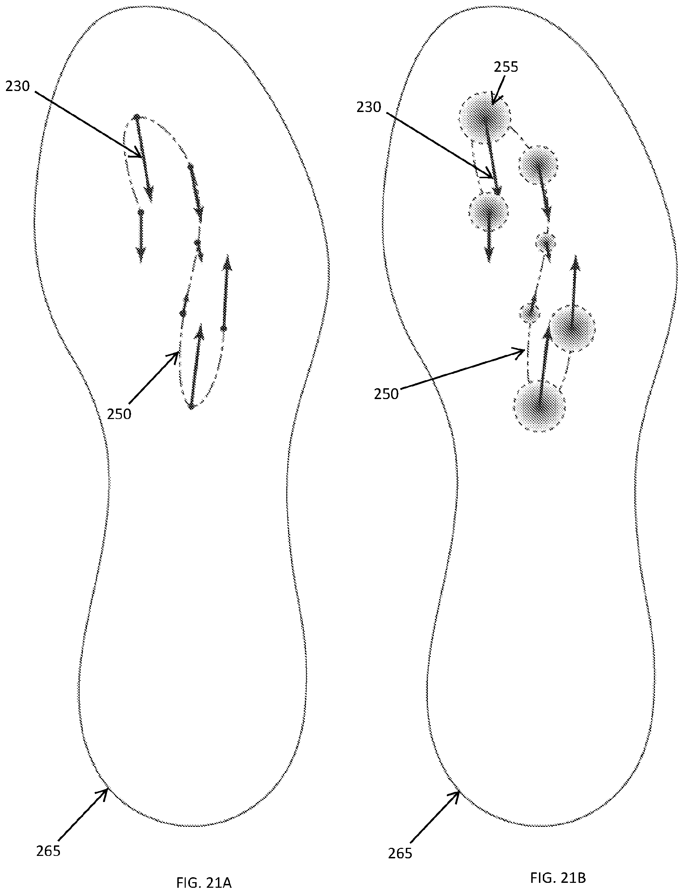

Example schematic center of pressure vectors **250** for various footstrike types can be seen in FIGS. 19A through 21B, with a center of pressure vector **250,** along with representative force vectors **230** and summed pressure measurements **255** shown for a heel striker (FIGS. 19A and 19B), a midfoot striker (FIGS. 20A and 20B), and forefoot striker (FIGS.

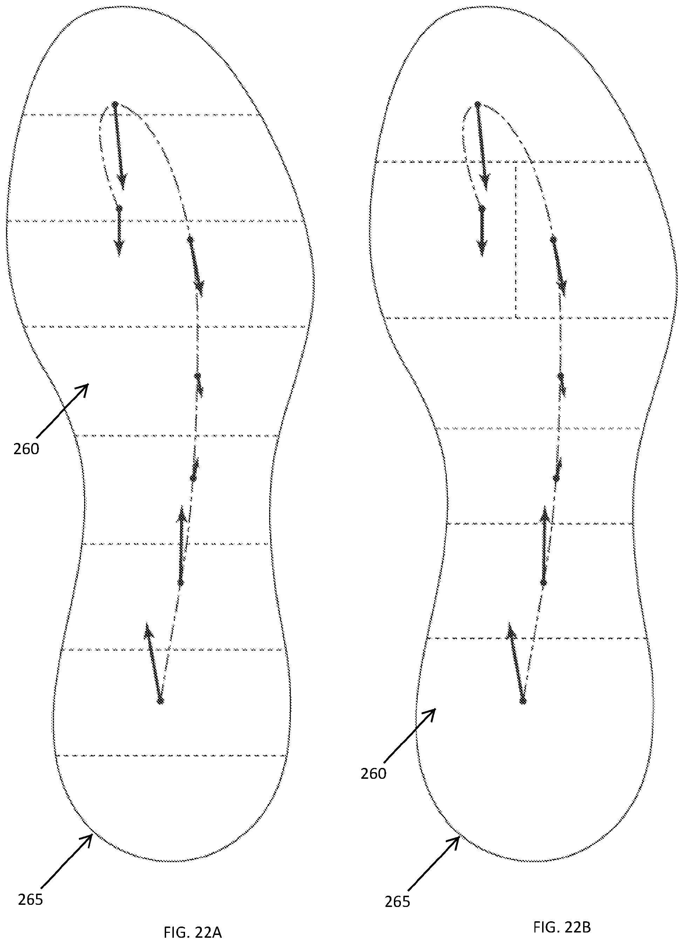

21A and 21B). Example zones **260** into which the performance metric vectors for each location along the center of pressure vector **250** are utilized in the customization process can be seen in FIGS. 22A and 22B, with FIG. 22A showing a sole **265** divided into eight separate zones **260** divided equally along the length of the sole **265,** and FIG. 22B showing seven zones **260** of differing lengths and shapes covering the sole **265.** Any distribution of zones **260** may be utilized depending upon the level of customization required.

The performance metric information (e.g., performance metric vectors) may be further analyzed to determine the specifics of the distribution of traction elements within the outsole. Example geometrical and mathematical modeling techniques that may be utilized to analyze the input parameters and/or performance metric information to design the customized footwear elements may include, but are not limited to, circle packing, Delaunay triangulation, and/or Voronoi decomposition (or Voronoi tessellation/Voronoi diagrams).

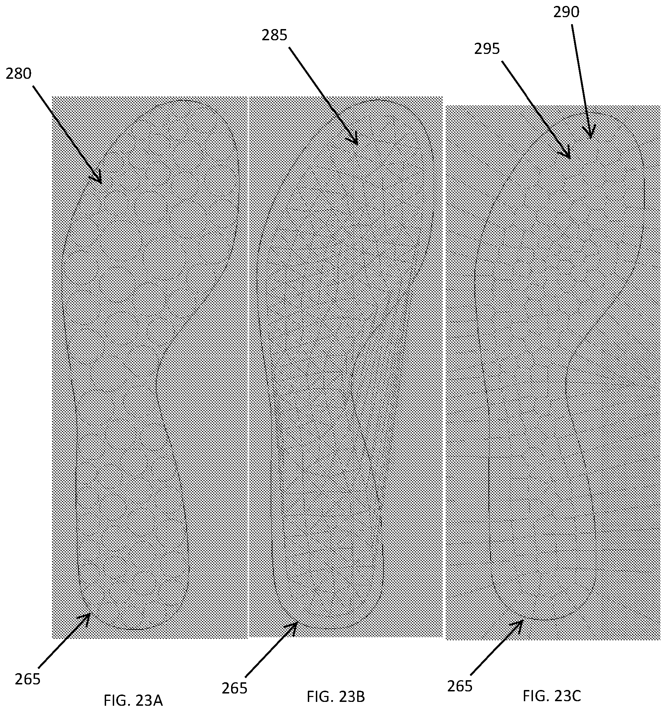

An example analytical method, as shown in FIG. 23A, includes the use of circle packing, whereby an arrangement of circles **280** of equal or varying sizes on a given surface (e.g., a shoe sole **265**) can be optimized such that no overlapping occurs and so that all circles **280** touch another. The number of circles, the size of the circles (either uniform or of differing sizes), and the localized distribution of the circles can be controlled depending upon the specific requirements of the system. Performance metric information (e.g., the magnitude of the performance metric vectors at various locations throughout the sole) can be used as an input to the circle packing algorithm, with the magnitude of the performance metric vectors in a given region controlling the size and/or number of circles **280** in that region. Using control inputs such as, but not limited to, the number of circles **280** to be distributed throughout the sole **265** and/or the maximum and minimum size of the circles to be distributed throughout the sole **265** as additional inputs allows the circle packing algorithm to process the performance metric information to generate an optimized distribution of traction elements **245** based on the specific inputs provided with, for example, a traction element **245** positioned at the center of each circle **280.**

Another analytical method, as shown in FIG. 23B, includes the use of Delaunay triangulation to distribute the traction elements **245** at optimal positions within the sole **265** through optimized triangulation of the input parameter data and/or performance metric data. In this analytical method, the raw input parameter data and/or performance metric data can be utilized to create a plurality of triangles **285** optimally distributed through the sole **265,** with traction elements thereafter located at the central apex of each triangle **285.** Another, related, analytical method includes the use of a Voronoi tessellation, which is a method of dividing space into a number of regions where a plurality of points (otherwise known as seeds, sites, or generators) is specified beforehand and where the algorithm results in the utilization of the seed point to generate a plurality of Voronoi vertices or nodes **290,** which represent points equidistant to three (or more) sites. Utilization of input parameter data and/or performance metric data as control elements for the Voronoi tessellation algorithms allows for the creation and distribution of Voronoi cells **295** (the region between nodes) that can be optimized to identify locations for traction elements **245.**

In addition to using experimental data representative of a performance characteristic of the foot and/or physical characteristics of a foot of the user as input parameters, aesthetic and/or performance based preferences of an athlete can be used to assist in the customization of the footwear. For example, the importance of elements such as, but not limited to, the size, distribution, and shape of traction elements, the level of traction required, the durability of the footwear, the flexibility of the footwear, and/or the weight of the footwear may vary from athlete to athlete. As a result, examples described herein may allow for an athlete to control the design of the customized footwear depending upon the relevant importance of various controllable user preference-based input parameters or selection criteria. The experimental performance data and/or the physical characteristic data may be used to create a baseline customized sole with traction elements distributed to optimize traction for specific user. This baseline customization can then be modified to account for user preferences, for example by reducing the size of the traction elements and/or creating voids between traction elements to reduce weight (where low weight is more important to the athlete than improved traction) or to vary the shape, size, and distribution of the traction elements where one specific traction element type is considered more comfortable, better performing, and/or more aesthetically pleasing to an athlete. Different traction element and spike shapes may be selected depending upon underfoot conditions and surfaces, weather conditions, and/or athletic activity being performed. In addition, as straight running and running around a curve produce different performance metrics for an athlete and each shoe of the athlete, an athlete can select, as an input parameter, the extent to which the traction element distribution and orientation is weighted by the straight running input parameter data and the curved running input parameter data. Different performance requirements and traction requirements may be needed or preferred for different races (e.g., for a sprint, a middle distance event, a long distance event, a hurdling event, etc.)

A shoe may be adapted to receive detachable and interchangeable outsole elements (e.g., outsole spike plates) or ground contacting midsole element, allowing the traction of the shoe to be adjusted by replacing the outsole elements depending upon the specific requirements of the athlete. For example, an athlete may have a number of different outsole elements customized for various weather conditions, underfoot conditions, races, and other relevant parameters, with the athlete free to select the most appropriate plates for a specific event.

The customized physical characteristic of the outsole of the footwear may include, or consist essentially of, a tread pattern, with the specific pattern shape and orientation customized to address the specific performance metric information and user preference information of a specific athlete.

The weight can be reduced by removing material from carefully selected regions of the outsole through the creation of cavities or voids. The voids may be placed strategically to only be located in regions where less significant traction is needed (such as in the midfoot region for a heel striker) and/or in regions where the addition of voids would not adversely affect the structural integrity of the outsole. The creation of voids and/or cavities can also create regions of increased flexibility, which may beneficially affect the performance of the footwear for some athletes.

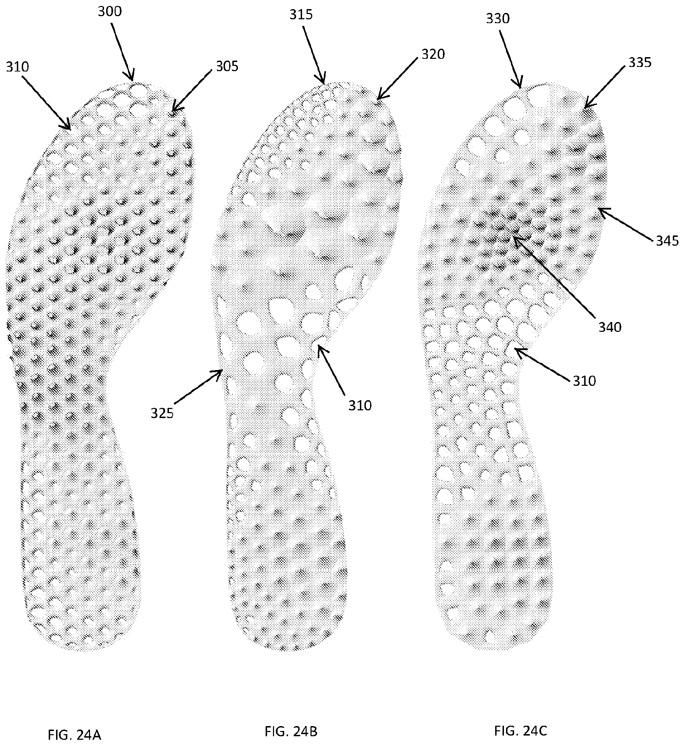

Example configurations of footwear outsoles, and more particularly outsole plates for a track spike shoe, are shown in FIGS. 24A through 24C. Each of the three plates shown is generated from the same input parameters and performance metrics, with the variations in the finished designs and configurations based upon the selection of different user preferences. In FIG. 24A, for example, the plate **300** is designed with regularly distributed traction elements **305** and voids **310,** with the size of each traction element **305** based on the magnitude of the performance metric data in that region. In addition, the user preference is set with traction being a relatively important factor while weight reduction is of lesser importance, resulting in a greater number of traction elements **305** and a fewer number of weight reducing voids **310.**

In FIG. 24B the plate **315** is designed with irregular traction element **320** and void **310** distribution, with the size of the traction elements **320** relating directly to the magnitude of the performance metric data in that region, and with more emphasis being place on low weight and higher flexibility, resulting in a greater number of voids, especially within the midfoot region **325.** In FIG. 24C the plate **330** is designed with irregularly distributed traction elements **335,** with the traction elements **335** clustered together in a tighter formation in regions having a high magnitude of performance metric data (such as in the central portion **340** of the forefoot region **345.**

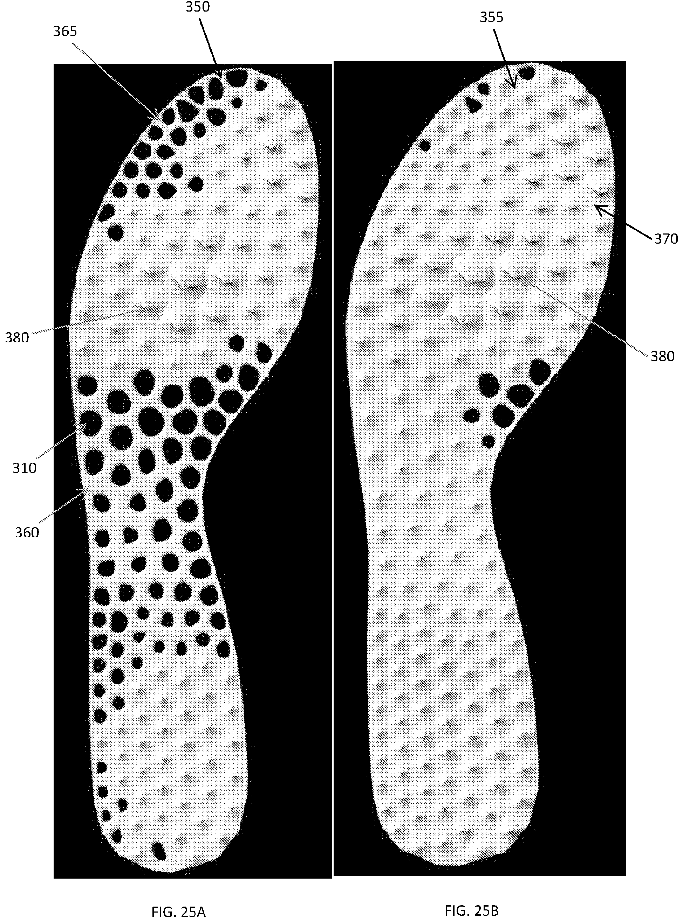

Further examples of variations in customized design based on variations in user preference criteria for a single set of input parameters and performance metrics can be seen in FIGS. 25A to 25E. For example, FIGS. 25A and 25B show two plates (**350**, **355**) with identical input parameters and performance metrics but with the plate **350** designed to lower weight (by increasing void **310** distribution and size, especially within the midfoot region **360** and the outer edge **365** of the forefoot region **370** where the magnitude of the performance metric data is lower), while plate **355** is designed with traction being set as a more important parameter than weight reduction (resulting in fewer voids **310** and more traction elements **380**).

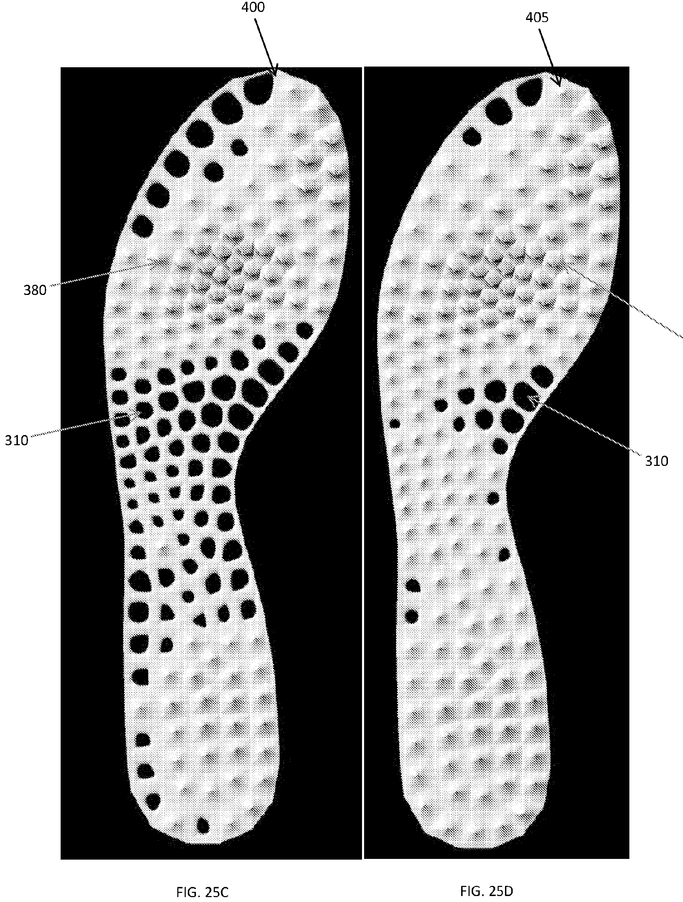

Similarly, FIGS. 25C and 25D show plates (**400**, **405**) having a different design configuration for the same input parameters and performance metrics as in FIGS. 5A and 25B, with the size of the traction elements **380** of the plates (**400**, **405**) limited to a set size smaller than that allowed in FIGS. 25A and 25B, and with the traction elements **380** clustered closer together in regions having large magnitude performance metric data. The plates (**400**, **405**) are again designed to have the same characteristics but with the plate **400** emphasizing low weight over high traction, and with the plate **405** emphasizing traction to a greater extent that the plate **400,** resulting in fewer voids **310.**

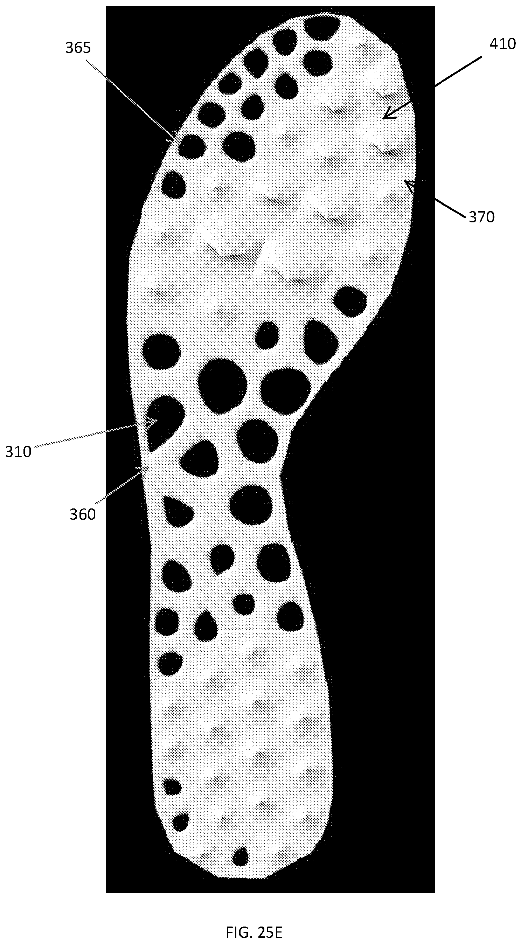

FIG. 25E shows another configuration of outsole plate **410** designed using the same input parameters and performance metrics as in FIGS. 5A and 25D. The selection criteria may have been set to reduce the number of traction elements **380** but to allow for significantly increased size of traction element **380** in regions corresponding to a larger magnitude of performance metric results. Again, the selection criteria has been set to reduce weight by increasing void **310** distribution and size, especially within the midfoot region **360** and the outer edge **365** of the forefoot region **370** where the magnitude of the performance metric data is lower. Distributions of traction elements **380** and voids **310** can be controlled by a number of selection criteria relating to a number of performance and aesthetic aspects, such as, but not limited to, traction element and/or void size, shape, distribution, number, and/or size variation.

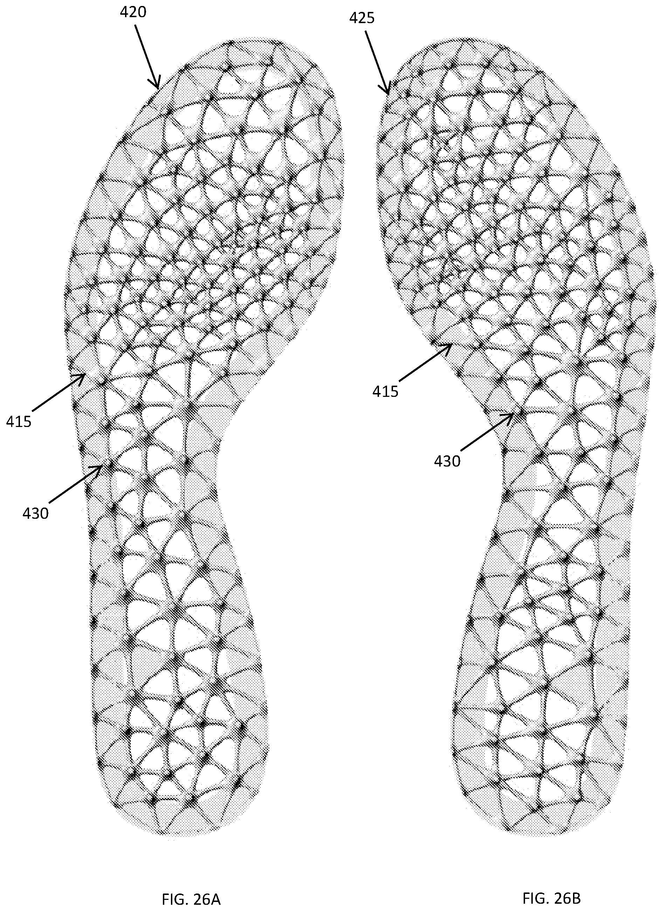

As shown in FIGS. 24A to 25E, the sole plate including the traction elements can be formed as a plate-like structure with traction elements extending from the plate and voids or cavities formed within certain portions of the plate. As shown in FIGS. 26A to 31B, the sole plate can be formed as a plurality of traction elements with a web-like structure of interconnection elements (e.g., bars) **415** connecting the traction elements. The plate can be formed in any appropriate manner having the necessary structural requirements to meet the performance demands of the wearer.

FIGS. 26A and 26B show plates (**420, 425**) designed using the same user selection criteria (e.g., traction element shape, size, distribution, etc.) and the same plate structure (with bars **415** connecting individual traction elements **430** in web-like or lattice structure) but with input parameters (e.g., pressure and force data) and performance metrics (e.g., analyzed and processed input data based on a preselected algorithm) from two different athletes. As can be seen, the algorithms used to process the input parameters, even for the same user selection criteria, produce different traction element **430** distributions due to the different input parameters generated by different athletes. The addition of a web-like structure with bars **415** or other elongate elements allows for the incorporation of structural elements designed to provide controlled stability, flexibility/stiffness, support, and/or protection depending on the shape, thickness, and orientation of the elongate elements.

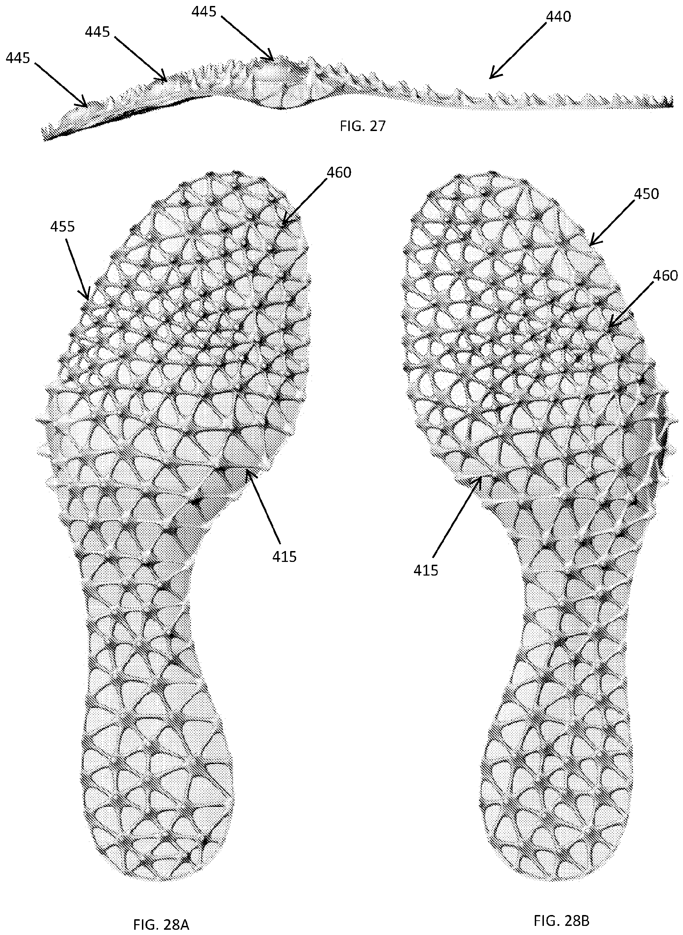

An outsole plate for a track spike-type running shoe can be formed with mounting elements allowing detachable spikes to be mounted to the plate to provide further traction in addition to the traction elements integrally formed with the plate. These mounting elements may be of any size, shape, and configuration, depending on the specific spikes and spike configuration required. Any number of spikes can be mounted to the plate, with 3, 4, 5, or 6 spikes being utilized by many

**EP 3 310 201 B1**

track athletes. An example outsole plate **440** for a track spike-style shoe with mounting elements **445** for track spikes is shown in FIG. 27.

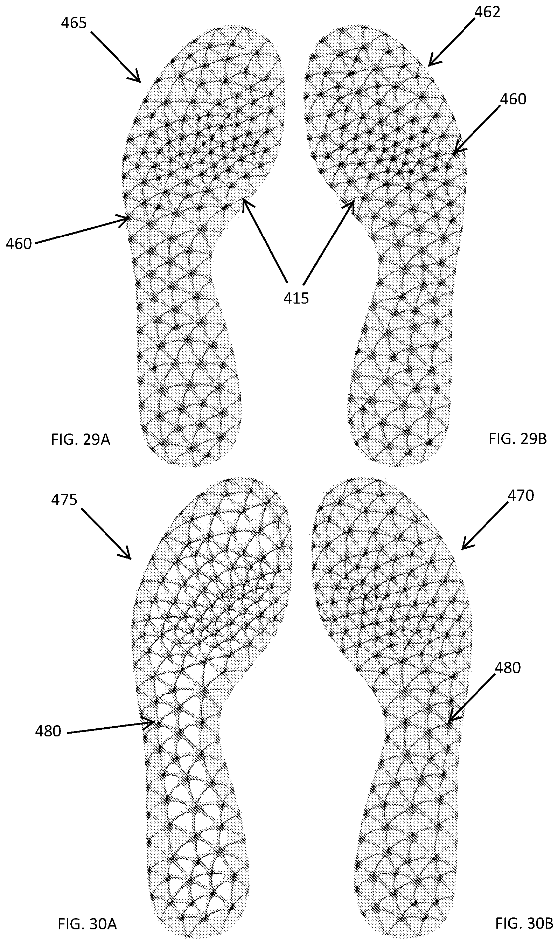

Plates can be formed to account for the different ground interactions between the ground and the shoe for both a left foot and a right foot while an athlete runs around a curved track. Example plates for a left shoe **450** and a right shoe **455** can be seen in FIGS. 28A and 28B, with the different input parameters (e.g., pressure and force data) for each foot resulting in different traction element **460** configurations for each plate. A pair of shoes specifically adapted for running around a curved track could include both customized sole plates and specially designed, and potentially customized, uppers, such as the uppers described in U.S. Patent Publication No. 2010/0229426. Another pair of outsole plates (**462, 465**) designed from input parameters taken during curved track running can be seen in FIGS. 29A and 29B, with the results calibrated for a different sole plate shape to that of FIGS. 28A and 28B, and for a different athlete's input parameters. The processing algorithms may be designed to distribute traction elements and/or voids in the surface of any shape of plate or outsole, depending upon the specific shape of the shoe.

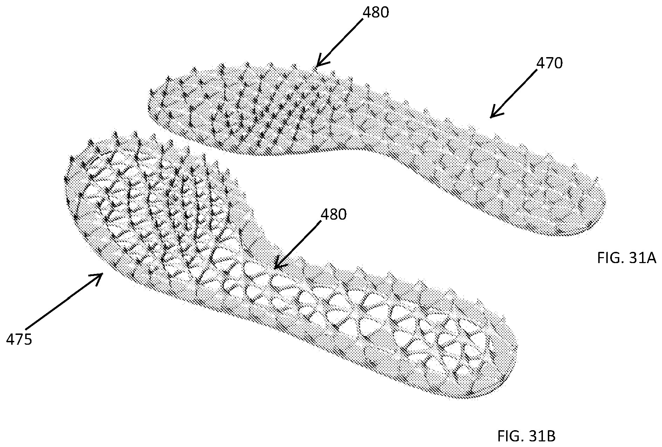

A pair of outsole plates (**470, 475**) utilizing input parameter measurements taken during straight running is shown in FIGS. 30A through 31B, with a left foot plate **470** and a right foot plate **475** shown in both plan view and perspective view. As shown in FIGS. 31A and 31B the plates (**470, 475**) may be formed as substantially flat structures with traction elements **480** extending therefrom. In one example described herein, such as the soleplate **440** shown in FIG. 27, the plates can be manufactured with a curved or angled profile to allow the plate to mate to a shoe sole, or a portion thereof (e.g., an outsole having a curved or angled lower surface profile). Any appropriate shape of sole plate or outsole element may be designed.

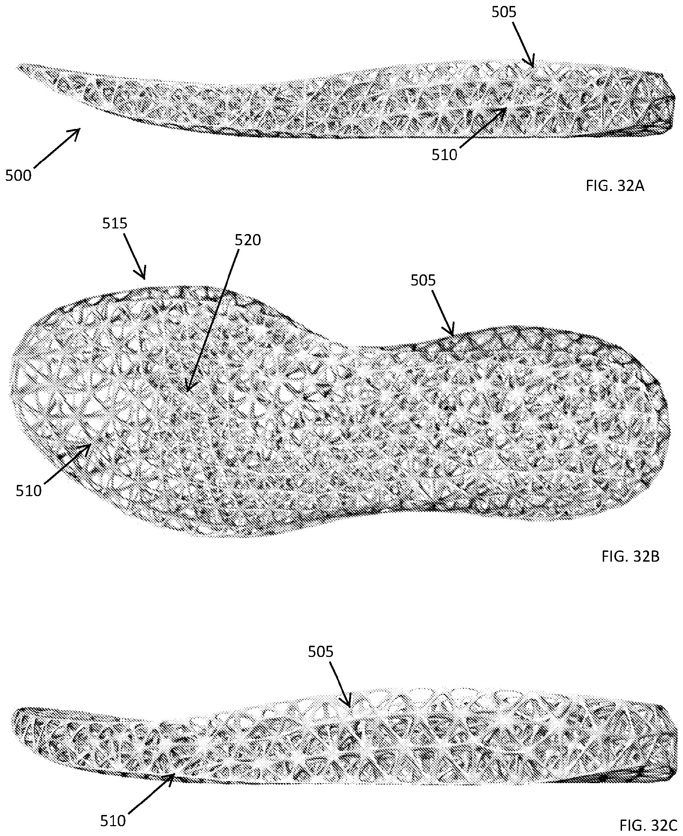

The input parameters maybe utilized to determine performance metrics that can be used to design a customized midsole or a customized midsole component (e.g., a heel cup and/or forefoot drop-in component) in addition to, or in place of, a ground contacting structure with traction elements. An example midsole designed from analysis of pressure and force measurement input parameter data can be seen in FIGS. 32A to 32C. A midsole **500** may be formed as a lattice or web-like structure with a plurality of elongate elements **505** extending between nodes **510**. The distribution of elongate elements **505** and nodes **510** within the lattice structure is determined by the performance metric data obtained from the input parameters of a specific athlete and the selection criteria of that athlete. More particularly, the elongate elements **505** and nodes **510** can be arranged to provide areas of increased or decreased support, increased or decreased cushioning, and/or increased or decreased stability in different regions of the midsole **500**.

In FIGS. 32A through 32C the lattice structure is arranged such that more nodes **510,** with shorter elongate elements **505** are positioned in regions of high performance metric values, thereby providing additional structural support in those regions, such as in the central forefoot region **515** proximate the position of the metatarsal heads of the athlete **520**. The properties of the lattice structure can be controlled by specifying various aspects of the structure such as, but not limited to, the length of each elongate element **505,** the thickness of each elongate element **505,** the density of each elongate element **505,** and/or the material(s) for each elongate element **505**. In addition, properties such as, but not limited to, the size, shape, density, and/or material(s) of the nodes **510** may also be controlled to ensure certain performance characteristics of the midsole **500** are met. In FIGS. 32A through 32C the elongate elements **505** and nodes **510** form triangular structures. Alternatively, any appropriate structural formation may be utilized. Elongate elements **505** and nodes **510** may form a plurality of polyhedron shapes such as, but not limited to, tetrahedrons (i.e., a polyhedron having four triangular faces), cubes, octahedrons, dodecahedrons, icosahedrons, etc. For example, a midsole **500,** or a portion thereof, may be formed from a matrix of elongate elements **505** forming a plurality of tetrahedron shaped "cells". The relative size, shape, and structural properties of the cells may be varied throughout the midsole **500** to impart different structural characteristics to different regions of a shoe.

Structures such as the lattice structure of FIGS. 32A through 32C may be beneficial to an athlete in that it allows for the customized design of the sole component (e.g., the midsole or midsole element) to meet the performance requirements of the athlete while also minimizing weight by allowing for an open web-like construction with open cavities between the elongate elements **505** and nodes **510**. The lattice structure may be left as an open structure. A material (e.g., lightweight foam) may be injected into the lattice structure to fill the open cavities, thereby providing additional structural support.

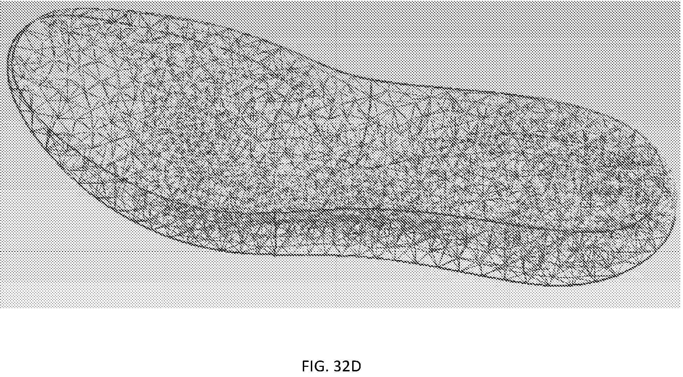

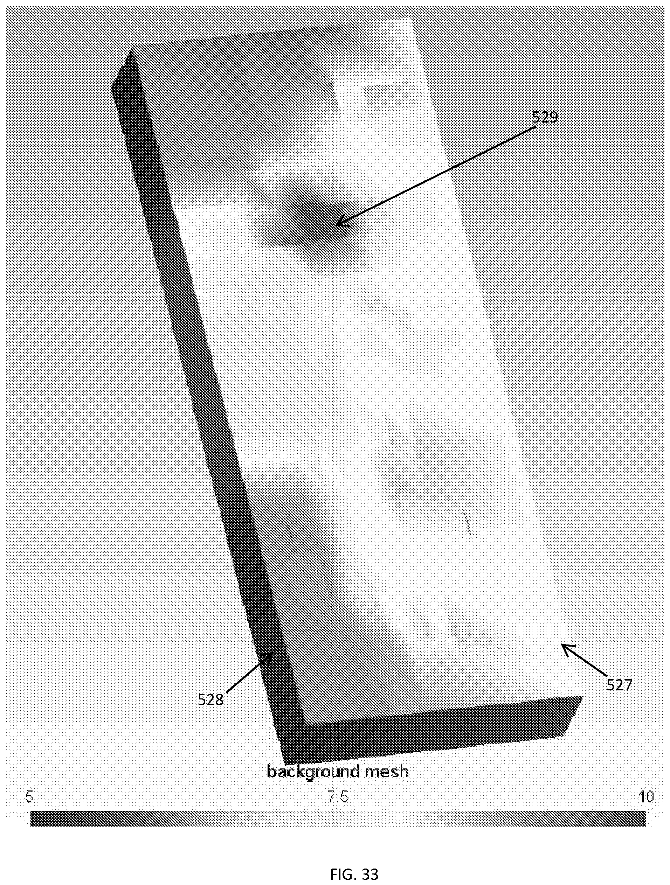

The design of the midsole lattice structure may be created through processing of the performance metric data by mathematical algorithms such as, but not limited to, circle packing, Delaunay triangulation, volumetric meshing, and/or Voronoi decomposition. An example structural construct for a midsole using Voronoi decomposition to analyze performance metric data for an athlete is shown in FIG. 32D, with the performance metric data, represented as a scalar hexahedron pressure mapping distribution, for calculating a midsole mesh used in the analysis shown in FIG. 33. The pressure distribution within a volumetric representation of the sole of an article of footwear may be represented by a contour map **527,** with high pressure regions **528** and low pressure regions **529** distributed about the volume according to the pressure measurements taken for a particular athlete.

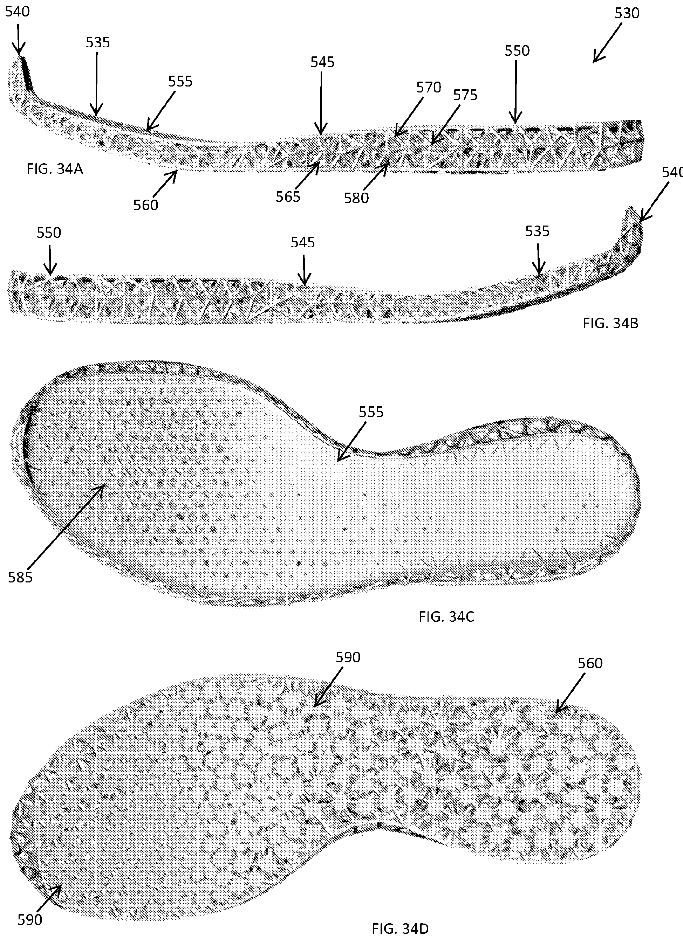

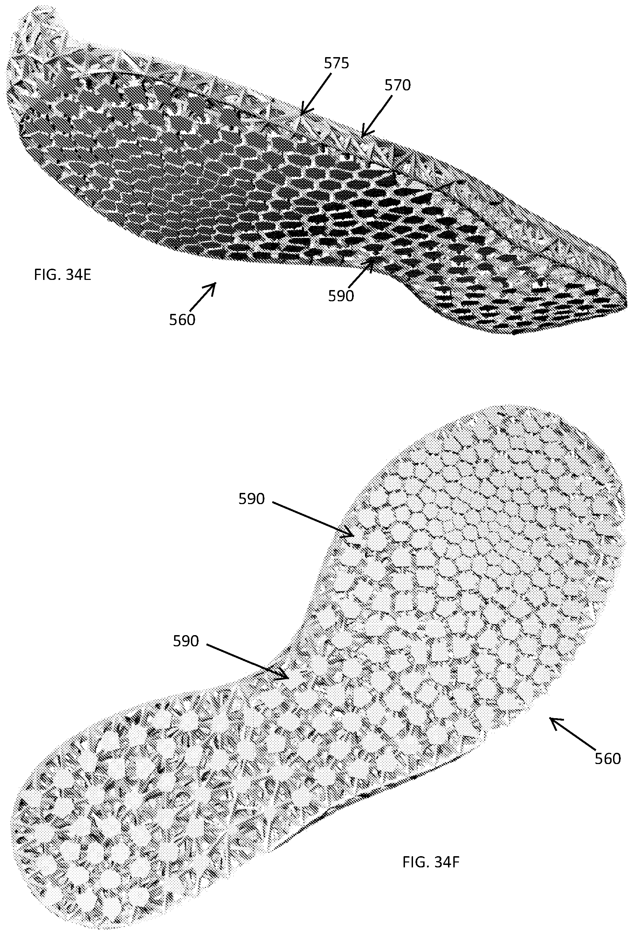

Another example midsole designed and constructed according to the methods and systems described herein is shown in FIGS. 34A to 34F. The midsole **530** may include a forefoot region **535** having a wrapped toe section **540,** a midfoot region **545,** and a heel region **550**. The midsole **530** further includes an upper surface **555** for engaging an upper of a shoe

16

and a lower surface **560** for engaging an outsole of a shoe and/or for providing a ground contact surface (without the need for providing an additional outsole element, or elements). The midsole **530** further includes a side wall **565,** which may be exposed when assembled into the finished shoe or which may be fully or partially covered by a clear or opaque covering element when assembled into the finished shoe. The structure of the midsole **530** includes a plurality of elongate elements **570** joining at a plurality of nodes **575,** with the combined elongate elements **570** and nodes **575** forming a plurality of open triangular structural segments **580.** As discussed above, the specific arrangement of elongate elements **570** and nodes **575** can be customized based on the specific performance metrics for a given athlete, with the midsole **530** thereby providing customized cushioning, support, and flexibility (and other possible performance benefits) for a specific athlete.

Any appropriate skin, covering, and/or encapsulate may be added to the structure after formation to provide an outer surface covering for the structure, or portions thereof. This may provide protection for the structure, prevent clogging of the structure with mud, water, etc., provide additional structural properties to the structure, and/or provide unique aesthetic elements to the structure. Skins/coverings may be manufactured from any appropriate material such as, but not limited to, thermoplastic polyurethanes (TPU's), thermoplastic elastomers (TPE's) and/or knitted, woven, or non-woven textiles.

The upper surface **555** may be glued, stitched, or otherwise attached to an upper of a shoe and, for example, to a strobel board for an upper of a shoe. An insole may be placed above the midsole **530** in a finished shoe to provide a separate layer between the midsole **530** and a foot of a wearer of the shoe. A strobel board positioned above the upper surface **555,** to which the upper surface **555** may be attached, provides a material layer in between the midsole **530** and the foot of the wearer in addition to, or instead of, a separate insole component. Alternatively, the upper surface **555** may be attached to the upper only at the edges, with no strobel board, insole, or other material layer coming between the midsole **530** and the foot of a wearer of the finished shoe.

In FIGS. 34A to 34F the upper surface **530** includes a plurality of voids **585,** which can reduce the weight of the midsole **530** and provide for breathability between the midsole **530** and an upper of a shoe. The voids **585** may be arranged in any particular pattern and be of any appropriate shape, depending upon the specific performance, breathability, and weight requirements of the footwear. The location, size, and shape of the voids **585** can be determined based upon the specific performance metrics of an athlete, thereby providing a customized breathability and load distribution plate. The upper surface **555** may not have any voids **585** therein, which may be beneficial, for example, in providing additional surface area onto which the upper can be bonded and may also be beneficial where additional breathability is not desired or necessary (e.g., in waterproof footwear). The shape of the upper surface **555** may be contoured specifically to the foot shape of a given athlete, thereby providing a customized fit for the athlete.

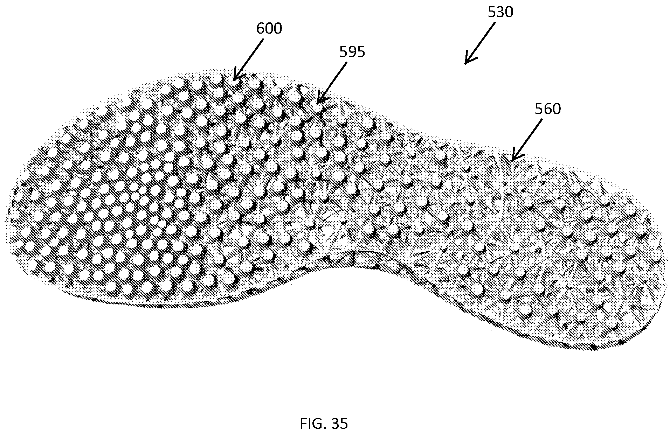

The lower surface **560** of the midsole **530** includes a plurality of flattened lower contact surfaces **590** which can provide a surface onto which one or more outsole elements may be affixed (e.g., by gluing), or which can provide a direct ground contact surface for the midsole **530.** The shape, size, and configuration of these lower contact surfaces **590** may be standardized or may be customized through analysis and application of an individual athletes input parameters, performance metrics, and/or selection criteria. The lower surface **560** can be a solid, void free surface. In another example described herein, a midsole **530** has a plurality of traction elements **595** extending from the bottom surface **560,** as can be seen in FIG. 35. In this example, the bottom surface **600** of the traction elements **595** provides a direct ground contact surface for the midsole **530,** thereby allowing the midsole **530** to function without the need to add an additional outsole element.

The input parameters and algorithms may be utilized to design an insole for a shoe, with the insole customized to the specific physical characteristics of the athlete and the structure of the insole designed to provide a customized feel and/or performance characteristic for the athlete. The methods and systems described herein could be used to design and manufacture any outsole, midsole, and/or insole structures and components such as, but not limited to, full outsoles, midsoles, and/or insoles, inserts for placement within an outsole, midsole, and/or insole (e.g., within the forefoot, midfoot, and/or heel of the shoe and/or in the medial side, lateral side, and/or central section of the shoe. The systems and methods described herein can be utilized to create customized uppers and/or upper portions in addition to, or instead of, the customized sole elements.

An example shoe **610** including a sole **615** and upper **620** manufactured as a single unitary structure in accordance with the methods and processes described herein is shown in FIGS. 35A to 35E. The sole **615** may include a midsole **625** formed from a plurality of adjoining circular elements **630** spaced apart to form an open web-like structure. An upper **620** is integrally formed with the sole **615** to create a unitary structure forming the shoe **610,** with the upper **620** including linked mesh-like portions **635** forming the majority of the upper **620,** including the tongue **640,** with support elements **645** providing additional structural support in regions of high strain (e.g., in the midfoot region **650** and a heel region **655).** The customized unitary construction may only form specific regions of the sole and/or upper of a shoe, with additional material and structural elements being attached to the customized structure. The shoe **610** can be constructed with any appropriate closure means, with the closure means formed along with the upper/and/or sole elements or attached to the shoe after formation. Both sides of a hook and loop-type arrangement can be created in an additive manufacturing process, with the resulting hook and loop structure separable after manufacture to provide a closure means.

An upper, or portion(s) thereof, can be formed through methods described herein (e.g., through additive manufacturing) and thereafter heat welded, fused, bonded, or otherwise attached to a textile or other material to form a finished part. A flat shell for an upper can be formed though additive manufacturing and thereafter heat pressed (or otherwise bonded or attached) to a textile to form a finished upper. A shaped mold/heat press form can be created (either with the shell or separately from the shell) which can then be used to ensure that structural definition (e.g., raised portions) of the shell are not lost during heat pressing procedure.

Utilizing the methods and processes described herein any of the elements of the sole **615** and/or upper **620** of the shoe **610** can be customized, based on the specific input parameters, performance metrics, and/or selection criteria of an athlete, to produce a fully customized shoe. For example, the position, size, shape, pattern, structure, and material properties of the support elements **645** can be customized, based on the input parameters of the athlete, to provide support specifically addressing the running style, foot shape, performance requirements, and aesthetic requirements of an athlete. In addition, elements such as, but not limited to, the position, size, shape, pattern, structure, and material properties of the mesh-like portions **635** may also be customized, based on the input parameters of the athlete, to provide support specifically addressing the running style, foot shape, performance requirements, and aesthetic requirements of an athlete. Elements of the sole **615** and/or upper **620** can be formed in any appropriate open or closed structure, having any appropriate dimensions (e.g., shape and size), structure, material properties (e.g., density), to produce the specific performance and aesthetic requirements of an individual athlete.

Any of the sensors and measurements described herein may be used to provide appropriate input parameters for customizing the shoe **610** as a whole, or the sole **615** and/or upper **620** alone (or limited regions thereof), depending upon the specific requirements of the athlete. Factors that the shoe can be customized for include, but are not limited to, the performance and technique of the athlete, the physical structure of the foot of the athlete, injury prevention and/or protection, weight considerations, support considerations, and/or aesthetic considerations. Stress/strain gauges can be placed on an upper of a shoe of an athlete during the measurement of input parameters to identify regions of the upper that are subject to high and low stress/strain during the gait cycle of an individual athlete, with the algorithms and methods described herein using this information to identify regions of a customized upper for that athlete that require more support, and regions of the upper that do not require as much support (and can therefore be constructed from a lighter and/or more flexible material and/or material structure).

Stress/strain data can be gathered through the use of optical camera scanning (or other appropriate scanning or measurement techniques) of the foot/shoe during athletic motion, with markers on the foot/shoe providing identification of relative positioning of portions of the foot, and changes to that relative positioning over time. Analysis of changes in relative position can be used to calculate the stress and strain at each region of the shoe/foot during an athletic motion.

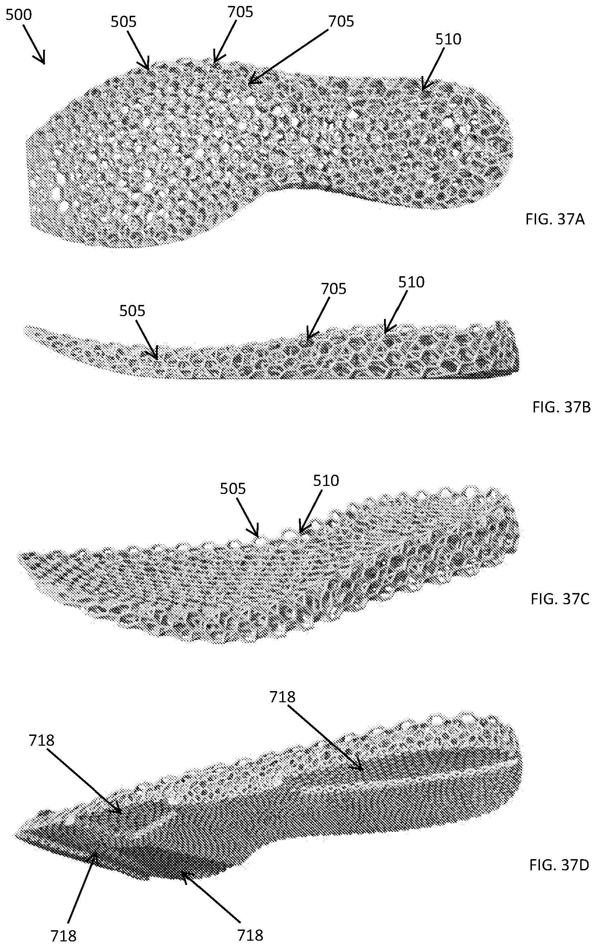

Another example midsole that may be formed using methods and materials described herein can be seen in FIGS. 37A to 37D. A midsole **500** is formed as a lattice or web-like structure with a plurality of elongate elements **505** extending between nodes (connection locations) **510.** The distribution of elongate elements **505** and nodes **510** within the lattice structure may be determined by performance metric data obtained from the input parameters of a specific athlete (or group of athletes) and the selection criteria of that athlete (or group of athletes). Alternatively, the lattice structure may be created more generically to provide standardized support and performance requirements for a category of athletes. The lattice structure (or volumetric mesh structure) may be composed of a matrix including a series of tetrahedrons comprising hexagonal cells **705** which share adjacent elements. A structure may be created by connecting the centerpoint of each face of the tetrahedron to the midpoint of each of the sides.

Polyhedrons or any appropriate size shape and structural relationship may be utilized to form a lattice of cells providing a required level of support, flexibility, cushioning, and other structural, performance, and/or aesthetic parameters to different regions of a shoe sole, or portion thereof, based on performance and aesthetic considerations. Example polyhedrons that may be used to create structural features of a midsole include, but are not limited to, tetrahedrons, truncated tetrahedrons, cubes, truncated cubes, dodecahedrons, truncated dodecahedrons, octahedrons, truncated octahedrons, higher order polyhedrons or truncated polyhedra, and/or prisms of any appropriate number of sides (e.g., triangular prisms, pentagonal prisms, hexagonal prisms, or higher order prisms). An entire midsole, or portion thereof, can be formed from a single polyhedral structure (with varying size, element thickness, etc. being used to impart different structural properties to different regions, if required). A plurality of differing polyhedrons may be incorporated into a single midsole (or portion thereof). Such structures may also be utilized to form other portions of a shoe (e.g., shoe uppers, or portions thereof) and/or athletic apparel, athletic protection/padding, and/or athletic equipment, or portions thereof.

As shown in FIG. 37D, the bottom (or lower) surface **560** of the midsole **500** may include one or more indents **718** into which ground contact elements (e.g., outsole elements) or other structural features may be placed. Other possible structural features may include, but are not limited to, cushioning elements, traction elements, protection elements (e.g., plates), flexion control elements, performance monitoring sensors, etc. One or more indents or cavities may be located at any portion of the midsole (e.g., within a central region, on an upper or lower surface, on a medial and/or lateral side, and/or in a forefoot, midfoot, and/or heel region) to provide a location for one or more structural features to be placed. Traction elements may be constructed directly into the midsole, thereby wholly or partly negating the need for additional separate outsole elements.

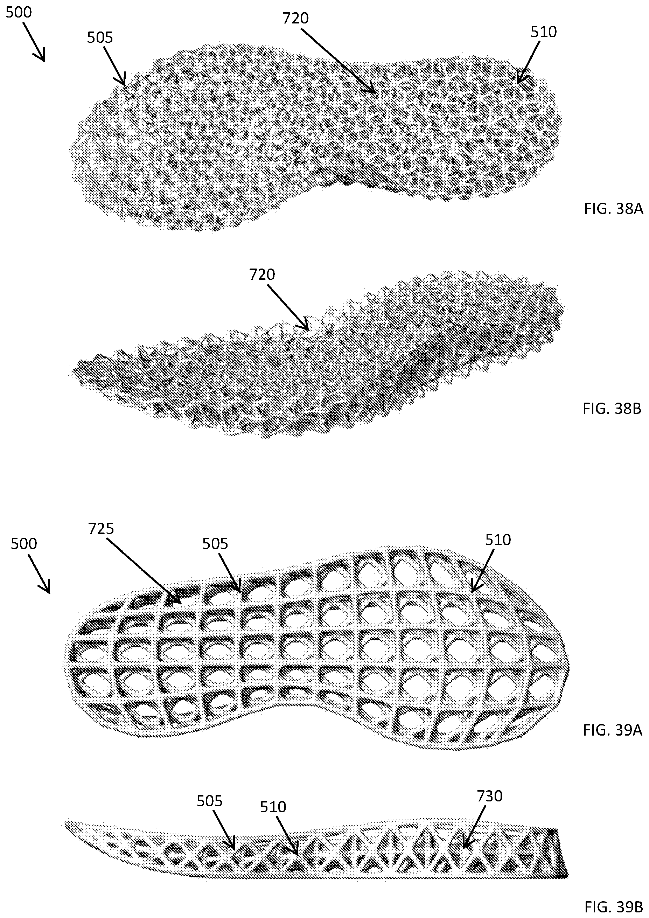

Another example midsole formed using methods and materials described herein can be seen in FIGS. 38A and 38B. A cell structure **720** may be created by stemming elongate elements **505** from the center of tetrahedronal elements and joining them at nodes **510** at each corner. A further example midsole, comprising square cells **725** forming a warped square grid alternating with a midlayer of polyhedral cells **730** is shown in FIGS. 39A and 39B.

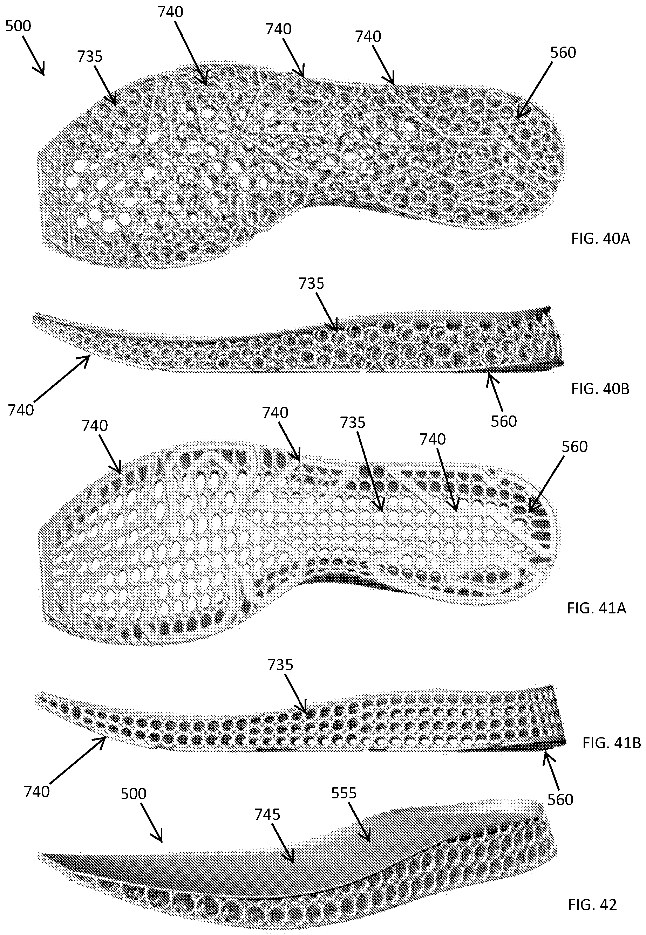

Another example midsole **500,** as shown in FIGS. 40A and 40B, may be formed from a plurality of polyhedrons (in this case tetrahedrons) having circular elements **735** (or rings) forming the faces of the tetrahedrons. The size and thickness of these rings **735** can vary over the volume of the midsole **500** to impart different structural properties to different regions thereof. Another midsole formed from a plurality of polyhedrons (in this case cubes) having circular elements **735** (or rings) forming the faces of the cubes is shown in FIGS. 41A -42. In addition to size and thickness changes, the rings **735** can vary in shape (from circular to elliptical or other curved shapes of any appropriate geometry) to impart different structural properties to different regions thereof.

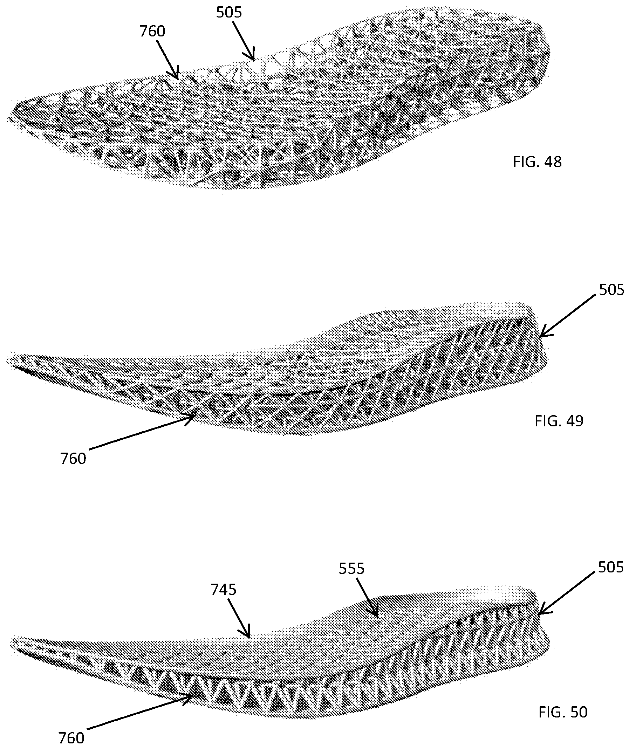

The lower surface **560** of the midsole **500** may include positioning elements **740** onto, or into, which ground contact elements (e.g., outsole elements) or other structural elements can be positioned and affixed. These can, for example, provide stable structures onto which the outsole elements can be permanently (or removably) affixed and held. One or more plates **745** can be integrally formed with (or affixed to) the midsole **500** to provide additional structure and support to the upper surface **555** and/or lower surface **560** midsole **500**. An example plate **745** covering the entire upper surface **555** of a midsole **500** is shown in FIG. 42, while a plate **745** comprising a band of material extending around an outer perimeter of an upper surface **555** of a midsole **500** is shown in FIG. 50. Plate **745** may provide cushioning and protection to the foot of a wearer and/or provide a solid surface onto which an upper of a shoe can be adhered or otherwise affixed to.

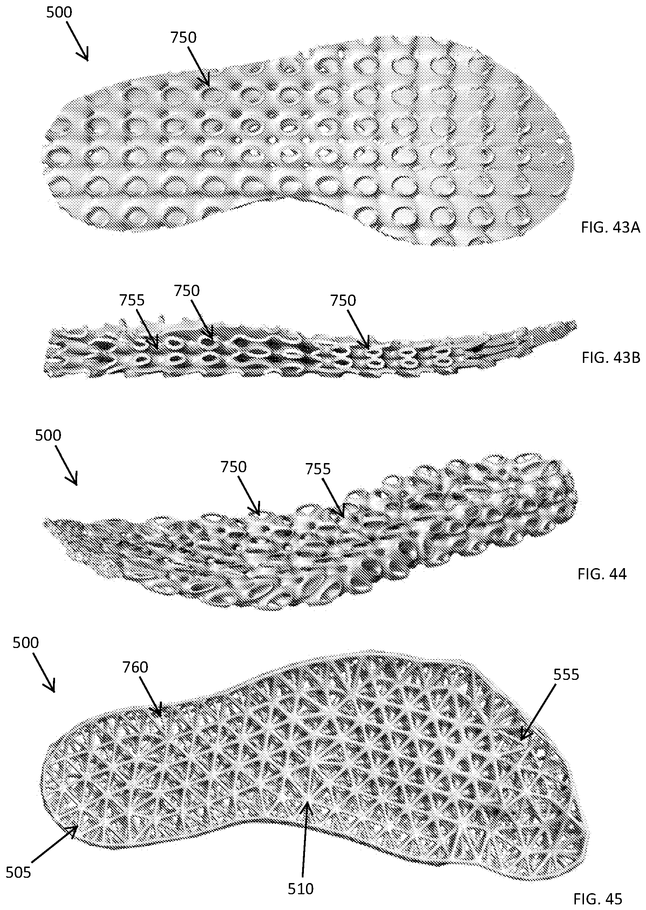

Another example midsole is shown in FIGS. 43A and 43B. Elliptical shapes **750** may be formed and joined together to form a midsole **500**. A plurality of elliptical elements **750** may be located at the faces of tetrahedronal cells and joined together through shared wall structures **755** to form an open matrix of structural elements, is shown in FIG. 44.

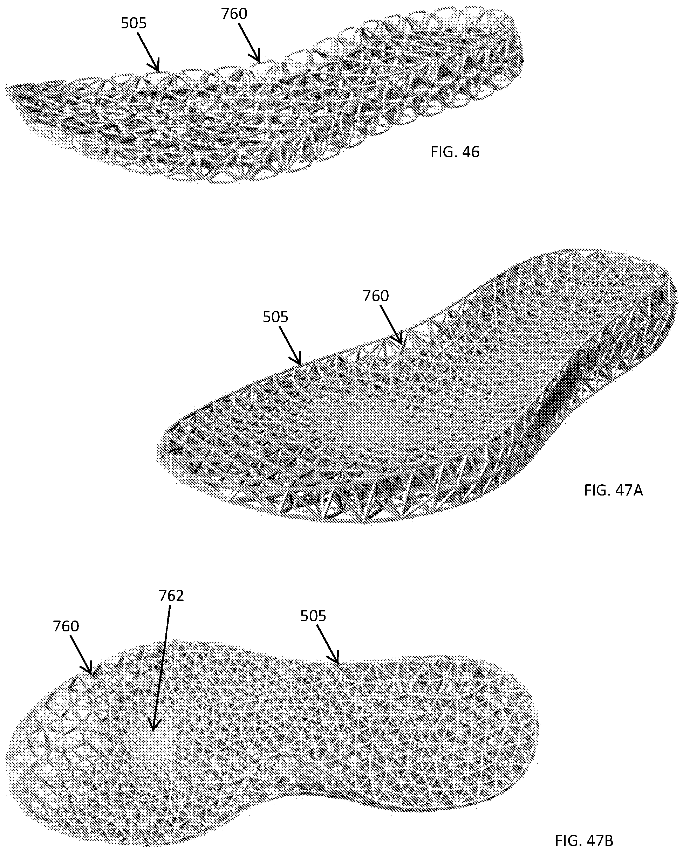

Cells in a midsole **500** can be formed from a plurality of adjoining triangular elements **760,** as shown in FIGS. 45 to 50, with the triangular elements forming the faces of a matrix of tetrahedron-shaped structural elements. The triangles, or any other shape, may have sharp or rounded corners. Elongate elements can be arranged in a substantially vertical arrangement in certain regions of the midsole **500** to provide additional structural stability (e.g., to reduce/prevent shearing during loading) to the midsole **500**. In addition, as discussed above the size of the elongate elements **505** forming the cells can be varied over the midsole **500** with, for example, regions requiring greater structural support (such as under the forefoot of an athlete) having smaller cells **762** with shorter elongate elements **505** (as shown in FIG. 47B).

The shape of the midsole **500** can be based on scanned data of the foot shape of an athlete. An example midsole **500** having an upper surface **555** substantially conforming to the shape of an athlete can be seen in FIG. 45.

The elongate elements may be straight or curved and may be of any appropriate length, thickness, and orientation to impart the required structural characteristics to regions of a midsole. The thickness may be constant or may vary over the length of the elongate element. The orientation of one or more elongate may be substantially vertical or at an acute angle to the vertical. The elongate elements may be angled in a substantially longitudinal direction (with respect to the direction of the shoe sole) or in a substantially transverse direction, or at any angle therebetween. For example, elongate elements may be arranged in an orientation opposing the direction of the predominant load placed on the midsole at that location during an athletic motion.

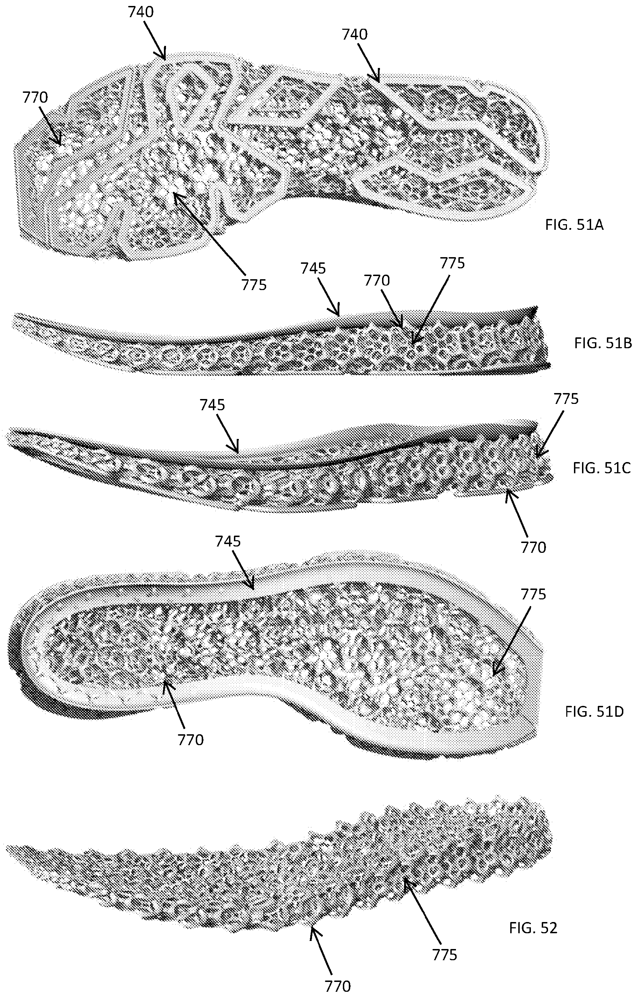

Structural elements such as elliptical elements **770** may be arranged to form the faces of a larger structural cell such as, but not limited to, the spheroidal structure **775** shown in FIGS. 51A-52. Elongate elements and/or elliptical elements may be arranged in any appropriate manner to produce a matrix of structural cells providing any appropriate structural characteristics to the midsole.

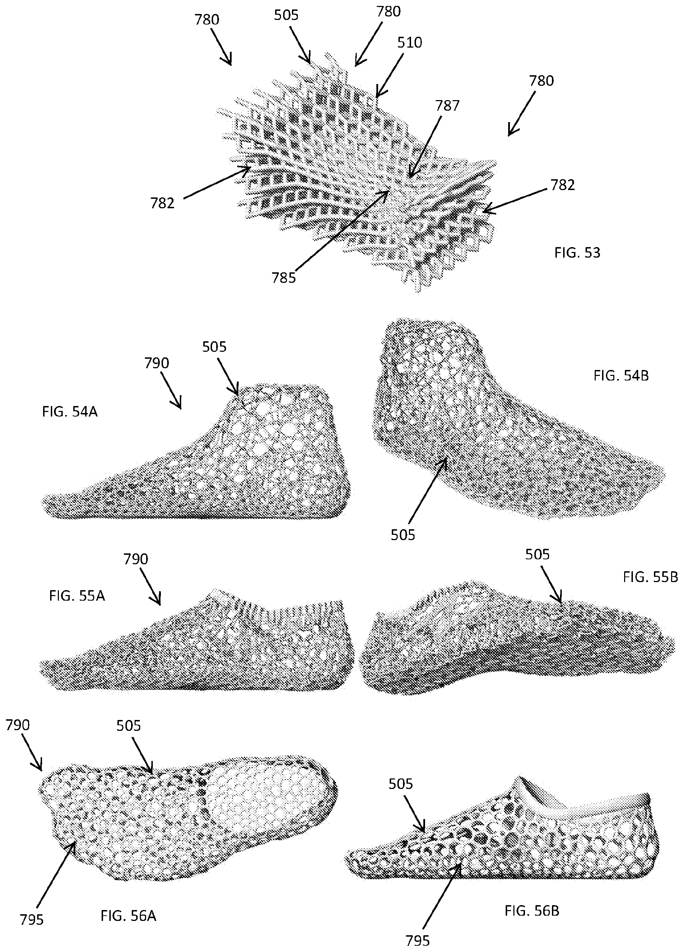

Midsole structures described herein can include a matrix of structural cells that is warped or otherwise adjusted to produce regions having differing densities, directional strengths, etc. to impart differing structural properties to different regions of the midsole. An example warped matrix having regions of lower density **780** (formed by increasing the length of the elongate elements **505** and therefore increasing the size of the resultant cells **782**) and a region of higher density **785** (formed by decreasing the length of the elongate elements **505** and therefore decreasing the size of the resultant cells **787**) can be seen in FIG. 53.

A lattice or matrix of elements can be used to form foot shapes which may be used, for example, to form uppers, or portions of uppers, for an article of footwear and/or form shoe lasts for use in the manufacture of footwear. These foot forms **790** may have a hollow interior or a structured, or partially structured, interior. Example foot forms comprising a plurality of elongate elements **505** forming a chainmail-type structure are shown in FIGS. 54A to 55B, while a foot form comprising a plurality of elongate elements **505** forming a matrix of hexagonal and pentagonal cells **795** can be seen in FIGS. 56A and 56B. Any appropriate structure, or combination of structures, may be utilized to form the foot forms.

These structures may be formed from substantially stiff and inflexible materials (for example when forming lasts for manufacturing purposes) or can be formed from flexible and/or elastic materials (for example when forming uppers, or portions thereof, for footwear). Structures, such as portions of uppers and/or other shoe elements (e.g., sole elements or combines sole and upper elements), can be formed in a fully or partially collapsed or flattened state and thereafter expanded to form a finished part. This may be particularly beneficial, for example, in additive manufacturing, where forming objects in a collapsed state allows for greatly reduced volume requirements during manufacturing, thereby allowing significantly more parts to be manufactured in a single manufacturing run. The shoe element, or any other structure (e.g., protective apparel or padding, sports equipment, etc.) can be manufactured from flexible materials that elastically deform into a finished part after initial forming (e.g., by having an elastic deforming stress pre-formed in the formation structure to automatically deform upon construction, or upon release of the structure from the manufacturing mold, powder bed, etc.). Alternatively, or in addition, the structure could be formed from a material allowing for plastic deformation after initial formation to reshape the structure into a desired shape.

A structure (e.g., a shoe sole and/or upper) can be formed, for example through additive manufacturing techniques, with one or more hinges or other deformable structural elements to allow the part to be formed in a bent or collapsed state and thereafter deformed to create the finished structure. A structure could be formed with an interior cavity into which a bladder can be placed to "inflate" the structure to a finished size after initial formation in a collapsed state.

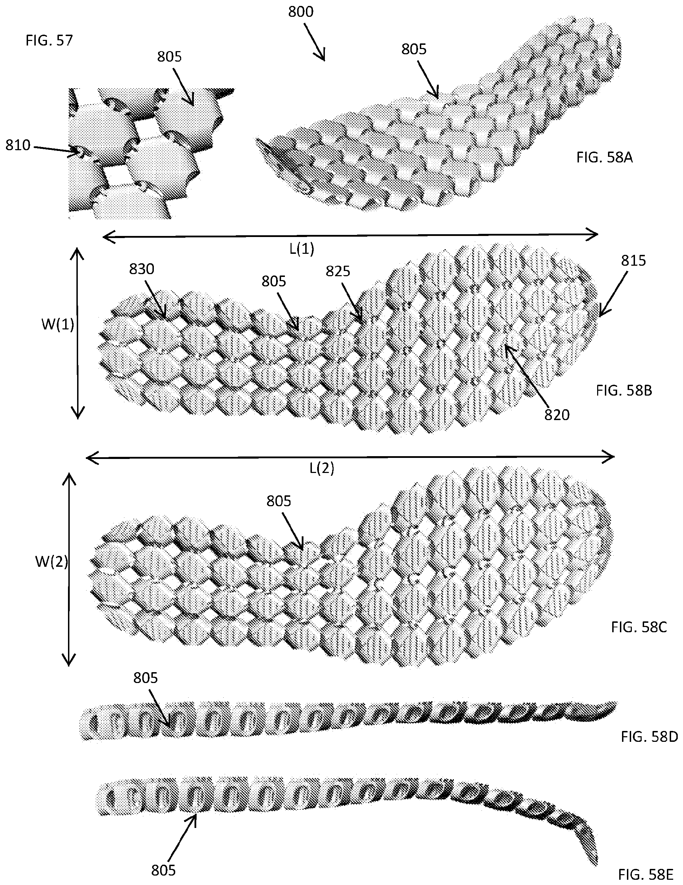

A midsole **800** for an article of footwear may be formed from a plurality of independent structural elements **805** connected through a plurality of linkage elements **810**. An example linkage system, and a midsole **800** formed from a plurality of structural elements **805** and linkage elements **810,** can be seen in FIGS. 57 to 58E. The linkage elements **810** may be flexible, elastically or plastically deformable, and/or provide some degree of give within the structural elements **805** (e.g., by being loose enough to allow relative movement between adjacent structural elements **805**) to provide the midsole **800** with a controlled degree of flexibility and manipulability. The structural elements **805** are formed as hollow-walled elements having openings into which the linkage elements **810** extend. The linkage elements **810** are formed as bent elongate elements that extend between adjacent structural elements **805** to form a chainmail-type linkage arrangement. The structural elements **805** and linkage elements **810** may take any appropriate form, and any appropriate form of structure providing connected relative movement between adjacent structural elements may be utilized. The structural elements **805** may be formed as a unitary structure with the linkage elements **810.** The structural elements **805** and linkage elements **810** can be separate interconnected elements. The structural elements **805** and linkage elements **810** may be utilized to form a sole and/or upper of a shoe, or portions thereof, or a portion of athletic apparel, athletic equipment, or protective equipment/padding.

The size and shape of the structural elements **805** and/or linkage elements **810** may vary such that different regions of the midsole **800** have structural elements **805** with different shapes, sizes, and/or structural characteristics. For example, FIGS. 58A to 58E may include a toe section **815** having smaller structural elements **805,** a forefoot region **820** having larger structural elements **805,** and a midfoot region **825** and heel region **830** having intermediate sized structural elements **805,** with the change in size allowing for four structural elements **805** to span the width of the midsole throughout the entire length thereof. Any appropriate number of elements may span the width of the structure, and the number and arrangement of elements may change over a length and/or width thereof.

Providing relative motion between structural elements **805** allows for the midsole **800** to be manipulated after formation to allow for adjustment of the shape and size of the midsole **800** to allow a single structure to fit multiple sizes and shapes of foot. For example, a midsole **800** that can expand and contract in width and/or length can be adjusted to fit multiple shoe sizes. As shown in FIGS. 58B and 58C, a midsole **800** can be adjusted to have a first length L(1) and width W(1), thereby fitting a first shoe size, or be spread apart to provide a second length L(2) and width W(2), thereby fitting a second shoe size. Allowing for this adjustment would allow for a single structure to cover a vast array of different foot sizes, widths, and shapes.

In addition, allowing for relative movement of the structural elements **805** allows for the midsole **800** to be manufactured in a first configuration (e.g., flat, as shown in FIG. 58D) and thereafter be reshaped into a final, curved configuration (e.g., curved along at least a portion of the longitudinal extent, as shown in FIG. 58E). This may be particularly beneficial, for example, in additive manufacturing, where forming the midsole **800** in a flat state (and only adding curvature to the structure after forming) potentially allows for greatly reduced volume requirements during manufacturing, thereby allowing significantly more parts to be manufactured in a single manufacturing run.

The midsole **800** can be locked into a finished shape by any appropriate method. For example, the midsole **800** can be shaped into a desired form and thereafter treated by any appropriate chemical or heat treatment to fuse the structural elements **805** and linkage elements **810** into a locked arrangement. Alternatively, or in addition, a foam, adhesive, or other material can be infused into the midsole **800** to hold the midsole **800** in its desired shape.

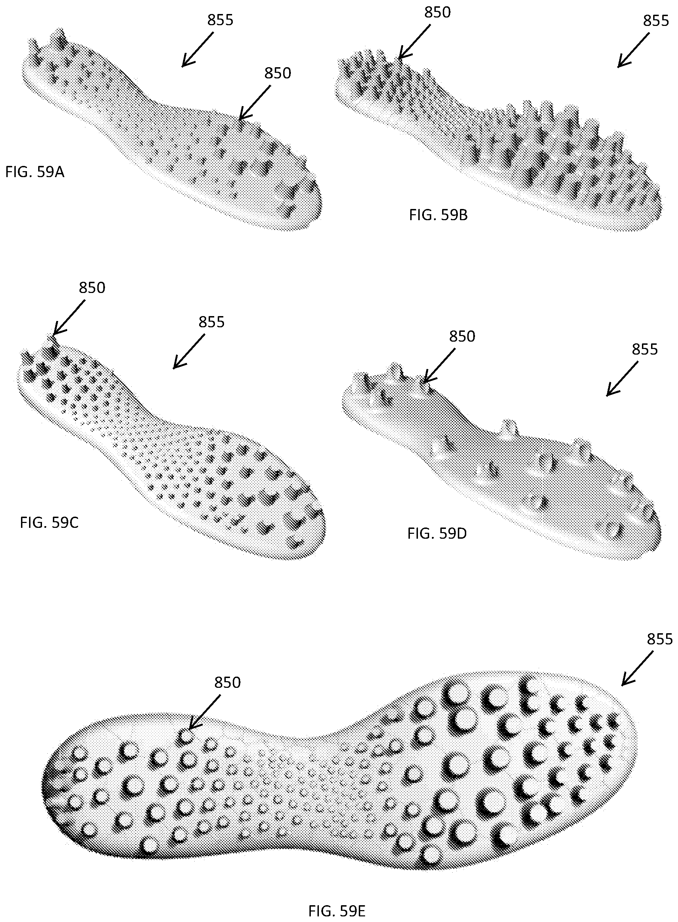

Example sole elements (in this case outsole plates) having cleated traction elements for use, for example, in soccer, American football, rugby, or other sports requiring cleats, are shown in FIGS. 59A to 59E. The size, shape, and arrangement of the cleated traction elements **850** on the outsole plates **855** can be arranged in any appropriate manner to provide the required structural, performance, and/or aesthetic properties required by the wearer. The positioning, orientation, and structural characteristics of the cleated traction elements **850** can be customized to the requirements of an athlete based on utilization of the methods and systems described herein.

The cleated traction elements **850** may be substantially circular in cross section, as shown, for example, in FIG.

59E. Alternatively, the cleated traction elements **850** may be ribbed to produce a plurality of extensions out from a central core, as shown, for example, in FIG. 59D (which shows cleated traction elements **850** having a 3-sided ribbed structure). Any appropriate cross-sectional cleat shape may be utilized including, but not limited to, elliptical cleats, bladed cleats, or triangular cleats. These cleats may or may not be tapered and may extend at substantially 90° or at an acute angle from the base plate.

A sole structure (e.g., an outsole plate or a midsole element) may incorporate one or more flex grooves to provide controlled flexibility within certain regions of the sole structure. For customized footwear the positioning of these flex grooves may, for example, be based on the scanned foot data and/or performance data of an athlete.

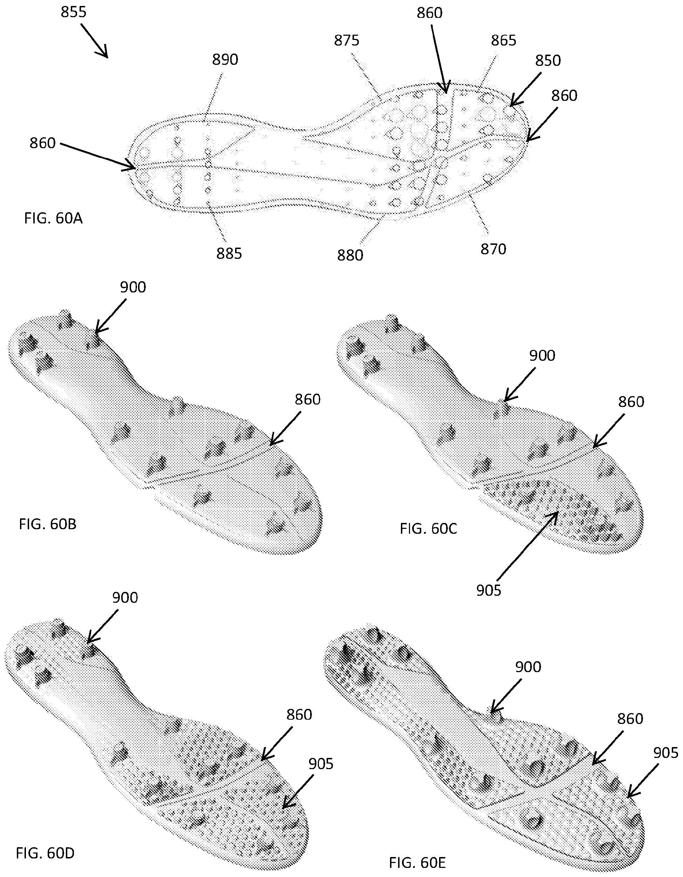

An outsole plate **855** for a cleated sole structure having flex grooves **860** is shown in FIGS. 60A to 60E. The flex grooves **860** divide the outsole plate **855** into a plurality of regions: a medial forefoot region **865,** a lateral forefoot region **870,** a medial midfoot region **875,** lateral midfoot region **880** which extends into a lateral heel region **885,** and a medial heel region **890.** Any appropriate arrangement of segregated regions may be utilized depending upon the physiology of the athlete, the performance requirements of the shoe, and/or aesthetic considerations.

The traction elements can be divided into primary traction elements and one or more set of secondary traction elements, with one or both of the primary and/or secondary traction elements positioned, sized, and/or shaped based on biometrical and/or performance data from an athlete. FIGS. 60B through 60E show a variety of different outsole plates **855,** with FIG. 60B showing a plate having only primary traction elements **900** and FIGS. 60C through 60E showing various configurations of primary traction elements **900** and secondary traction elements **905.** FIG. 60E also shows a different shape of primary traction element **900** from those utilized in FIGS. 60B through 60D.

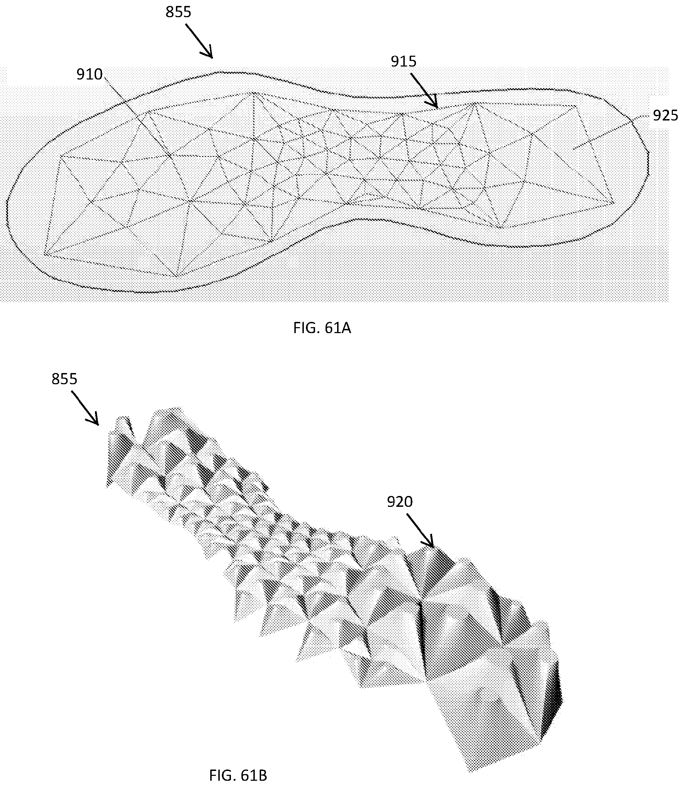

Performance and/or biometric information can be utilized to produce a grid of polygonal shapes into which customized cleats can be positioned based on measured and processed athlete data. An example outsole plate **855** having a mapping/grid structure **910** superimposed thereon can be seen in FIG. 61A. The edges **915** of the grid elements may correspond to the edges of cells **925** into which cleated traction elements **920** may be positioned on the outsole plate **855.** The size (e.g., height) and shape of the cleated traction elements **920** may be based on processing of the performance and/or biometric information from the athlete, as described herein.

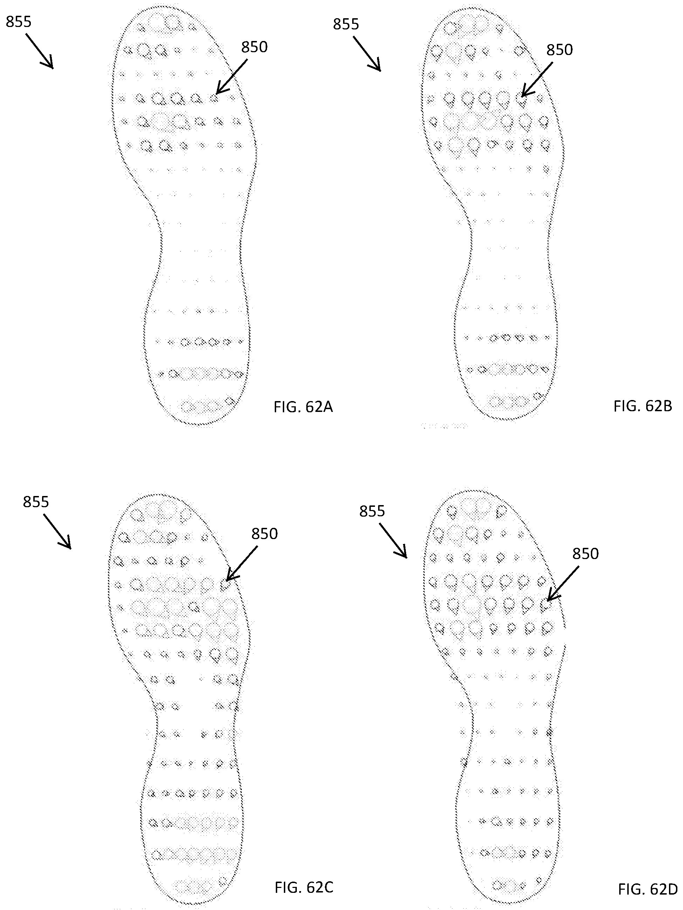

As described herein, various means of processing athlete data can be utilized in calculating customized traction element structures and positions for a specific athlete. A number of example processing methods for use, for example, in cleated traction elements are shown in FIGS. 62A to 62D. These figures show the different traction element configurations that can be created from a single data set depending on specific filtering, processing, and other analysis tool selections.

FIG. 62A shows an arrangement of cleated traction elements **850** on an outsole plate **855** based on a direct averaging and simple weighting of all data throughout the course of an athletic motion. FIG. 62B shows an arrangement of cleated traction elements **850** on an outsole plate **855** based on a filtered data set, with only the largest 10% of data samples at a given location being used to create a cleated traction element **850** configuration at that location. FIG. 62B shows an arrangement of cleated traction elements **850** on an outsole plate **855** based on a zonal approach to data processing, with the data in different regions (or zones) of the outsole plate **855** processed independently based upon an identification of the dominant performance requirements for each region (e.g., longitudinal or lateral support, landing or toe-off support, etc.). FIG. 62D shows an arrangement of cleated traction elements **850** on an outsole plate **855** based on a weighted filtering of the zonal data of FIG. 62C with data from points proximate a point of interest being used to smooth the data transition between regions. Any other appropriate processing and analysis techniques may be utilized, as appropriate.

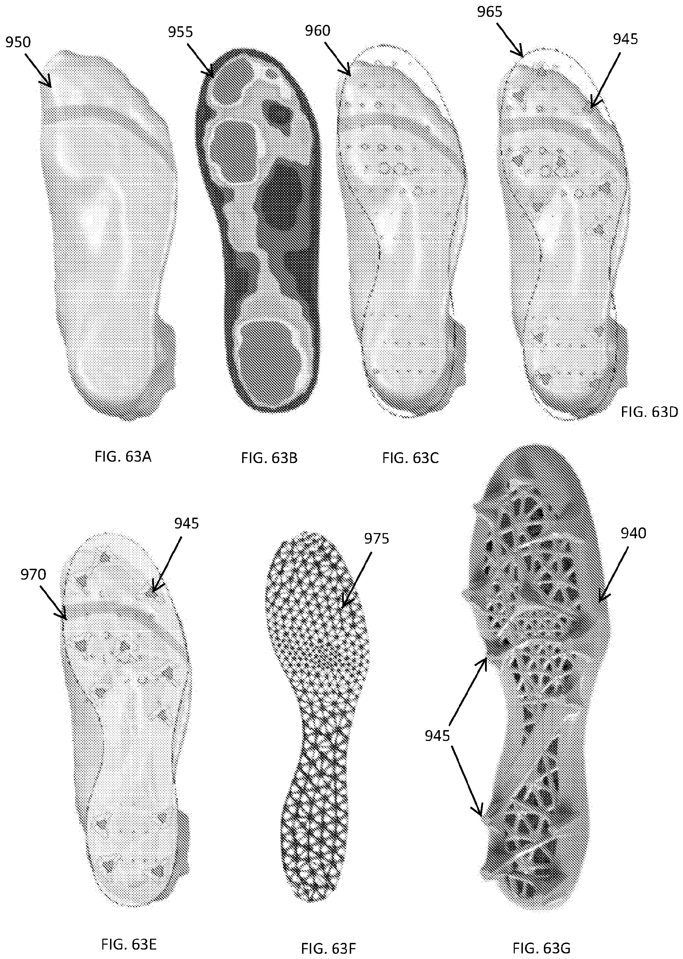

An example method of designing an outsole plate **940** with cleated traction elements **945** is shown in FIGS. 63A to 63G. Biometric and performance data may be gathered for an athlete and used to determine preferred cleat **945** location, size and shape over the surface of an outsole plate **940** for a shoe such as a soccer shoe/boot. The data can also be used to determine a preferred structure for the plate **940** to provide superior flexibility, support, and stability customized to the athlete.

In FIGS. 63A to 63G the data used in the customization design process includes biometric data relating to the geometry of the athlete's foot (e.g., foot scan data **950** obtained through an optical scan of the geometry of the foot). In addition, pressure data **955** associated with the pressure distribution under the foot during an athletic motion and force vector data **960** associated with the directions and magnitudes of the force between the foot and the ground during an athletic motion are used to provide cleat configurations specifically tied to the athlete. Additional and/or different biometric and/or performance data can be used in the customization process.

The athlete can perform a number of different athletic motions (e.g., straight line running, curved running, jumping, cutting, turning, kicking, etc.), with all these different data sets being incorporated into the data processing algorithm. The data for different motions can be weighted based on the dominance of a specific motion to the athlete's performance and/or to athlete preference. For example, one athlete (e.g., a soccer player) may want or need a shoe that is specifically designed to maximize straight line speed, while another athlete may want or need a shoe designed to enhance cutting speed and/or stability. The data can also be weighted or otherwise filtered to ensure that the results don't over-rely on one data set and motion to the detriment of other data sets and motions, thereby creating a shoe that provides customized support over a broad range of motions.

The processed data is then used to create a matrix **965** of desired cleat **945** locations, sizes, and directional orientations, as shown in FIG. 63D. This data can then be further processed to determine locations on the outsole plate **940** where greater or lesser degrees of flexibility (e.g., longitudinal, lateral, and/or torsional flexibility) are desired, where greater or lesser degrees of stiffness are desired, where greater or lesser degrees of structural support are required, and where greater or lesser degrees of protection are required. This data can then be used to create a unitary multi-component structure providing both customized traction control and structural support for the athlete. For example, the data can be used to create a primary lattice component **970** including a customized matrix of traction elements (as shown in FIG. 63E) and a secondary lattice component **975** including a lattice or web of support structures designed to provide customized flexibility, rigidity, structural support, and protection (as shown in FIG. 63F). These two lattice components can then be combined to create a final outsole plate **940** design providing a structure specifically adapted to the performance and biometric needs of an athlete.

Any appropriate combination of traction elements, flexibility elements (e.g., flex grooves), support elements, etc. can be incorporated into a shoe element. The elements can be customized to a specific athlete (based on analysis of that athletes biometric and performance data) or be designed to provide a more generic, averaged, structure based on analysis of multiple athletes performing a specific athletic motion or range of motions.

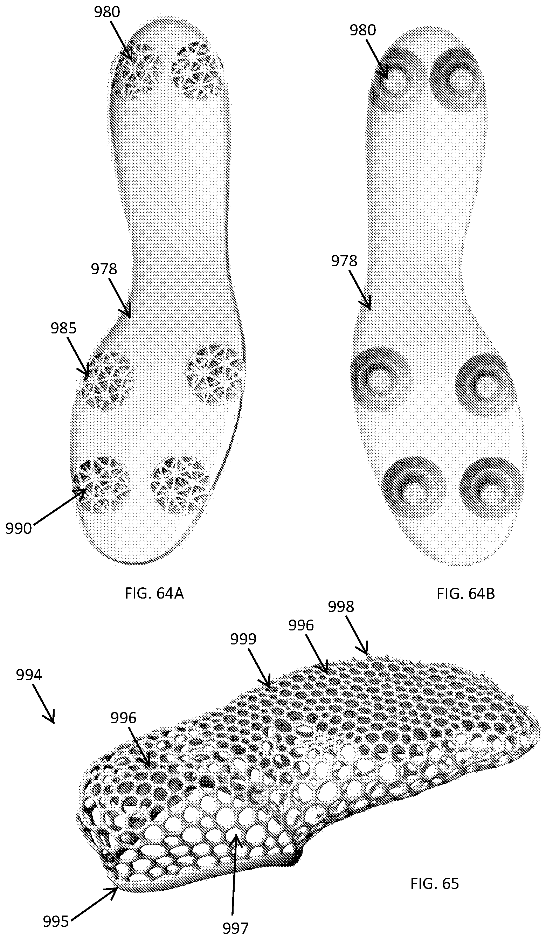

Traction elements may be formed as substantially hollow structures to reduce the material required for manufacture and to reduce the weight of the plate. An example sole plate **978** for a cleated shoe having a plurality of hollowed cleated traction elements **980,** with a web of structural stability elements **985** extending within the hollowed interior **990** of each cleated traction elements **980,** is shown in FIGS. 64A and 64B. The structural stability elements **985** may be used to provide structural support for the cleated traction elements **980** and may take any appropriate form. The hollow cleated traction elements **980** may be sufficiently structurally stable and solid on their own, thereby negating the need for structural stability elements **985.** A material (e.g., a foam, a rubber, or another appropriate material) may be inserted into the hollow cleated traction elements **980** to provide stability to the element and/or to provide cushioning and/or other structural benefits to the sole plate **978.**

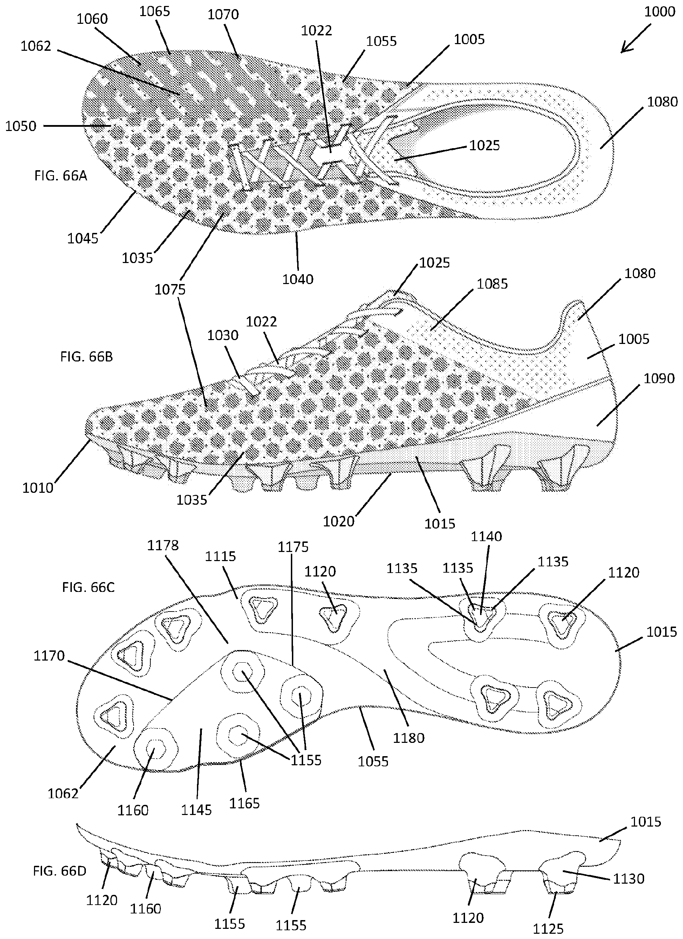

An example athletic shoe, as defined in the claims, having cleated traction elements for use, for example, in soccer, is shown in FIGS. 66a through 66D. In this embodiment, the shoe (or boot) **1000** includes an upper **1005** and a sole **1010,** the sole **1010** including a sole plate **1015** having a bottom surface **1020** adapted for ground engagement and an upper surface facing an interior of the shoe **1000.** The sole **1010** can be fixedly attached to the upper **1005** in any appropriate manner, as known in the art. The sole **1010** can include additional elements such as, but not limited to, an insole (e.g., a foamed insole) to be positioned between the sole plate **1015** and the foot of a wearer. An example insole element having selected cushioning elements is described in U.S. Patent Application No. 14/620,539, filed on February 12, 2015.

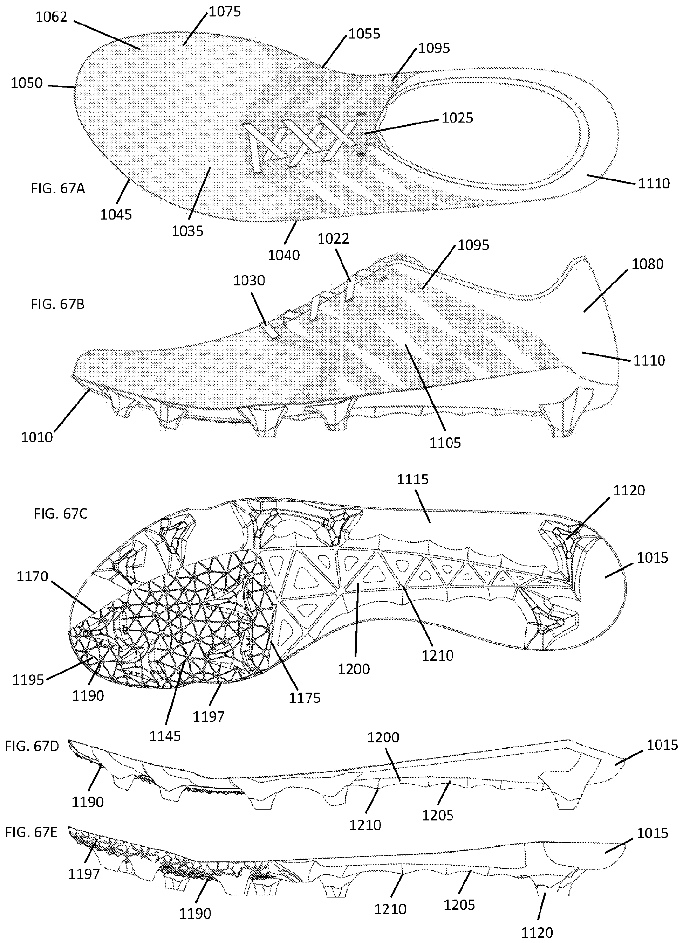

The upper **1005** includes an instep portion **1022** including a tongue **1025** and lacing system **1030.** In alternative embodiments, a burrito-type tongue (as shown in the shoe **1000** of FIGS. 67A and 67B), a padded tongue, or a tongue-less instep portion, may be utilized. The upper **1005** includes an outer layer having different textures and/or cushioning characteristics in different locations, with the various textures providing different performance characteristics at the associated locations of the upper **1005** to improve the performance of the shoe **1000** by providing the wearer with optimized traction, cushioning, and rebound/energy return characteristics depending upon the specific athletic motion being performed (e.g., the striking of a soccer ball by the shoe **1000).** For example, providing certain regions of the upper **1005** with increased cushioning (e.g., through the use of foamed materials in those regions and, for example, in a medial midfoot of the shoe) can allow the wearer to better control a ball being passed to him or her (with the cushioning properties of the material in that region dissipating the energy of the ball and thereby easing the control of the ball as it reaches the foot), while providing other areas with higher energy return/decreased cushioning can improve the rebound characteristics of that region of the shoe **1000** and thereby increase the force transfer between foot and ball during a ball striking motion (e.g., a shot at goal) where maximum energy transfer, and thereby maximum ball speed, can be advantageous.

The upper **1005** shown in FIGS. 66A and 66B includes a first upper portion **1035** covering the majority of the lateral midfoot region **1040,** lateral forefoot region **1045,** central forefoot region **1050,** and medial midfoot region **1055,** with a second upper portion **1060,** having a different texture, located in the medial forefoot region **1062.** In one embodiment, the second upper portion **1060** may be formed from the same material as the first upper portion **1035** and may, for example, be formed as a unitary material portion with the first upper portion **1035,** with the different texture applied to the second upper portion **1060** through the application of a texturing mechanism (e.g., surface texturing, surface roughing, surface smoothing, heat application to mold and set the material, application of an additional material or chemical treatment, such as a tacky material, to the outer surface, etc.). In an alternative embodiment, the second upper portion **1060** may be formed from a different material from the first upper portion **1035.** In one embodiment, three or more different upper portions may be utilized, with each having its own combination of texturing/traction and cushioning properties.

The second upper portion **1060** shown in FIG. 66A includes a plurality of regularly interspersed parallel ridges **1065** and indentations **1070,** with the ridges extending at an angle of about 45° to the longitudinal axis of the shoe **1000** (i.e.,

the axis extending longitudinally along the shoe from front to rear). In an alternative embodiment, the ridges **1065** can extend at an angle of between about 10° to about 80°, or more particularly between about 30° to about 60°, or even between about 40° to about 50°. The ridges **1065** can be substantially straight or curved in any appropriate manner. The ridges **1065** may be of any appropriate width and height and can, in one embodiment, have a width of between about 1mm to about 10 mm and, for example, between about 4mm to about 8mm (e.g., about 6mm) and a height of between about 0.1mm to about 3mm and, for example, between about 0.5mm to 1.5mm (e.g., about 1mm). The indentations **1070** between the ridges **1065** can have the same width as the ridges **1065** or have a lesser or greater width. In one embodiment, the indentations **1070** can have a width of approximately half that of the ridges **1065**. In alternative embodiments, the ridges **1065** and indentations **1070** can be larger or smaller, and have any appropriate ratio of dimensions, as appropriate for the particular embodiment.

In an alternative embodiment, the second upper portion **1060** can have any appropriate texturing such as, but not limited to, a cross-hatch pattern, a plurality of discrete raised and/or indented elements, a roughened or smoothed surface (with respect to the surrounding outer surface) and/or a tacky surface. Providing ridges **1065** and/or other texturing on areas such as the second upper portion **1060** provides customized traction between the outer surface of the upper **1005** and a ball being controlled and kicked by the athlete. This can be beneficial, for example, in imparting appropriate spin to a ball, with different surface textures interacting with the ball in different ways to impart various spins to the ball. By providing an upper **1005** with a plurality of different upper portions **1035, 1060,** each having different textures and cushioning properties, a shoe **1000** can be adapted to provide an athlete with a unique combination of ball interaction zones, with the properties of each zone customized to a particular athlete's, or group of athletes', preferences.

The first upper portion **1035** and/or second upper portion **1060** can be made from any appropriate material and may be formed from a multi-layered material package and, for example, a three-layered package having a textile inner layer (the shaded base layer viewed through the hexagonal holes **1075** in FIGS. 66A and 66B), a foamed middle layer (the layer shown in FIGS. 66A and 66B with the holes **1075** therein), and a textile outer layer (indicated in FIGS. 66A and 66B by the dotted pattern). The textiles on the inner and outer layers may include, or consist essentially of, a breathable or non-breathable woven, non-woven, knit or otherwise structured mesh material formed from any appropriate natural or synthetic material. The middle layer may be formed from a foamed material, an unfoamed material, or a textile. An example intermediate foamed layer may be manufactured from Ariaprene®, as manufactured by Tiong Liong Industrial Co., Ltd. of Taichung City, Taiwan, with the foamed layer being perforated to produce the holes **1075** and thereafter laminated between the inner layer and outer layers. In one embodiment, the upper material, and/or any one or more layer in a multi-layered material package, can be formed with holes or other structural elements therein and with, for example, the holes created by perforation or cutting of the material or by molding, knitting, weaving, or otherwise forming the material layer with the holes and/or other structural features therein. In various embodiments, the holes can be sized, shaped, and/or oriented to provide selected degrees of breathability, uni-directional or multi-directional stretch, cushioning, and/or support.

As shown, the foamed middle/intermediate layer includes a plurality of regularly distributed polygonal holes **1075** (and, in this case, hexagonal holes), with these holes creating regularly spaced indentations in the first upper portion **1035,** thereby providing breathability and creating a regular texture in the first upper portion **1035.** The holes **1075** can have a width (from flat side to flat side of the hexagonal cross-section) of between about 1mm to about 10 mm and, for example, between about 4mm and about 8mm (e.g., about 6mm). In alternative embodiments, the holes **1075** can be larger or smaller, as appropriate for the particular embodiment. In an alternative embodiment, the holes **1075** can be substantially circular, oval, or of any other appropriate cross-section. For example, the shoe **1000** as shown in FIGS. 67A and 67B includes an upper **1005** having an first upper portion **1035** including a multi-layered material package having a foamed middle layer including regularly distributed oval holes **1075,** with this first upper portion **1035** extending over the lateral forefoot region **1045,** central forefoot region **1050,** medial forefoot region **1062,** and medial midfoot region **1055.**

The depth of the holes **1075,** and therefore the depth of the texturing on the first upper portion **1035,** is dependent on the thickness of the foamed material in the middle layer and the extent to which the outer layer extends into the holes **1075.** As such, careful selection of the thickness of the foamed middle layer is required to ensure appropriate cushioning and traction characteristics for the first upper portion **1035,** with thicker foamed layers providing more cushioning and greater texturing. The foamed middle layer can have a thickness of between about 0.5mm to about 2mm, although thinner and thicker middle layers may be utilized depending upon the specific performance characteristics required.

The upper **1005** can include additional structural features in addition to those provided by the first upper portion **1035** and second upper portion **1060.** For example, as shown in FIGS. 66A and 66B the upper **1005** can include a heel portion **1080** incorporating a heel collar **1085** (e.g., a cushioned heel collar) and a structured heel counter **1090.** In addition, additional layers of material may be located, either to the interior or exterior of the surface of the upper **1005** (or within a multi-layered material portion), at one or more region of the upper **1005** to provide additional structural support and other performance characteristics to the shoe **1000,** where appropriate. For example, the shoe **1000** shown in FIGS. 67A and 67B includes a fourth material layer **1095** in the lateral midfoot region **1040,** medial midfoot region **1055,** and instep region **1022** to provide additional structural support to the midfoot of the wearer and a second upper portion **1060** in the midfoot region having a different surface texture to surrounding material portions (with the fourth material layer **1095** extending over the first upper portion **1035** in the medial midfoot region **1055** and over an additional, or third, upper portion **1110,** which extends over the lateral midfoot region **1040** and around the heel region **1080,** in the lateral midfoot **1040).** This fourth material layer **1095** can be formed from any appropriate breathable or non-breathable woven, non-woven, knit or otherwise structured mesh material (and, for example, a lightweight high strength-to-weight ratio synthetic non-woven material having a lower elasticity than the surrounding material to provide more support in the midfoot region).

As shown in FIGS. 67A and 67B, the fourth material layer **1095** may include one or more spaces **1105,** and for example, elongated holes, that can be positioned and oriented to allow the fourth material layer **1095** to stretch more in one direction than in another direction. For example, by orienting the spaces **1105** such that they extend in a direction substantially from the sole **1010** toward the lacing **1030,** the fourth material layer **1095** can provide a greater degree of support in that direction (thereby supporting the lacing system **1030)** while still allowing a greater degree of flexibility along the longitudinal axis of the shoe **1000.** The size, shape, and orientation of spaces **1105** within any material layer can be selected to provide any appropriate stretch, support, and breathability characteristics depending upon the region covered by the material layer and the specific performance characteristics required.

The particular configuration of upper portions, and the particular configuration of traction/texture, cushioning, energy return, and support characteristics provided by these different upper portions, may be selected based on general design requirements of an athlete, or group of athletes, or can be determined based on the analysis of one or more experimental data sets to provide configurations specifically customized for an athlete, group of athletes, and/or sport and style of play, as described herein. For example, physical and/or optical measurements of stress and/or strain at various portions of the shoe can be used to determine optimal regions for the positioning and orientation of material portions, while measurements of the interaction between a soccer ball and the shoe when controlling and striking the ball (e.g., measurements of spin and velocity of a ball for different ball strikes, pressure and/or force measurements on the foot, etc.) can be used to determine appropriate distributions of traction/texture and cushioning characteristics in different regions of the foot.

Biometric data and/or performance data relating to one or more athletes performing specific athletic maneuvers (e.g., running turning, etc.) and ball striking movements (e.g., shooting, passing, trapping, etc.) can be used in the determination of the distribution of materials on the upper **1005** to best support a specific type of athlete or type of athletic performance. The specific data used can, for example, be based on performance characteristics relevant to a playing position (e.g., goalkeeper, defender, midfielder, or striker), a level of performance (e.g., beginner, intermediate, or expert) and/or a playing style (e.g., speed-based, strength-based, accuracy-based, etc.). The positioning, orientation, and selection of materials, material properties, and treatments of the materials in each region of the upper **1005** can then be appropriately selected for the particular performance required.

The sole plate **1015** of the shoe **1000** of FIGS. 66A and 66B is shown in FIGS. 66C and 66D. The sole plate **1015** includes a plurality of traction elements shaped, oriented, and arranged to provide optimized performance characteristics for the soccer shoe **1000** based on specific design considerations. More particularly, the sole plate **1015** includes a first sole portion **1115** including a plurality of first traction elements **1120** having a distal end **1125** and a side wall **1130** formed by a plurality of extensions **1135** (and, in this case three extensions arranged in a substantially triangular arrangement) extending from a central core **1140.** The traction elements **1120** can be of any size, shape, and orientation, and distributed in any appropriate manner, as described herein.

The sole plate **1015** further includes a second sole portion **1145** with four second traction elements **1155, 1160** having a distal end **1125** and a side wall **1130** having a substantially hexagonal cross-section. The second sole portion **1145** can include a greater or lesser number of traction elements, and the traction elements can be of any size, shape, and orientation, and distributed in any appropriate manner, as described herein. For example, one or more of the second traction elements, and/or one or more of the first traction elements **1120,** can have a circular, oval or polygonal cross-section (e.g., a triangular, square, rectangular, pentagonal, hexagonal, or higher order polygon) and can be of any appropriate height and cross-sectional area.

As shown, the second sole portion **1145** extends over a medial portion of the lower surface of the sole plate **1015** proximate the medial midfoot region **1055** and medial forefoot region **1062** of the sole plate **1015** and, more particularly, extends over at least a first metatarsal region of the sole plate **1015.** The sole plate **1015** includes three second traction elements **1155** arranged in a substantially triangular pattern proximate the first metatarsal region with a fourth second traction element **1160** positioned forward of the three second traction elements **1155** (and, for example, proximate an edge **1165** of the sole plate **1015**) in the medial forefoot region **1062** of the plate **1015.**

The traction elements may be symmetrically, or asymmetrically, configured, as required. In addition, the traction elements may be or varying height and size or all of the same height and/or size and may taper at any appropriate angle. Each of the traction elements in the first sole portion **1115** and second sole portion **1145** can be oriented to optimize its traction characteristics for the required performance requirements of the shoe **1000,** as described herein.

The second sole portion **1145** extends from the medial side edge to the central region over between approximately 50% to approximately 80% of the width of the sole plate. The second sole portion **1145** includes a first edge **1165** proximate an edge of the sole plate, a second edge **1170** extending from the edge of the sole plate to a central region of the sole plate in the forefoot, and a third edge **1175** extending from the edge of the sole plate to the central region of the sole plate from the midfoot region, wherein the second edge **1170** and the third edge **1175** converge and meet in the central region **1178** of the sole plate **1015**. The first sole portion **1115** and second sole portion **1145** may be separated by one or more flex grooves. Flex grooves can also be positioned at any appropriate location within the first sole portion **1115** and/or second sole portion **1145**.

The first sole portion **1115** may be formed from a different material than the second sole portion **1145** with, for example, the first sole portion **1115** formed from nylon and the second sole portion **1145** formed from thermoplastic polyurethane (TPU). The second sole portion **1145** may be bonded to, co-molded with, or mechanically attached to the lower surface of the first sole portion **1115** (so that the second sole portion **1145** underlies the first sole portion **1115**). The first sole portion **1115** may have a cut-out portion into which the second sole portion **1145** can be inserted so the second sole portion **1145** doesn't underlie the first sole portion **1115** but rather is places beside it on the lower surface of the shoe **1000**.

The traction elements may be formed from any appropriate material and, for example, can have a base portion integrally formed from the same material as used in the sole portion from which it extends with a tip portion (proximate the distal end **1125**) made from a metal (e.g., aluminum or steel) or TPU. Each of the traction elements may have a tip formed from the same material (e.g., TPU). Different traction elements in the first sole portion **1115** and/or second sole portion **1145** can have tips formed from different materials. For example, metal-tipped traction elements may be included in a region having high wear (e.g., around the ball of the foot of the wearer), while the traction elements in regions of lower wear have TPU tips. The tips may be co-molded with the base of the traction elements and sole plate regions or be connected (through bonding or mechanical attachment - e.g., threaded connections) after molding of the plate.

The sole plate **1015** can include any appropriate number and arrangement of plate portions with, for example, different regions providing different degrees of stiffness, torsional stability, flexibility, and/or directional or directionless traction. Additional stiffness can, for example, be provided by support elements (e.g., elongate bars of material extending from or through the plate) extending over appropriate regions of the sole **1010**. For example, a torsional support bar **1180** can be positioned through the midfoot region to provide support and torsional control in that region. Support elements can be placed and oriented in any appropriate location on the sole **1010**.

Providing different regions of the sole plate **1015** with different plate materials and configurations, and with different cleat/traction elements extending therefrom, can create a shoe sole having beneficial performance characteristics that change from region to region depending upon the athletic motion being performed. For example, the sole plate **1015** shown in FIGS. 66C and 66D includes a second sole portion **1145** located proximate the first metatarsal region having substantially smooth cleat/traction elements (e.g., circular or hexagonal cross-sectioned cleats) configured to interact with the ground to provide appropriate linear traction but to allow the shoe to rotate relatively easily when imbedded within the ground to allow the wearer to pivot quickly and easily when the majority of the weight is on the ball of the foot (i.e., in the region proximate the first metatarsal head). This may be particularly beneficial, for example, in movements requiring a quick change in direction. However, by placing and orienting directionally dependent first traction elements **1120** in the first sole portion **1115** away from the ball of the foot the wearer can gain extra traction when more of the foot is on the ground (e.g., during a push-off motion of the gait cycle). Combining the different traction elements in such an appropriate arrangement allows the shoe **1000** to support both quick turning motions and sharp acceleration motions depending on the requirements of the wearer.

Another sole plate **1015** for a soccer boot/shoe **1000** is shown in FIGS. 67C to 67E. The sole plate **1015** may again includes a first sole portion **1115** and a second sole portion **1145**, but with the traction elements in the first sole portion of the same general configuration as the traction elements in the second sole portion (i.e., with a central core with three ribs extending therefrom) and with the size, shape, and orientation changed as appropriate to optimize the traction properties of the shoe **1000** in that region.

The second sole portion **1145** may include a plurality of secondary traction elements **1190** with, the secondary traction elements **1190** of a smaller size than the primary traction elements in the first and second sole portions. The secondary traction elements **1190** are connected by a plurality of interconnected elongate elements **1195** and provide additional traction in that region of the sole plate **1015**. Any appropriate configuration of secondary traction elements **1190** and/or tread elements can be utilized to support the traction of various regions of the shoe. As shown in FIG. 67E, the secondary traction elements **1190** can extend out to the medial edge **1197** of the sole plate **1015** to provide traction for the shoe even during high angle cutting movements where only the medial edge **1197** of the shoe **1000** is in contact with the ground, and extend over the entire medial forefoot region of the sole plate **1015** to provide additional traction during toe-off.

The sole plate of FIGS. 67C through 67E further includes a raised structural support element **1200** in a midfoot region of the sole plate **1015** to provide appropriate stiffness and torsional control for the midfoot region. Here, the structural support element **1200** is formed from a plurality of interconnected elongate elements **1205** forming a truss-like structure. The raised structural support element **1200** can be hollow or solid, depending on the support required and the weight requirements of the shoe. The structural support element **1200** can include protrusions **1210** at the connection regions between the interconnected elongate elements **1205** (and/or elsewhere on the structural support element **1200)** to act as additional traction elements to provide additional traction for the shoe.

The customized footwear elements described herein can be manufactured through any appropriate manufacturing technique such as, but not limited to, injection molding, blow molding, or using rapid manufacturing (additive manufacturing) technology such as, but not limited to, selective laser sintering (SLS), fused deposition modeling, stereolithography, laminated object manufacturing, inkjet-based additive manufacturing, or any appropriate computer controlled manufacturing technique including the layered addition/deposition of material.

The customized footwear components described herein can be manufactured through the use of SLS manufacturing methods and tooling. SLS is an additive manufacturing technique that uses a high power laser (e.g., a carbon dioxide laser) to fuse small particles of plastic, metal (direct metal laser sintering), ceramic, or glass powders into a mass that has a desired three-dimensional shape. The laser selectively fuses powdered material by scanning cross-sections generated from a 3-D digital description of the part (for example from a CAD file or scanned data) on the surface of a powder bed. After each cross-section is scanned, the powder bed is lowered by one layer thickness, a new layer of material is applied on top, and the process is repeated until the part is completed. SLS manufacturing allows for the formation of parts using various plastics, ceramics, and/or metals. Example materials that may be used in the manufacture of footwear components include, but are not limited to, polymers, and for example semi-crystalline polymers such as, but not limited to, nylon (amide), thermoplastic polyurethane (TPU), thermoplastic elastomer (TPE), polyether block amide (PEBA), and/or polyester. Other materials may include, or consist essentially of, shape memory plastics, thermoplastic elastomers (TPE's) such as styrene-butadiene-styrene (SBS), ethylene vinyl acetate (EVA), and/or rubbers such as butadiene rubber. Example metals include materials such as, but not limited to, aluminum, titanium, stainless steel, nickel alloy, cobalt-chrome, maraging steel, shape memory alloys (such as, but not limited to, nickel titanium), or other alloys. Additional filler materials such as, but not limited to, nylon or carbon fiber or glass fiber, can be added to the base material to modify the properties of the finished part. Example thermoplastic materials for use in SLS additive manufacturing, and methods of manufacturing parts using these materials, are disclosed in U.S. Patent Numbers 6,110,411 to Clausen et al. and 8,114,334 to Martinoni et al..

SLS provides a rapid means for manufacturing components without the need to create a mold for the component through the forming of a three-dimensional article in a layer-wise fashion by selectively projecting a laser beam having the desired energy onto a bed of particles of a selected material. In addition, SLS allows for the creation of complex unitary structures that cannot be manufactured through traditional molding techniques. For example, an outsole including integrated traction elements with undercut sections would be extremely difficult to manufacture through traditional injection or blow molding manufacturing processes, but is easily manufactured using SLS or other additive manufacturing methods. An example SLS machine that may be utilized to manufacture customized parts is a P 395 Selective Laser Sintering System manufactured by EOS GmbH Electro Optical Systems of Krailling, Germany.

Other advantages of utilizing rapid manufacturing techniques such as SLS is the ability to create structures having different layers of different materials allowing, for example, for an outsole structure with a base plate of a first material and integrated traction elements of a second material. In addition, by carefully controlling the properties of the laser utilized in SLS manufacturing, such as the laser power and the speed of the scanning track of the laser, the density and other structural properties of the material used to construct the customized part can be carefully controlled over different regions of the structure. This allows, for example, for a lower density (and therefore lighter and more flexible) base plate with traction elements of a higher density (and therefore increased strength and stiffness). This also allows for different sections of a single structure (e.g., different traction elements within a single structure and/or different sections within a single base plate) to be formed with different density, strength, and/or stiffness properties.

SLS manufacturing also provides a significantly faster method of manufacturing customized footwear elements than traditional molding techniques, at least because there is no need to manufacture a mold prior to forming the customized footwear elements themselves. An entire customization process, from obtaining the input parameters through to providing a finished part for an athlete, can be carried out in only a few hours, or possibly less. As a result, SLS manufacturing, and other relevant additive manufacturing (or 3D printing) techniques provide an effective method of manufacturing both customized parts and/or parts (whether customized or designed for a broad range of users) having a structure that would be difficult or impossible to manufacture using traditional molding techniques.

Additional materials, such as, but not limited to, pigmentation and/or UV stabilizers may be added to the powdered material utilized in the additive manufacturing process to provide colored parts and/or parts that are protected from changes in color (e.g., fading or yellowing) upon exposure to UV light over time. The pigmentation, UV stabilizer, and/or other additives may be added during extrusion of the material prior to powderization of the material or be added to the powdered material in liquid or powdered form. Color can be added to the structure through spray coating, dip coating, or any other appropriate coating technique after formation of the part. The color may be provided by any appropriate paint, ink, or other coloring agent(s) or chemicals(s).

Other additives that could be added during the manufacturing process may include, but are not limited to, antioxidants, antistatic agents, and/or whitening agents (e.g., fluorescent whitening agents). Example antioxidants may include, but are not limited to, aromatic amines, phenols, phosphites and phosphonites, thiosynergists, hindered amine stabilizers, hydroxyl amines, benzofuranone derivatives, and/or acryloyl modified phenols. Example antistatic agents may include, but are not limited to, fatty acid esters, ethoxylated alkylamines, diethanolamides, and/or ethoxylated alcohol. Example fluorescent whitening agents may include, but are not limited to, bis-benzoxazoles, phenylcoumarins, and/or bis-(styril)biphenyls.

A flow agent such as, but not limited to, a powdered Cab-O-Sil® fumed silica (e.g., Cab-O-Sil® PS 530, fumed silica, available from Cabot Corporation of Two Seaport Lane, Suite 1300, Boston, MA 02210, USA) can be added to the powdered material to improve the flowing of the material during depositing of the material in the powder bed within the additive manufacturing system, as described, for example, in U.S. Patent Number 6,110,411 to Clausen et al.

The part may be formed from a material that chemically reacts with another material upon exposure thereto to swell or foam to an increased final size after formation. For example, the part may be formed from a material that swells upon exposure to a liquid (e.g., water) so that, after formation in a reduced state, the part can swell to its finished state by exposure to the liquid.

A blowing agent may be added to the manufacturing material (either during extrusion or during or after powderization of the raw material(s)). As a result, a part can be formed through additive manufacturing that includes a blowing agent designed to foam and expand the part upon exposure of the part to controlled conditions (e.g., controlled heat and pressure conditions), for example within a post-processing mold or oven. As a result, parts can be formed through additive manufacturing in a reduced size, with the blowing agent within the part thereafter activated to produce the finished, foamed part. This can allow for the forming of objects through additive manufacturing techniques in a reduced size that allows for greatly reduced volume requirements during manufacturing, with the parts thereafter expanded to their desired size through activation of the blowing agent(s), thereby allowing significantly more parts to be manufactured in a single manufacturing run. Foaming of the parts by activation of a blowing agent after formation of the part through additive manufacturing can also create parts having different structural properties (e.g., reduced density, increase cushioning, etc.) than can be formed through additive manufacturing alone. The blowing agent may include, or consist essentially of, any appropriate type of physical blowing agent known to those of ordinary skill in the art such as, but not limited to, nitrogen, carbon dioxide, hydrocarbons (e.g., propane), chlorofluorocarbons, noble gases and/or mixtures thereof. The blowing agent may comprise, or consist essentially of, nitrogen. Example blowing agents, and methods of use, are described in U.S. Patent Publication No. 2012-0196115 An example blowing agent for use with the methods and systems described herein is an endothermal blowing agent such as, but not limited to, Kycerol 91 or Kycerol 92, formed from modified sodium bicarbonate. Another example blowing agent that may be used comprises thermo-expandable microcapsules with a liquefied blowing agent (e.g., a liquefied hydrocarbon) encapsulated by a shell layer (e.g., an acrylic copolymer. An example of such a blowing agent is Cellcom-CAP/170K.

The use of SLS or other additive manufacturing techniques allows for the formation of unique structures, and combinations of structures, that would be difficult or impossible to create using traditional manufacturing techniques. Such structures may, for example, include a plurality of separate elements that are formed in an integrated state, at the same time, during SLS manufacturing to produce an interlocked multi-component structure (such as the midsole with the structural elements and linkage elements shown in FIGS. 58A to 58E). An example structure, including a shoe **994** having an upper **995** with a plurality of sole elements **996** formed within the interior **997** the upper **995** is shown in FIG. 65. The sole elements **996** may include a plurality of traction elements **998** that extend through openings **999** in the upper **995** to form a ground contacting surface for the shoe **994.**

Utilization of SLS manufacturing allows for input parameters to be measured or selected remotely (e.g., at an athletic facility, in a store, or even at home), with the input parameters analyzed either remotely or at the users location (using a design program adapted to allow a user to design a footwear component themselves using the input parameters and various selection criteria) or analyzed at a manufacturing facility upon receiving input parameter data from a user/athlete. The analysis tools may include an algorithm for converting the design based on the performance metrics and user preferences into a computer readable file (e.g. a CAD file) that can be sent directly to an SLS machine to form the customized part. The analysis tool may, for example, include a program or application (App) that can be stored on a PC or portable electronic device and can send input parameters, user selection criteria, performance metric information, and/or final design information over a wireless or wired network to a manufacturing tool for construction of the customized footwear components. As a result, an athlete can create a customized design remotely, send that design to a manufacturing tool, and have the part manufactured and sent back to the user in short order. Measurement tools (e.g., measuring devices such as pressure sensor arrays and/or body scanning and/or measurement tools) can be located at shoe stores, at an athletic facility or event, and/or at home, while manufacturing tools (e.g., SLS machines) can be located at shoe stores, at an athletic facility or event, and/or at remote manufacturing locations. Alternatively, users can utilize portable consumer additive manufacturing tools to build customized footwear elements at home.

The part, or parts, formed through the manufacturing process and, for example, through SLS, can be post-processed to provide additional aesthetic and/or structural characteristics. Such post-processing may include painting the part and/or coating the part with a material that supports or modifies the structural characteristics of the part, infusing the part with one or more materials, filling cavities in the part with one of more materials, and/or encasing the part in a covering material.

Rather than providing individually customized footwear for each individual athlete a plurality of predetermined footwear options can be provided with an athlete choosing the most appropriate option depending upon their specific needs and characteristics. For example, multiple data sets of athlete data (e.g., pressure and force data) can be categorized into a number of predetermined categories, with the categories determined by characteristics such as, but not limited to, footstrike location (e.g., heel striker, midfoot striker, or forefoot striker), level of pronation/supination, straight running or curved track running, etc. The athlete can select a pre- or post-manufactured "customized" shoe based on which category, or categories, the athlete fits into. A shoe can be offered in a limited number of different options with traction elements specifically set up for heel-strikers, midfoot strikers, and/or forefoot strikers.

Examples described herein allow for the utilization of the methods and algorithms described herein to design and manufacture apparel and/or equipment for use by athletes and other users. For example, measurements of physical characteristics of an individual may be used to custom design articles of apparel such as, but not limited to, protective helmets, protective garments for the upper and/or lower body (e.g., shirts and/or pants incorporating protective material or sleeves and/or wraps incorporating protective material for placement on the limbs and/or torso of a wearer), protective padding, etc. Relevant performance measurements for an athlete carrying out a sporting activity can also be incorporated into the input parameters for ensuring that the apparel provides the protection required without sacrificing performance. For example, measurements of the shape and size of a head of an athlete can be used as input parameters for a method of designing a custom fitted helmet for that athlete. Input parameters can include measurements of the movements of the athlete (e.g., rotation of the neck and or change in shape of the neck due to flexing of the neck muscles), which can be used to customize the helmet further to limit the effect of the helmet on the athletic performance of the wearer without compromising the protection provided. Customized padding (e.g., shoulder pads, elbow pads, torso padding, forearm padding, shin pads, hip padding, etc.) can be provided for an athlete by measuring the physical characteristics of the part of the body requiring protection and/or obtaining measurements relating to the movement of that body part during performance of the athletic activity for which the padding is designed. Customized helmets, apparel, and/or padding may be beneficial in sports such as, but not limited to, lacrosse, American football, ice hockey, field hockey, rugby, soccer, baseball, softball, martial arts, and/or boxing.

Footwear and blades for skating (e.g., during ice hockey, speed skating, or ice dancing) may be customized for a particular skater based on physical characteristics of the wearer and/or performance characteristics of the wearer (e.g., relating to the skating style of the wearer and/or the particular movements carried out by the wearer during their particular athletic activities). As manufacturing methods such as, but not limited to, SLS allow for the manufacturing of components from many materials including both plastics and metals, multiple parts of a skate can be custom manufactured including, but not limited to, the blade, the blade attachment, the sole, and/or the upper.

Examples described herein allow for the utilization of the methods and algorithms described herein to design and manufacture of sporting equipment (or elements thereof) such as, but not limited to, lacrosse heads, lacrosse nets, golf clubs, tennis racquets, gripping elements for any piece of sporting equipment, hockey sticks (and, for example, the head and/or gripping portions thereof) through use of physical characteristic of the user and/or performance characteristics of the user (e.g., through measurement of the forces, pressures, stresses, strains and/or flexion of the piece of sporting equipment during a specific athletes performance of an athletic activity).

## Claims

1. A sole plate (1015) for an article of footwear (1000) comprising:
   a lower surface adapted for ground contact, the lower surface comprising:

   a first sole portion (1115) comprising a plurality of first traction elements (1120), the first traction elements (1120) comprising: (i) a distal end (1125) and (ii) a side wall (1130) comprising three tapered extensions (1135) extending from a central core (1140) in a triangular arrangement; and
   a second sole portion (1145) comprising three second traction elements (1155) arranged in a substantially triangular pattern proximate a first metatarsal region of a foot of a wearer of the article of footwear, the second traction elements (1155) having at least one geometrical feature differing in at least one aspect from a corresponding geometrical feature of the first traction elements (1120), wherein the second sole portion (1145) extends from a medial side edge (1165) of the sole plate (1015) to a central region (1178) of the sole plate (1015) over a maximum of between approximately 50% to approximately 80% of a width of the sole plate (1015) and proximate a forefoot region of the lower surface, and wherein the second sole portion (1145) comprises:

a first edge (1165) proximate a medial edge of the sole plate (1015);
a second edge (1170) extending from the medial edge of the sole plate (1015) to a central region (1178) of the sole plate (1015); and
a third edge (1175) extending from the medial edge of the sole plate (1015) to the central region (1178) of the sole plate (1015), wherein the second edge (1170) and the third edge (1175) converge and meet in the central region (1178) of the sole plate (1015).

2. The sole plate of claim 1, wherein an orientation of at least one first traction element (1120) in a first region of the first sole portion (1115) is different from an orientation of at least one first traction element (1120) in a second region of the first sole portion (1115).

3. The sole plate of claim 1, wherein the second traction elements (1155) comprise a distal end and a side wall comprising a substantially hexagonal cross-section.

4. The sole plate of claim 1, wherein the second traction elements (1155) comprise a distal end and a side wall comprising at least one of a substantially circular cross-section, a substantially oval cross-section, and a substantially polygonal cross-section, the polygonal cross-section comprising at least one of a triangular, a square, a rectangular, a pentagonal, or a hexagonal polygon.

5. The sole plate of claim 1, wherein the three second traction elements (1155) arranged in the substantially triangular pattern have substantially the same height.

6. The sole plate of claim 1, wherein the second sole portion (1145) further comprises a fourth second traction element (1160) positioned in a medial forefoot region (1062) of the foot of the wearer of the article of footwear.

7. The sole plate of claim 1, wherein the first sole portion (1115) and second sole portion (1145) are separated by one or more flex grooves.

8. The sole plate of claim 1, wherein at least one of:

the first sole portion comprises a first material and the second sole portion comprises a second material different from the first material;
the first material comprises nylon and the second material comprises thermoplastic polyurethane;
the first sole portion is at least one of bonded to and co-molded with the second sole portion;
at least one of the first traction elements and second tractions elements comprises a metal; and
at least one first traction element and at least one second traction element comprises a metal and at least one first traction element and at least one second traction element comprises a thermoplastic polyurethane.

9. The sole plate of claim 1, wherein each of the first traction elements (1125) and the second traction elements (1155) comprises thermoplastic polyurethane.

10. The sole plate of claim 1, further comprising a torsional support bar (1180) positioned in a midfoot region.

11. An article of footwear (1000) comprising:

an upper (1005); and
a sole (1010), the sole (1010) comprising a sole plate comprising a lower surface adapted for ground contact, the lower surface comprising:

a first sole portion (1115) comprising a plurality of first traction elements (1120), the first traction elements (1120) comprising a distal end (1125) and a side wall (1130) comprising three tapered extensions (1135) extending from a central core (1140) in a triangular arrangement; and
a second sole portion (1145) comprising three second traction elements (1155) arranged in a substantially triangular pattern proximate a first metatarsal region of a foot of a wearer of the article of footwear, the second traction elements (1155) having at least one geometrical feature differing in at least one aspect from a corresponding geometrical feature of the first traction elements (1120), wherein the second sole portion (1145) extends from a medial side edge (1165) of the sole plate (1015) to a central region (1178) of the sole plate (1015) over a maximum of between approximately 50% to approximately 80% of a width of the sole plate (1015) and proximate a forefoot region of the lower surface, and wherein the second sole portion (1145) comprises:

a first edge (1165) proximate a medial edge of the sole plate (1015);
a second edge (1170) extending from the medial edge of the sole plate (1015) to a central region (1178) of the sole plate (1015); and
a third edge (1175) extending from the medial edge of the sole plate (1015) to the central region (1178) of the sole plate (1015), wherein the second edge (1170) and the third edge (1175) converge and meet in the central region (1178) of the sole plate (1015).

**Patentansprüche**

1. Sohlenplatte (1015) für einen Fußbekleidungsartikel (1000), die Folgendes umfasst:
eine für Bodenkontakt ausgelegte Unterseite, wobei die Unterseite Folgendes aufweist:

einen ersten Sohlenteil (1115), der mehrere erste Traktionselemente (1120) umfasst, wobei die ersten Traktionselemente (1120) Folgendes aufweisen: (i) ein distales Ende (1125) und (ii) eine Seitenwand (1130) mit drei sich verjüngenden Verlängerungen (1135), die sich von einem zentralen Kern (1140) in einer dreieckigen Anordnung erstrecken; und
einen zweiten Sohlenteil (1145), der drei zweite Traktionselemente (1155) umfasst, die in einem im Wesentlichen dreieckigen Muster in der Nähe einer ersten Mittelfußregion eines Fußes eines Trägers des Fußbekleidungsartikels angeordnet sind, wobei die zweiten Traktionselemente (1155) mindestens ein geometrisches Merkmal aufweisen, das sich in mindestens einem Aspekt von einem entsprechenden geometrischen Merkmal der ersten Traktionselemente (1120) unterscheidet, wobei sich der zweite Sohlenteil (1145) von einer medialen Seitenkante (1165) der Sohlenplatte (1015) zu einer zentralen Region (1178) der Sohlenplatte (1015) über maximal zwischen etwa 50 % bis etwa 80 % einer Breite der Sohlenplatte (1015) und in der Nähe einer Vorderfußregion der Unterseite erstreckt, und wobei der zweite Sohlenteil (1145) Folgendes umfasst:

eine erste Kante (1165) in der Nähe einer medialen Kante der Sohlenplatte (1015);
eine zweite Kante (1170), die sich von der medialen Kante der Sohlenplatte (1015) zu einer zentralen Region (1178) der Sohlenplatte (1015) erstreckt; und
eine dritte Kante (1175), die sich von der medialen Kante der Sohlenplatte (1015) zur zentralen Region (1178) der Sohlenplatte (1015) erstreckt, wobei die zweite Kante (1170) und die dritte Kante (1175) konvergieren und sich in der zentralen Region (1178) der Sohlenplatte (1015) treffen.

2. Sohlenplatte nach Anspruch 1, wobei sich eine Orientierung mindestens eines ersten Traktionselements (1120) in einer ersten Region des ersten Sohlenteils (1115) von einer Orientierung mindestens eines ersten Traktionselements (1120) in einer zweiten Region des ersten Sohlenteils (1115) unterscheidet.

3. Sohlenplatte nach Anspruch 1, wobei die zweiten Traktionselemente (1155) ein distales Ende und eine Seitenwand mit einem im Wesentlichen sechseckigen Querschnitt aufweisen.

4. Sohlenplatte nach Anspruch 1, wobei die zweiten Traktionselemente (1155) ein distales Ende und eine Seitenwand mit mindestens einem von einem im Wesentlichen kreisförmigen Querschnitt, einem im Wesentlichen ovalen Querschnitt und einem im Wesentlichen polygonalen Querschnitt aufweisen, wobei der polygonale Querschnitt mindestens eines von einem dreieckigen, quadratischen, rechteckigen, fünfeckigen und sechseckigen Polygon aufweist.

5. Sohlenplatte nach Anspruch 1, wobei die in dem im Wesentlichen dreieckigen Muster angeordneten drei zweiten Traktionselemente (1155) im Wesentlichen die gleiche Höhe haben.

6. Sohlenplatte nach Anspruch 1, wobei der zweite Sohlenteil (1145) ferner ein viertes zweites Traktionselement (1160) umfasst, das in einer mittleren Vorderfußregion (1062) des Fußes des Trägers des Fußbekleidungsartikels positioniert ist.

7. Sohlenplatte nach Anspruch 1, wobei der erste Sohlenteil (1115) und der zweite Sohlenteil (1145) durch eine oder mehrere Biegerillen getrennt sind.

8. Sohlenplatte nach Anspruch 1, wobei mindestens eines der folgenden gilt:

   der erste Sohlenteil umfasst ein erstes Material und der zweite Sohlenteil umfasst ein zweites Material, das sich von dem ersten Material unterscheidet;
   das erste Material umfasst Nylon und das zweite Material umfasst thermoplastisches Polyurethan;
   der erste Sohlenteil ist mit dem zweiten Sohlenteil verbunden und/oder gemeinsam mit diesem geformt;
   mindestens eines der ersten Traktionselemente und zweiten Traktionselemente umfasst ein Metall; und
   mindestens ein erstes Traktionselement und mindestens ein zweites Traktionselement umfassen ein Metall und mindestens ein erstes Traktionselement und mindestens ein zweites Traktionselement umfassen ein thermoplastisches Polyurethan.

9. Sohlenplatte nach Anspruch 1, wobei die ersten Traktionselemente (1125) und die zweiten Traktionselemente (1155) jeweils thermoplastisches Polyurethan umfassen.

10. Sohlenplatte nach Anspruch 1, die ferner einen in einer Mittelfußregion positionierten Torsionsstützsteg (1180) umfasst.

11. Fußbekleidungsartikel (1000), der Folgendes umfasst:

   ein Oberteil (1005); und
   eine Sohle (1010), wobei die Sohle (1010) eine Sohlenplatte mit einer für Bodenkontakt ausgelegten Unterseite umfasst, wobei die Unterseite Folgendes aufweist:

   einen ersten Sohlenteil (1115), der mehrere erste Traktionselemente (1120) umfasst, wobei die ersten Traktionselemente (1120) ein distales Ende (1125) und eine Seitenwand (1130) mit drei sich verjüngenden Verlängerungen (1135) aufweisen, die sich von einem zentralen Kern (1140) in einer dreieckigen Anordnung erstrecken; und
   einen zweiten Sohlenteil (1145), der drei zweite Traktionselemente (1155) umfasst, die in einem im Wesentlichen dreieckigen Muster in der Nähe einer ersten Mittelfußregion eines Fußes eines Trägers des Fußbekleidungsartikels angeordnet sind, wobei die zweiten Traktionselemente (1155), mindestens ein geometrisches Merkmal aufweisen, das sich in mindestens einem Aspekt von einem entsprechenden geometrischen Merkmal der ersten Traktionselemente (1120) unterscheidet, wobei sich der zweite Sohlenteil (1145) von einer medialen Seitenkante (1165) der Sohlenplatte (1015) zu einer zentralen Region (1178) der Sohlenplatte (1015) über maximal zwischen etwa 50 % bis etwa 80 % einer Breite der Sohlenplatte (1015) und in der Nähe einer Vorderfußregion der Unterseite erstreckt, und wobei der zweite Sohlenteil (1145) Folgendes umfasst:

   eine erste Kante (1165) in der Nähe einer medialen Kante der Sohlenplatte (1015);
   eine zweite Kante (1170), die sich von der medialen Kante der Sohlenplatte (1015) zu einer zentralen Region (1178) der Sohlenplatte (1015) erstreckt; und
   eine dritte Kante (1175), die sich von der medialen Kante der Sohlenplatte (1015) zur zentralen Region (1178) der Sohlenplatte (1015) erstreckt, wobei die zweite Kante (1170) und die dritte Kante (1175) konvergieren und sich in der zentralen Region (1178) der Sohlenplatte (1015) treffen.

## Revendications

1. Plaque à semelle (1015) pour un article chaussant (1000), comprenant :
   une surface inférieure conçue pour un contact avec le sol, la surface inférieure comprenant :

   une première partie semelle (1115) comprenant une pluralité de premiers éléments de traction (1120), les premiers éléments de traction (1120) comprenant : (i) une extrémité distale (1125) et (ii) une paroi latérale (1130) comprenant trois extensions coniques (1135) s'étendant depuis un noyau central (1140) selon un agencement triangulaire ; et
   une seconde partie semelle (1145) comprenant trois seconds éléments de traction (1155) agencés selon un motif sensiblement triangulaire à proximité d'une première région métatarsienne d'un pied d'un porteur de l'article chaussant, les seconds éléments de traction (1155) présentant au moins une caractéristique géométrique différant d'au moins un aspect d'une caractéristique géométrique correspondante des premiers éléments de traction (1120), la seconde partie semelle (1145) s'étendant d'un bord latéral médian (1165) de la plaque à semelle (1015) à une région centrale (1178) de la plaque à semelle (1015) sur un maximum d'environ 50 % à environ 80 % d'une largeur de la plaque à semelle (1015) et à proximité d'une région d'avant-pied de la surface inférieure, et la seconde partie semelle (1145) comprenant :

un premier bord (1165) à proximité d'un bord médian de la plaque à semelle (1015) ;
un deuxième bord (1170) s'étendant du bord médian de la plaque à semelle (1015) à une région centrale (1178) de la plaque à semelle (1015) ; et
un troisième bord (1175) s'étendant du bord médian de la plaque à semelle (1015) à la région centrale (1178) de la plaque à semelle (1015), le deuxième bord (1170) et le troisième bord (1175) convergeant et se rejoignant dans la région centrale (1178) de la plaque à semelle (1015).

2. Plaque à semelle selon la revendication **1,** une orientation d'au moins un premier élément de traction (1120) dans une première région de la première partie semelle (1115) étant différente d'une orientation d'au moins un premier élément de traction (1120) dans une seconde région de la première partie semelle (1115).

3. Plaque à semelle selon la revendication 1, les seconds éléments de traction (1155) comprenant une extrémité distale et une paroi latérale comprenant une section transversale sensiblement hexagonale.

4. Plaque à semelle selon la revendication 1, les seconds éléments de traction (1155) comprenant une extrémité distale et une paroi latérale comprenant au moins une section parmi une section transversale sensiblement circulaire, une section transversale sensiblement ovale et une section transversale sensiblement polygonale, la section transversale polygonale comprenant au moins un polygone parmi un polygone triangulaire, carré, rectangulaire, pentagonal et hexagonal.

5. Plaque à semelle selon la revendication 1, les trois seconds éléments de traction (1155) agencés selon le motif sensiblement triangulaire ayant sensiblement la même hauteur.

6. Plaque à semelle selon la revendication 1, la seconde partie semelle (1145) comprenant en outre un quatrième second élément de traction (1160) positionné dans une région médiane d'avant-pied (1062) du pied du porteur de l'article chaussant.

7. Plaque à semelle selon la revendication 1, la première partie semelle (1115) et la seconde partie semelle (1145) étant séparées par une ou plusieurs rainures de flexion.

8. Plaque à semelle selon la revendication 1, au moins une des conditions suivantes étant vérifiée :

la première partie semelle comprend un premier matériau et la seconde partie semelle comprend un second matériau différent du premier matériau ;
le premier matériau comprend du nylon et le second matériau comprend du polyuréthane thermoplastique ;
la première partie semelle est collée à la seconde partie semelle et/ou co-moulée avec celle-ci ;
les premiers éléments de traction et/ou les seconds éléments de traction comprennent un métal ; et
au moins un premier élément de traction et au moins un second élément de traction comprennent un métal et au moins un premier élément de traction et au moins un second élément de traction comprennent un polyuréthane thermoplastique.

9. Plaque à semelle selon la revendication 1, chacun des premiers éléments de traction (1125) et des seconds éléments de traction (1155) comprenant du polyuréthane thermoplastique.

10. Plaque à semelle selon la revendication 1, comprenant en outre une barre de support de torsion (1180) positionnée dans une région mi-pied.

11. Article chaussant (1000), comprenant :

une tige (1005) ; et
une semelle (1010), la semelle (1010) comprenant une plaque à semelle comprenant une surface inférieure conçue pour un contact avec le sol, la surface inférieure comprenant :

une première partie semelle (1115) comprenant une pluralité de premiers éléments de traction (1120), les premiers éléments de traction (1120) comprenant une extrémité distale (1125) et une paroi latérale (1130) comprenant trois extensions coniques (1135) s'étendant depuis un noyau central (1140) selon un agencement triangulaire ; et

une seconde partie semelle (1145) comprenant trois seconds éléments de traction (1155) agencés selon un motif sensiblement triangulaire à proximité d'une première région métatarsienne d'un pied d'un porteur de l'article chaussant, les seconds éléments de traction (1155), présentant au moins une caractéristique géométrique différant d'au moins un aspect d'une caractéristique géométrique correspondante des premiers éléments de traction (1120), la seconde partie semelle (1145) s'étendant d'un bord latéral médian (1165) de la plaque à semelle (1015) à une région centrale (1178) de la plaque à semelle (1015) sur un maximum d'environ 50 % à environ 80 % d'une largeur de la plaque à semelle (1015) et à proximité d'une région d'avant-pied de la surface inférieure, et la seconde partie semelle (1145) comprenant :

un premier bord (1165) à proximité d'un bord médian de la plaque à semelle (1015) ;
un deuxième bord (1170) s'étendant du bord médian de la plaque à semelle (1015) à une région centrale (1178) de la plaque à semelle (1015) ; et
un troisième bord (1175) s'étendant du bord médian de la plaque à semelle (1015) à la région centrale (1178) de la plaque à semelle (1015), le deuxième bord (1170) et le troisième bord (1175) convergeant et se rejoignant dans la région centrale (1178) de la plaque à semelle (1015).

105 → Obtain one or more Input Parameters (for example through gathering experimental performance data, measuring biometric information, and/or inputting user preferences and/or performance information).

110 → Analyze the Input Parameter(s) to determine at least one performance metric of a foot of the user.

115 → Determine customized structural characteristic(s) of at least a portion of a customized shoe based on the performance metric(s).

120 → Manufacture customized shoe or shoe portion incorporating structural characteristic(s) (for example through rapid manufacturing techniques such as selective laser sintering)

FIG. 1

FIG. 2

FIG. 3

159

158

150

160

$Z_1$

$X_1$

157

FIG. 4A

170

$Z_2$

$X_2$

150

165

160

$Z_1$

$X_1$

175

FIG. 4B

FIG. 5A

FIG. 5B

FIG. 6A

FIG. 6B

FIG. 6C

FIG. 7A

FIG. 7B

FIG. 7C

FIG. 8A

FIG. 8B

FIG. 8C

FIG. 9A

FIG. 9B

FIG. 9C

FIG. 10A

FIG. 10B

FIG. 10C                    FIG. 10D

FIG. 11A

FIG. 11B

FIG. 12A

FIG. 12B

FIG. 12C

230

225

FIG. 13A

225

230

FIG. 13B

230

225

FIG. 13C

235

FIG. 14A

235

FIG. 14B

235

FIG. 14C

235

FIG. 15A

235

FIG. 15B

235

FIG. 15C

FIG. 16A

FIG. 16B

FIG. 16C

FIG. 17A     FIG. 17B     FIG. 17C     FIG. 17D

FIG. 17E     FIG. 17F     FIG. 17G     FIG. 17H

FIG. 17I     FIG. 17J     FIG. 17K     FIG. 17L

FIG. 17M     FIG. 17N     FIG. 17O     FIG. 17P

FIG. 18

230

250

265

FIG. 19A

255

230

250

265

FIG. 19B

FIG. 20A

FIG. 20B

FIG. 21A

FIG. 21B

260

265

FIG. 22A

260

265

FIG. 22B

FIG. 23A   FIG. 23B   FIG. 23C

FIG. 24A

FIG. 24B

FIG. 24C

FIG. 25A                    FIG. 25B

FIG. 25C

FIG. 25D

FIG. 25E

FIG. 26A                    FIG. 26B

FIG. 27

FIG. 28A

FIG. 28B

465

462

460

460

415

FIG. 29A

FIG. 29B

475

470

480

480

FIG. 30A

FIG. 30B

FIG. 31A

FIG. 31B

FIG. 32A

FIG. 32B

FIG. 32C

FIG. 32D

FIG. 33

FIG. 34A

FIG. 34B

FIG. 34C

FIG. 34D

FIG. 34E

575

570

560

590

590

590

560

FIG. 34F

FIG. 35

FIG. 36A

FIG. 36B

FIG. 36C

FIG. 36D

FIG. 36E

FIG. 37A

FIG. 37B

FIG. 37C

FIG. 37D

FIG. 38A

FIG. 38B

FIG. 39A

FIG. 39B

FIG. 40A

FIG. 40B

FIG. 41A

FIG. 41B

FIG. 42

FIG. 43A

FIG. 43B

FIG. 44

FIG. 45

FIG. 46

FIG. 47A

FIG. 47B

FIG. 48

FIG. 49

FIG. 50

FIG. 51A

FIG. 51B

FIG. 51C

FIG. 51D

FIG. 52

780    505    780
510
780
787
782
782
785

FIG. 53

505
790
FIG. 54B
FIG. 54A

505

790
505
FIG. 55B
FIG. 55A

505

790    505

505

795    FIG. 56A

795    FIG. 56B

FIG. 57

805

810

800

805

FIG. 58A

L(1)

830    805    825    815

W(1)

FIG. 58B

820

L(2)

805

W(2)

FIG. 58C

805

FIG. 58D

805

805

FIG. 58E

855

850

FIG. 59A

850

855

FIG. 59B

850

855

FIG. 59C

850

855

FIG. 59D

855

850

FIG. 59E

FIG. 60A

FIG. 60B

FIG. 60C

FIG. 60D

FIG. 60E

FIG. 61A

FIG. 61B

855

850

FIG. 62A

855

850

FIG. 62B

855

850

FIG. 62C

855

850

FIG. 62D

FIG. 63A  FIG. 63B  FIG. 63C  FIG. 63D

FIG. 63E  FIG. 63F  FIG. 63G

FIG. 64A

FIG. 64B

FIG. 65

FIG. 66A

FIG. 66B

FIG. 66C

FIG. 66D

FIG. 67A

FIG. 67B

FIG. 67C

FIG. 67D

FIG. 67E

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013326908 A1
- US 4393604 A
- US 20130041617 A1
- US 20100229426 A
- US 62053915
- US 6110411 A, Clausen et al.
- US 8114334 B, Martinoni et al.
- US 20120196115 A